# EUROPEAN PATENT APPLICATION

(11) **EP 4 579 387 A1**
(43) Date of publication of application: **02.07.2025**
(21) Application number: 24740321.5
(22) Date of filing: 03.07.2024
(51) Int. Cl.: G06F 1/16

(54) **HINGE STRUCTURE COMPRISING ELASTIC MEMBER, AND FOLDABLE ELECTRONIC DEVICE COMPRISING SAME**

(30) Priority: 30.10.2023 KR 20230146358; 20.12.2023 KR 20230186658
(71) Applicant: Samsung Electronics Co., Ltd, Suwon-si, Gyeonggi-do 16677 (KR)
(72) Inventor: Cho, Sunggun, Suwon-si, Gyeonggi-do 16677 (KR); Ryu, Myungchul, Suwon-si, Gyeonggi-do 16677 (KR); Park, Yeongmin, Suwon-si, Gyeonggi-do 16677 (KR); Lee, Dongik, Suwon-si, Gyeonggi-do 16677 (KR)
(74) Representative: Gulde & Partner
(86) International application number: PCT/KR2024/009410
(87) International publication number: WO 2025/095270

(57) **Abstract**

Disclosed are a hinge structure including elastic members that provide coupling of cam members and cams with different contact angles and elastic forces, and a foldable electronic device including the same.

## Description

### [Technical Field]

Various embodiments of the disclosure relate to a hinge structure including an elastic member.

### [Background Art]

Portable electronic devices, such as smartphones, may support call functions and functions of searching and providing various content based on various types of applications. The portable electronic devices may output screens corresponding to the functions in a process of providing various functions. When using the various functions described above, the user may desire to use a wider screen. In a typical portable electronic device, when the display device is to be expanded to display the screen, an overall size thereof increases, which may deteriorate portability. Accordingly, foldable electronic devices are configured such that the screen sizes thereof may be increased while portability is maintained. The foldable electronic devices may have folded and unfolded states.

### [Disclosure]

### [Technical Problem]

### [Technical Solution]

A foldable electronic device (or a portable electronic device, a portable communication device, a foldable electronic device, or a foldable electronic device with a communication function, a foldable portable electronic device) according to various embodiments of the disclosure includes a first housing and a second housing, a hinge structure coupled between the first housing and the second housing, and a flexible display accommodated in the first housing and the second housing, the hinge structure includes a first rotation member coupled to the first housing and a second rotation member coupled to the second housing, a first arm member that rotates in response to the rotation of the first rotation member and a second arm member that rotates in response to the rotation of the second rotation member, a first shaft on which a first main gear is disposed and coupled to the first arm member, a second shaft on which a second main gear is disposed and coupled to the second arm member, a third shaft disposed between the first main gear and the second main gear and on which a first gear is disposed, a fourth shaft disposed between the third shaft and the second main gear and on which a second gear is disposed, first to fourth cams coupled to each of the first to fourth shafts, a cam member coupled to each of the first to fourth shafts and including first to fourth fixed cam portion facing the first to fourth cams respectively, a first elastic member coupled to the first shaft, and that provides a first elastic force to the first cam, a second elastic member coupled to the second shaft and that provides the first elastic force to the second cam, a third elastic member coupled to the third shaft and that provides a second elastic force different from the first elastic force to the third cam, a fourth elastic member coupled to the fourth shaft and that provides the second elastic force to the fourth cam, and a magnitude of slope of the first cam is different from a magnitude of slope of the third cam, and a type of the first elastic member is different from a type of the third elastic member.

Furthermore, the disclosure suggests various embodiments.

### [ Description of Drawings]

FIG. 1 is a view illustrating an example of an external appearance of a foldable electronic device in a folded state according to an embodiment.
FIG. 2 is an exploded perspective view of a foldable electronic device according to an embodiment.
FIG. 3 is a view illustrating an example of an exploded perspective view of a hinge structure according to an embodiment, when viewed in a first direction.
FIG. 4 is a view illustrating an example of an exploded perspective view of a hinge structure according to an embodiment, when viewed in a second direction.
FIG. 5 is a view illustrating an example of a state, in which components of a hinge structure according to an embodiment are coupled to each other, in a first direction.
FIG. 6 is a view illustrating an example of a state, in which components of a hinge structure according to an embodiment are coupled to each other, in a second direction.
FIG. 7 is a view illustrating an example of one form of a cam member and cams in a hinge structure according to an embodiment.
FIG. 8 is a view illustrating a change in torque in a process of unfolding and folding a hinge structure according to an embodiment.
FIG. 9 is a view illustrating an example of another form of a cam member and cams in a hinge structure according to an embodiment.
FIG. 10 is a view illustrating a change in torque in a process of unfolding and folding a hinge structure illustrated in FIG. 9.
FIG. 11 is a view illustrating an example of a hinge structure, in which positions of a cam member and cams in a hinge structure according to an embodiment are changed.
FIG. 12 is a view illustrating an example of a hinge structure, in which positions of cams in a hinge structure according to an embodiment are changed.
FIG. 13 is a view illustrating an example of a cam pattern according to an embodiment.
Fig.14 is a block diagram of an electronic device in a network enwironment, according to various embodiments.

### [Mode for Invention]

Hereinafter, various embodiments of the disclosure will be described with reference to the accompanying drawings.

Hereinafter, various embodiments of the disclosure suggest a hinge structure and a foldable electronic device including the same, by which a frictional force (or a torque) that is required for a hinge operation of a foldable electronic device of a specific size or more may be provided by applying different types of elastic members, and additionally or alternatively, an unfolding operation or a folding operation, or a flex operation (an operation of supporting the foldable electronic device such that it is temporarily fixed at a specific holding angle (e.g., an angle that is greater than 0 degrees and less than 180 degrees)) of the foldable electronic device may be firmly supported.

According to various embodiments of the disclosure, the hinge structure and the foldable electronic device may provide sufficient hinge performance even for larger electronic devices with increased weight and size. For example, the hinge structures and foldable electronic devices of the disclosure may provide sufficient torque and consistent detent forces while opening and closing of the electronic device, and thereby providing improved device housing control function.

Other intended purposes according to embodiments of the disclosure will be mentioned as necessary in a process of describing the embodiments.

In addition, various purposes and effects that are provided by the foldable electronic device including a hinge structure according to various embodiments may be mentioned according to the embodiments of the detailed description.

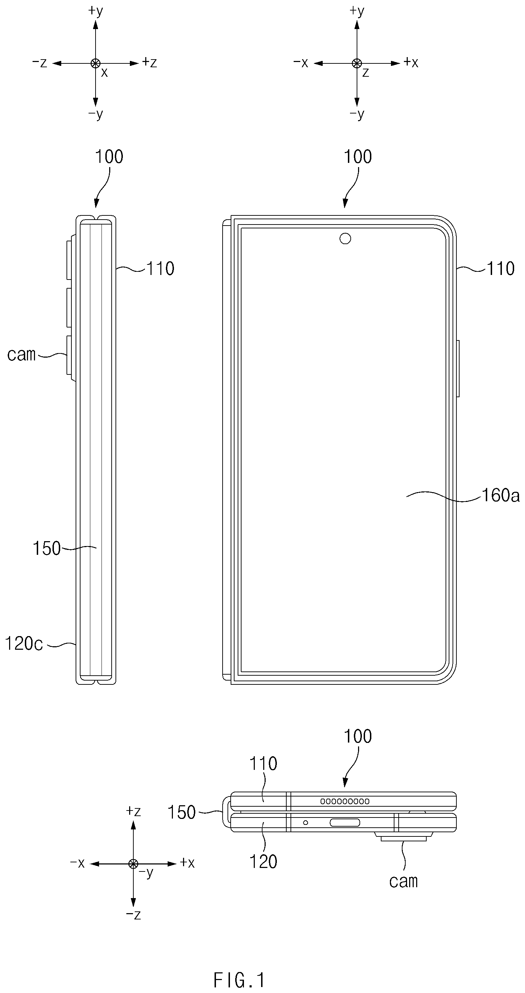

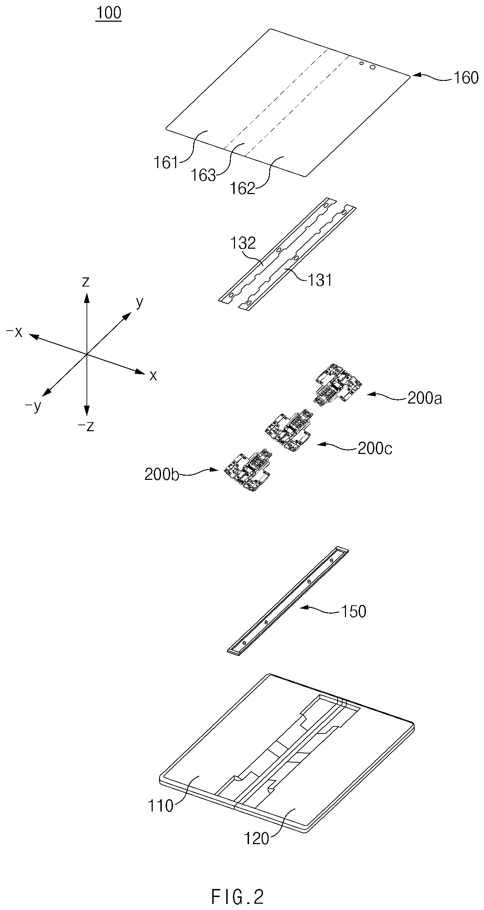

FIG. 1 is a view illustrating an example of an external appearance of a foldable electronic device in a folded state according to an embodiment. FIG. 2 is an exploded perspective view of the foldable electronic device according to an embodiment.

Referring to FIGS. 1 and 2, a foldable electronic device 100 (or an electronic device, a portable electronic device, a portable communication device, a foldable electronic device, a portable device, or a foldable portable electronic device) according to an embodiment includes a first housing 110, a second housing 120, a hinge housing 150, wing plates 131 and 132 (or plates (optional)), a display 160 (or a flexible display), and at least one hinge structure 200a, 200b, and 200c (or a hinge structure, a hinge assembly, a gear assembly). In the foldable electronic device 100, the wing plates 131 and 132 may be removed or attached to or integrally formed with another structure (e.g., the display 160). Additionally or alternatively, the foldable electronic device 100 may further include an auxiliary display 160a and a camera, and additionally, may further include structures, such as a speaker hole and a connector hole, which are disposed on one side of a housing and are related to user functions of the foldable electronic device 100.

According to an embodiment, when at least a portion of a folded area of the display 160 forms a water drop shape (or a water drop shape or dumbbell shape that is convex toward a rear side) when viewed from a front side to a rear side of the display 160 (e.g., when viewed in the -z-axis direction from the z axis), when the foldable electronic device 100 is in a folded state whereby a folding R (a curvature) that prevents cracks or buckling from occurring in the folded area of the display 160 may be secured. Furthermore, in the foldable electronic device 100, a disposition gap between housings 110 and 120 may be maintained at a standard value or less or be maintained in an 11-shaped shape when the foldable electronic device 100 is in a folded state by disposing the folded area of the dumbbell-shaped display 160 in a specific space between the housings 110 and 120. According to the foldable electronic device 100 of the above-described structure, at least one support structure may be provided at at least a portion of the housings 110 and 120 and the hinge housing 150 whereby damage to an internal structure of the foldable electronic device 100 may be prevented or alleviated by preventing the hinge housing 150 from being moved to an inside of the housings 110 and 120 while an external impact is applied to the foldable electronic device 100.

According to an embodiment, the first housing 110 is connected to the second housing 120 by using at least one hinge structure 200a, 200b, and 200c. The first housing 110 may include a first bottom area 110_bot, in which the display 160 is seated, side walls (e.g., 110a, 110b, and 110c) that are disposed at a periphery of the first bottom area 110_bot and surrounds a periphery of the display 160 or a periphery of the area, in which the display 160 is seated, or a separately provided frame. As an example, the first housing 110 may include a first side wall 110a that is disposed in a direction that is perpendicular to a lengthwise direction of a first side part 110d at opposite peripheries of the first side part 110d, which face the second housing 120, a second side wall 110b that extends from one end of the first side wall 110a and is disposed in parallel to the first side part 110d, and a third side wall 110c that is disposed parallel to the first side wall 110a at one end of the second side wall 110b. The first to third side walls 110a, 110b, and 110c may be formed to protrude upward (e.g., in the z-axis direction) from a bottom surface of a first bottom area 110_bot by a predesigned height. At least a portion of the first side part 110d may have an engraved shape while having a specific curvature downward (e.g., the -z-axis direction) from the bottom surface of the first bottom area 110_bot such that at least a portion of the hinge housing 150 may be disposed. Additionally, a rear cover may be disposed on a rear surface of the first housing 110. Here, the rear cover may be omitted. At least a portion of the first housing 110 may be adhered to a first area 161 of the display 160. Alternatively, a portion of a periphery of a front surface of the first housing 110 may be adhered to at least a portion of a periphery of the first area 161 of the display 160. In this regard, an adhesive layer may be disposed between the front surface of the first housing 110 and the first area 161 of the display 160.

According to an embodiment, at least a portion of an inside of the first housing 110 may be provided in a hollow form (or an empty form). At least one of at least one circuit board, at least one battery, and at least a portion of at least one camera module may be disposed in an interior of the first housing 110. The circuit board and the battery disposed in the first housing 110 may be electrically connected to at least one circuit board and at least one battery that are disposed in an interior of the second housing 120, through a flexible board (not illustrated). For example, the flexible board (not illustrated) may extend from a partial area of the first housing 110 to a partial area of the second housing 120 across the hinge housing 150. a partial area of the flexible board (not illustrated) may be located in an interior of the hinge housing 150. For example, a processor and a memory may be disposed in the circuit board disposed in the first housing 110.

According to an embodiment, at least a portion of the first housing 110 may be formed of a metallic material, or at least a portion thereof may be formed of a nonmetallic material. The first housing 110 may be formed of a material with a specific level of strength to support at least a portion of the display 160. In an embodiment, when the foldable electronic device 100 is in the unfolded state, at least a portion of the first side part 110d of the first housing 110, which faces the second housing 120, may include a recessed part, at least a portion of which is recessed such that the hinge housing 150 may be disposed therein.

According to an embodiment, the first housing 110 is connected to at least one hinge structure 200a, 200b, and 200c, and may be rotated clockwise or counterclockwise to be moved from an arbitrary point between the -x axis and the x axis to an arbitrary point between the z axis and the -z axis by an external pressure that is applied from an outside. In the folded state of the foldable electronic device 100, the first housing 110 may be disposed in parallel to the z-axis or in parallel to the second housing 120. While the first housing 110 is disposed in parallel to the second housing 120 (or in the folded state of the foldable electronic device 100), at least a portion of the three side walls (or edges or periphery) of the first housing 110 (e.g., a portion of a periphery that is adjacent to the second housing 120 in the unfolded state of the foldable electronic device) may contact, face, or be adjacent to the three side walls of the second housing 120 (or the remaining edges excluding the second side part that is adjacent to the first side part of the first housing 110 in the unfolded state of the foldable electronic device 100).

According to an embodiment, the second housing 120 is connected (or fastened, coupled) to the first housing 110 through at least one hinge structure 200a, 200b, and 200c. The second housing 120 may include a front surface, on which at least a portion (e.g., a second area 162) of the display 160 is seated, and a frame that surrounding at least a portion of the front surface or an edge of the second area 162 of the display 160. At least a portion of the second housing 120 may be adhered to the second area 162 of the display 160. Alternatively, a portion of a periphery of a front surface of the second housing 120 may be adhered to a periphery of the second area 162 of the display 160. In this regard, an adhesive layer may be disposed between the front surface of the second housing 120 and the second area 162 of the display 160.

According to an embodiment, similar to the first housing 110, the second housing 120 may have a hollow at at least a portion of an inside thereof. At least one circuit board and at least one battery may be disposed in an interior of the second housing 120. Alternatively, at least one battery may be disposed in any one of the first housing 110 and the second housing 120, or in both of them. At least one of the printed circuit board or the battery disposed in the second housing 120 may be electrically connected to a component (e.g., at least one of the printed circuit board or the battery) disposed in the first housing 110, through a flexible board.

According to one embodiment, similar to the first housing 110, at least a portion of the second housing 120 may be formed of a metallic material, or at least a portion thereof may be formed of a nonmetallic material. The second housing 120 may be formed of a material with a specific level of strength to support at least a portion of the display 160. The side wall structure of the second housing 120 may be formed to correspond to the side wall structure of the first housing 110. In an embodiment, in the unfolded state of the foldable electronic device 100, the second housing 120 may include a second side part (or a part that is adjacent to the first housing 110) that faces the first housing 110, and fourth to sixth side walls that surround the second side part. The second side part may include a recessed part (e.g., a recess part), at least a portion of which recessed such that the hinge housing 150 may be disposed therein. The recessed part of the second housing 120 may be disposed adjacent to the recessed part of the first housing 110. A rear cover may be disposed on a rear surface of the second housing 120. Here, the rear cover may be omitted.

According to an embodiment, at least a portion of the display 160 may have flexibility. For example, the display 160 may include a first area 161, at least a portion of which is disposed on the first housing 110, a second area 162, at least a portion of which is disposed on the second housing 120, and a third area 163 (or a folded area or a folding area), at least a portion of which is disposed between the first area 161 and the second area 162. As an example, in the folded or unfolded state of the foldable electronic device 100, at least a portion of the first area 161 and the second area 162 may be disposed in a flat state, and at least a portion of the third area 163 may be curved in the folded state of the foldable electronic device 100. For example, the first area 161 and the second area 162 may be maintained in a planar state regardless of a state of the foldable electronic device 100 (a disposition position of the plane is changed), and the third area 163 may be deformed into a curved state or a flat state in correspondence to the state of the foldable electronic device 100. For example, the third area 163 may be in a planar state (or a flat state) in the unfolded state of the foldable electronic device 100, and at least a portion thereof may be in a curved state (or a deflected state) in the folded state of the foldable electronic device 100.

According to an embodiment, the display 160 may include at least some of various layers. For example, the display 160 may include at least some of an external protective layer (or a glass layer, or a polymer layer) with a specific level of transparency and a specific size, a display panel layer that is disposed under the external protective layer to display a screen, and at least one first rear layer that is disposed under the display panel layer, regardless of an order thereof. The first rear layer (or a rear panel, or a rear part) may include at least one (or a layer excluding at least one of the above-described layers) of an impact absorbing layer (or an embossed layer), a heat dissipating layer (or a metal sheet layer, a metal layer, or a conductive sheet). Additionally or alternatively, the first rear layer may further include an electromagnetic induction panel (e.g., a digitizer). The display 160 may further include a second rear layer that is disposed under the first rear layer. The second rear layer (or a rear panel, or a rear part) may include at least one metal layer (or a metal sheet), at least a portion of which is formed of a metallic material. It may include a specific pattern (e.g., a lattice pattern, or a slit pattern) such that at least a portion of the second rear layer may be bent. Alternatively, at least a portion of the second rear layer may be formed of another bendable material (e.g., a polymer material, a rubber, or a leather material). At least one of the first rear layer and the second rear layer may be omitted.

At least some of at least one hinge structure 200a, 200b, and 200c may be disposed in the hinge housing 150, and at least some of the plurality of hinge structures 200a, 200b, and 200c may have structures and shapes that are similar to each other. Alternatively, at least some of the plurality of hinge structures 200a, 200b, and 200c may have different structures and shapes from those of the remaining hinge structures. Alternatively, all three hinge structures 200a, 200b, and 200c may have the same or similar structure, and may be disposed in different directions. Meanwhile, it is illustrated in the drawing that three hinge structures 200a, 200b, and 200c are disposed, and two hinge structures or four or more hinge structures may be disposed in the foldable electronic device 100.

The wing plates 131 and 132 are positioned on at least one hinge structure 200a, 200b, and 200c or coupled to at least one hinge structure 200a, 200b, and 200c to cover a surface of at least one hinge structure 200a, 200b, and 200c in the z-axis direction when the foldable electronic device 100 is in the unfolded state. The wing plates 131 and 132 may be provided separately from the housings 110 and 120. Accordingly, gaps may be formed between the wing plates 131 and 132 and the housings 110 and 120. The wing plates 131 and 132 may be disposed to correspond to at least a portion of a lower surface (e.g., a surface in the -z-axis direction) of a third area 163 of the display 160. The wing plates 131 and 132 are rotated clockwise or counterclockwise depending on a hinge operation of at least one hinge structure 200a, 200b, and 200c. For example, while a first wing plate 131 is rotated counterclockwise, a second wing plate 132 may be rotated clockwise, and while the first wing plate 131 is rotated clockwise, the second wing plate 132 may be rotated counterclockwise. The first wing plate 131 may support the flat first surface of the third area 163 of the display 160, which is folded into a dumbbell shape, and the second wing plate 132 may support the flat second surface (a surface that is symmetrical to the first surface with respect to the z axis) of the third area 163 of the display 160, which is folded into a dumbbell shape.

**In** the foldable electronic device 100 described above, at least one of the plurality of hinge structures 200a, 200b, and 200c may include different types of elastic members to provide a torque (or a frictional force) that is required during a folding or unfolding operation of the foldable electronic device 100. Additionally or alternatively, the cam structures (e.g., the cam members and the cams) of at least one of the plurality of hinge structures 200a, 200b, and 200c may be disposed in different forms to support a stable and robust change in the operation or a support operation while supporting at least one of an operation of the foldable electronic device 100 from the folded state to the unfolded state, an operation from the unfolded state to the folded state, and the flex operation.

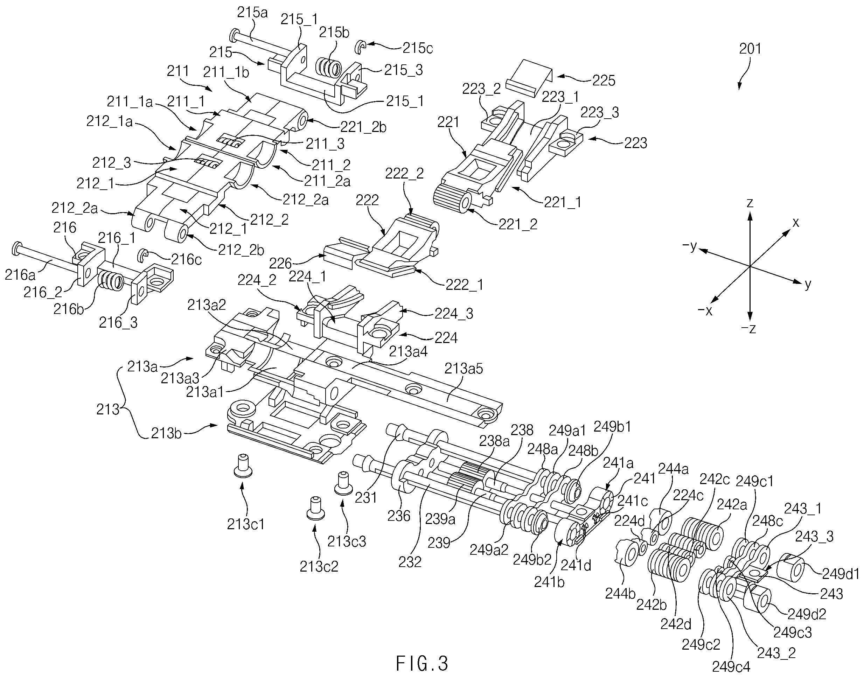

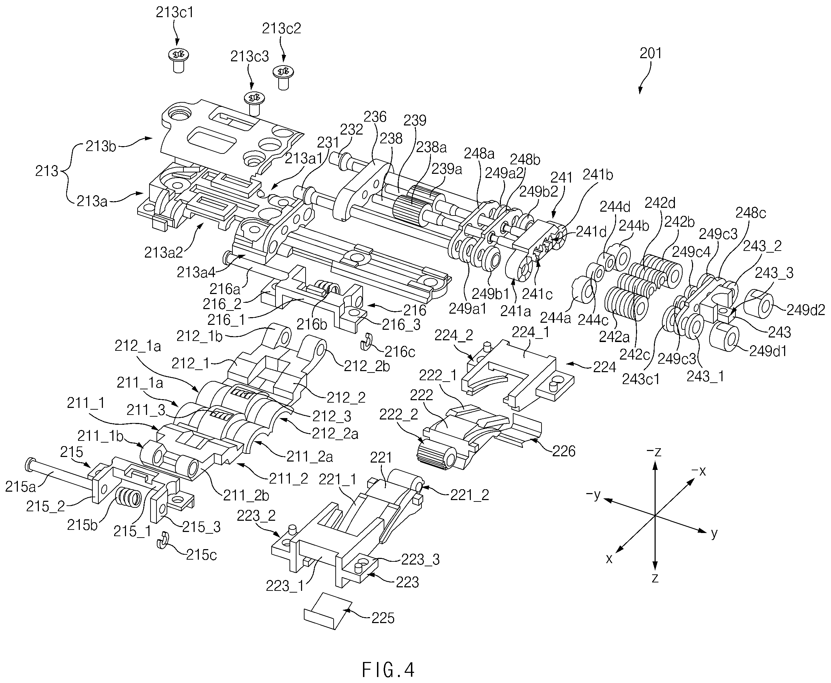

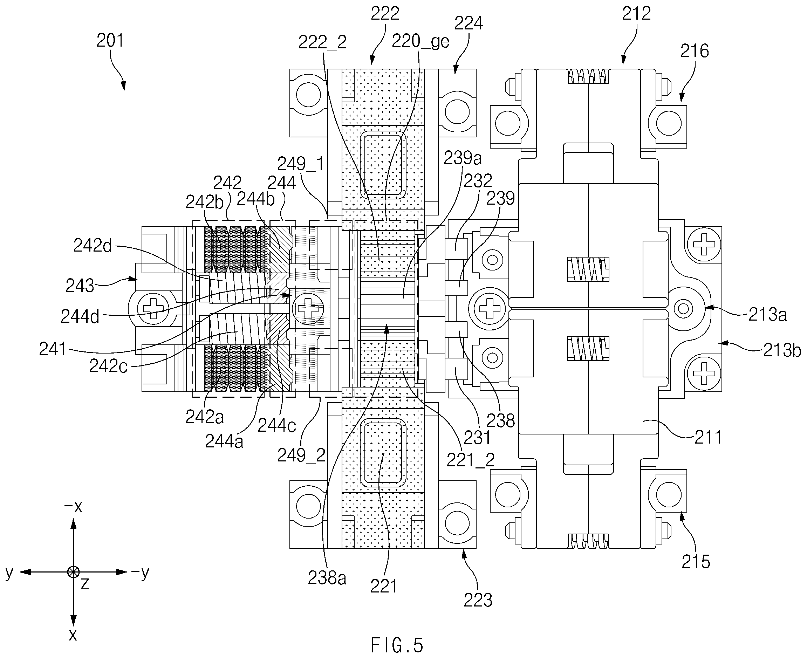

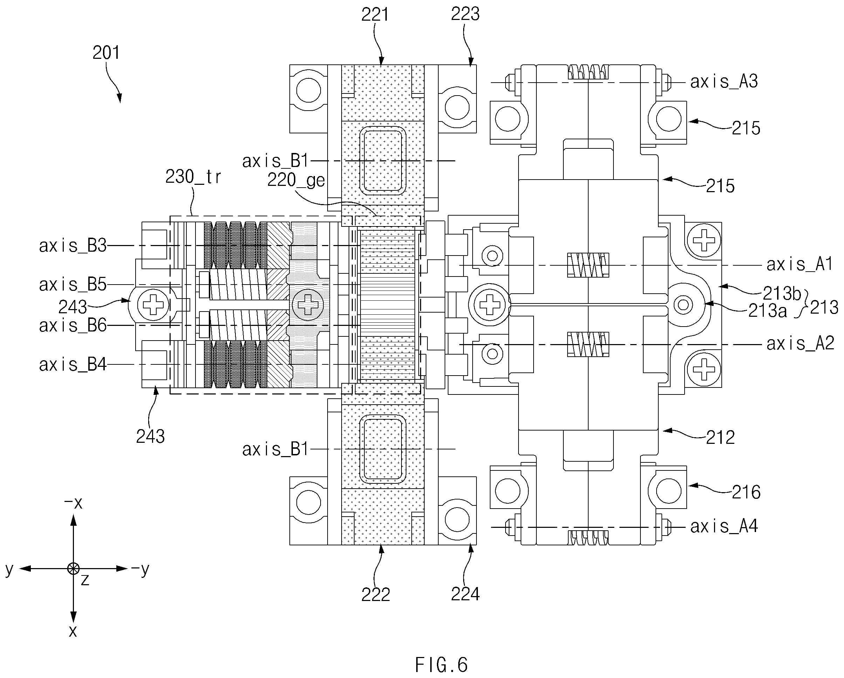

FIG. 3 is a view illustrating an example of an exploded perspective view of a hinge structure according to an embodiment, when viewed in a first direction. FIG. 4 is a view illustrating an example of an exploded perspective view of the hinge structure according to an embodiment, when viewed in a second direction. FIG. 5 is a view illustrating an example of a state, in which components of the hinge structure according to an embodiment are coupled to each other, in the first direction. FIG. 6 is a view illustrating an example of a state, in which the components of the hinge structure according to an embodiment are coupled to each other, in the second direction.

The hinge structure 201 illustrated in FIGS. 3 to 6 may correspond to at least one of the plurality of hinge structures 200a, 200b, and 200c described above in FIG. 2. Alternatively, at least some of the dispositions of elastic members of the hinge structure 201 and the cam shapes, which will be described below, may be applied to at least one of the plurality of hinge structures 200a, 200b, and 200c.

Referring to Figures 1 to 4, the hinge structure 201 (or a gear assembly) may include a fixing bracket 213 (or a support bracket, or a support member), a first rotation member 211 (or a first rotation bracket), a second rotation member 212 (or a second rotation bracket), a first arm member 221 (or a first arm, or a second arm structure), a second arm member 222 (or a second arm, or a second arm structure), a first link member 215, a second link member 216, a third link member 223, or a fourth link member 224.

According to an embodiment, referring to FIG. 5, the hinge structure 201 may be classified into configurations including a torque structure 230_tr that provides a frictional force during the unfolding or folding operation in a process of rotating the hinge structure 201 (e.g., an elastic force providing structure 242, a cam coupling structure 244, a first surface-pressure structure 249_1, and a second surface-pressure structure 249_2), and a gear interlocking structure 220_ge. As an example, the elastic force providing structure 242 may include a first cam elastic member 242a (or a first elastic member, or a first elastic body) and a second cam elastic member 242b (or a second elastic member, or a second elastic body) of a first type, and a third cam elastic member 242c (or a third elastic member, or a third elastic body) and a fourth cam elastic member 242d (or a fourth elastic member, or fourth elastic body) of a second type that is different from the first type. The cam coupling structure 244 (or a cam structure) may include a cam member 241, in which a plurality of fixed cam portions 241a, 241b, 241c, and 241d are disposed, and a plurality of cams 244a, 244b, 244c, 244d that are cam-coupled to fixed cam portions 241a of the cam members 241, 241b, 241c, and 241d. The first surface-pressure structure 249_1 may include a first friction member 249a1 and a third friction member 249b1 that are disposed between one side of a first support member 248a and one side of a second support member 248b, and the support members 248a and 248b. The second surface-pressure structure 249_2 may include a second friction member 249a2 and a fourth friction member 249b2 that are disposed between an opposite side of the first support member 248a and an opposite side of the second support member 248b, and the support members 248a and 248b.

Furthermore, referring to FIG. 6, the hinge structure 201 performs a hinge operation around various axes. For example, the hinge structure 201 may include a first axis axis_A1 that is a rotation center of the first rotation member 211 inserted into the fixing bracket 213, a second axis axis_A2 that is a rotation center of the first rotation member 211 inserted into the fixing bracket 213, a third axis axis_B3 that is a rotation center of the first shaft 231 coupled to the first arm member 221, a fourth axis axis_B4 that is a rotation center of the second shaft 232 coupled to the second arm member 222, a fifth axis axis_A3 that is a rotation center of a peripheral portion of the first rotation member 211 coupled to the first link member 215, a sixth axis axis_A4 that is a rotation center of a peripheral portion of the second rotation member 212 coupled to the second link member 216, a seventh axis axis_B1 that is a rotation center of the first arm member 221 coupled to the third link member 223, an eighth axis axis_B2 that is a rotation center of the second arm member 222 coupled to the fourth link member 224, a ninth axis axis_B5 corresponding to a rotation center of a first gear shaft 238, on which the first gear 238a (or a first interlocking gear, orb a first idle gear) is disposed, and a tenth axis axis_B6 corresponding to a rotation center of a second gear shaft 239, on which the second gear 239a (or a second interlocking gear, or the second idle gear) is disposed.

Meanwhile, at least some of the components (e.g., at least some of the first to fourth link members 215, 216, 223, and 224) of the hinge structure 201 described above may be omitted. For example, while the first rotation member 211 and the second rotation member 212 are directly coupled to the housings 110 and 120 (FIG. 2), and the arm members 221 and 222 are connected to the rotation members 211 and 212, they may be rotated in response to the rotations of the rotation members 211 and 212. According to an embodiment, at least some of the first to fourth link members 215, 216, 223, and 224 may be integrally formed. For example, the first link member 215 and the third link member 223 may be integrally formed, and the second link member 216 and the fourth link member 224 may be integrally formed. Alternatively, at least some of the first to fourth link members 215, 216, 223, and 224 may be integrally formed with the housing.

The hinge structure 201 according to an embodiment of the disclosure includes a first main gear 221_2 (or a first gear, or a first shaft gear) that is formed (or disposed) in the first arm member 221, a second main gear 222_2 (or a second gear, or a second shaft gear) that is formed (or disposed) in the second arm member 222, and at least one interlocking gears 238a and 239a (or idle gears, or auxiliary gears (optional)) that are disposed between the first main gear 221_2 and the second main gear 222_2. The at least one interlocking gear 238a and 239a may be disposed on the gear shafts 238 and 239 (or shafts), respectively. For example, the first gear 238a may be disposed (or formed) on the first gear shaft 238 (or a first gear shaft, a first interlocking shaft, a first gear shaft, a first auxiliary shaft, or a third shaft). The second gear 239a may be disposed (or formed) on the second gear shaft 239 (or a second gear shaft, a second gear shaft, a second auxiliary shaft, or a fourth shaft). In embodiments of the disclosure, the gear shaft may refer to a bar-shaped portion, on which the gear body including gear teeth is disposed. Furthermore, the shaft may refer to a shaped portion that protrudes from the gear body portion along a rotation axis of the gear.

Hereinafter, the components of the hinge structure 201 will be described with reference to FIGS. 1 to 6. The hinge structure 201 according to an embodiment may include a first main gear 221_2 and a second main gear 222_2, a gear bracket 236 (or a stopper, an arm support structure, a shaft support structure, a gear frame, a gear support member, or a support member) that is used to fix at least one interlocking gear 238a and 239a and prevents the first arm member 221 and the second arm member 222 from being rotated by a specific angle or more, a shaft fixing part 243 that is used to fix the first shaft 231 and the second shaft 232, a cam member 241, in which a plurality of fixed cam portions 241a, 241b, 241c, and 241d are disposed, a plurality of cams 244a, 244b, 244c, and 244d that are cam-coupled to the fixed cam portions 241a, 241b, 241c, and 241d of the cam member 241, a first cam elastic member 242a (or a first elastic member, a first elastic body, a first cam elastic body), a second cam elastic member 242b (or a second elastic member, a second elastic body, a second cam elastic body), a third cam elastic member 242c (or a third elastic member, a third elastic body, a third cam elastic body), a fourth cam elastic member 242d (or a fourth elastic member, a fourth elastic body, a fourth cam elastic body), which provide an elastic force to the plurality of cams 244a, 244b, 244c, and 244d, respectively, a plurality of friction members 249a1, 249a2, 249b1, 249b2, 249c1, 249c2, 249c3, and 249c4, support members 248a, 248b, and 248c, at least surfaces of which face the plurality of friction members 249a1, 249a2, 249b1, 249b2, 249c1, 249c2, 249c3, and 249c4, and which support the plurality of friction members 249a1, 249a2, 249b1, 249b2, 249c1, 249c2, 249c3, and 249c4, and fixing nuts 249d1 and 249d2 (or fixing members, or fixing bodies). According to an embodiment, the gear bracket 236 may include a fixing structure that fixes at least one of the first shaft 231, the second shaft 232, the first gear shaft 238, and the second gear shaft 239.

According to an embodiment, the fixing bracket 213, for example, may include an upper fixing bracket 213a and a lower fixing bracket 213b. The upper fixing bracket 213a and the lower fixing bracket 213b may be coupled to each other by coupling members 213c1, 213c2, and 213c3 (e.g., coupling screws). The upper fixing bracket 213a and the lower fixing bracket 213b may be formed of the same material (e.g., a metal).

At least a portion of the upper surface (e.g., a surface in the z-axis direction) of the upper fixing bracket 213a may be provided in a flat shape. According to an embodiment, at least a portion of a cross-section of the upper fixing bracket 213a from the upper surface (e.g., a surface in the z-axis direction) toward the lower surface (e.g., a surface in the -z-axis direction) may include an arc shape (or a curved surface). The upper fixing bracket 213a may include a fixing bracket upper end 213a3, a fixing bracket lower end 213a4, a first rail 213a1 (or a first rail structure that is inserted into a protruding rail), a second rail 213a2 (or a second rail structure that is inserted into a protruding rail), and a fixing bracket extension part 213a5.

At least a portion of an upper surface of the fixing bracket upper end 213a3 may be formed flat, and it may include at least one hole or recess that may be fastened to the lower fixing bracket 213b. The fixing bracket upper end 213a3 may define side walls of the first rail 213a1 and the second rail 213a2. As an example, portions of the rails coupled to the rail structures of the first rotation member 211 and the second rotation member 212 may be disposed in one side wall (e.g., one side wall that faces the y-axis direction) of the fixing bracket upper end 213a3, respectively. At least a portion of the fixing bracket upper end 213a3 may be formed to cover at least a portion of the upper portions of the first rail 213a1 and the second rail 213a2. At least a portion of the fixing bracket upper end 213a3 may prevent the first rotation member 211 and the second rotation member 212 coupled to the first rail 213a1 and the second rail 213a2 from deviating from the first rail 213a1 and the second rail 213a2.

The fixing bracket lower end 213a4 may be disposed in a position that is spaced apart from the fixing bracket upper end 213a3 by a specific distance (e.g., a width (e.g., a y-axis length) of the first rotation member 211 or the second rotation member 212), and may be connected to the fixing bracket upper end 213a3 through the first rail 213a1 and the second rail 213a2. An upper surface (e.g., a surface that faces the z axis) of the fixing bracket lower end 213a4 may be formed flat. One side wall (e.g., a side wall that faces the -y axis) of the fixing bracket lower end 213a4 may be disposed to face the fixing bracket upper end 213a3, and may support sides of the first rotation member 211 and the second rotation member 212, which are inserted into the first rail 213a1 and the second rail 213a2. Portions of the rails 213a1 and 213a2 that are coupled to the rail structures of the first rotation member 211 and the second rotation member 212 may be disposed in one side wall of the fixing bracket lower end 213a4. Grooves (or holes), into which shafts (e.g., the first shaft 231, the second shaft 232, the first gear shaft 238, and the second gear shaft 239) may be inserted, may be formed in an opposite side wall (e.g., a side wall that faces the y-axis direction) of the fixing bracket lower end 213a4.

The fixing bracket extension part 213a5 may be disposed to protrude to one end (e.g., from a periphery of the fixing bracket lower end 213a4 in the y-axis direction, in the y-axis direction) of the fixing bracket lower end 213a4. A thickness of the fixing bracket extension part 213a5 may be formed to be smaller than a thickness of the fixing bracket lower end 213a4, and a length thereof in the x-axis direction may be smaller than a length thereof in the y-axis direction. The fixing bracket extension part 213a5 may be disposed to cover at least some of the shafts 231, 232, 238, and 239, at least some of the first main gear 221_2, the second main gear 222_2, the first gear 238a, and the second gear 239a, and at least some of the support members 218a, 218b, and 218c and the plurality of friction members 249a1, 249a2, 249b1, 249b2, 249c1, 249c2, 249c3, and 249c4, the cam member 241, the cams 244a, 244b, 244c, and 244d, the cam elastic members 242a, 242b, 242c, and 242d, and the shaft fixing part 243. The fixing bracket extension part 213a5 may prevent the above-described components (e.g., at least some of the shafts 231, 232, 238, and 239, at least some of the first main gear 221_2, the second main gear 222_2, the first gear 238a, and the second gear 239a, and at least some of the support members 218a, 218b, and 218c and the plurality of friction members 249a1, 249a2, 249b1, 249b2, 249c1, 249c2, 249c3, and 249c4, the cam member 241, the cams 244a, 244b, 244c, and 244d, and the cam elastic members 242a, 242b, 242c, and 242d) from deviating. The fixing bracket extension part 213a5 may include at least one coupling hole that may be coupled to at least one of the cam member 241 and the shaft fixing part 243.

The first rail 213a1 and the second rail 213a2 may be disposed between the fixing bracket upper end 213a3 and the fixing bracket lower end 213a4. According to an embodiment, a portion of the first rail 213a1 may be disposed on a side wall of the fixing bracket upper end 213a3, and another portion of the first rail 213a1 is disposed on a side wall of the fixing bracket lower end 213a4. A bottom surface of the first rail 213a1 may include a curved surface similar to a partial shape of a surface of the first rotation member 211, which faces the -z-axis direction. A portion of the second rail 213a2 may be disposed on a side wall of the fixing bracket upper end 213a3, and another portion of the second rail 213a2 may be disposed on the side wall of the fixing bracket lower end 213a4. A bottom surface of the second rail 213a2 may include a curved surface similar to a partial shape of the surface of the first rotation member 211, which faces the -z-axis direction. At least a portion of the second rail 213a2 may be connected to the first rail 213a1. Referring to FIG. 6, the first rail 213a1 may support the mounted first rotation member 211 such that the first rotation member 211 is rotated along the first axis axis_A1 (or a virtual first axis that is a center of the sliding operation along the rail). The second rail 213a2 may support the mounted second rotation member 212 such that the second rotation member 212 is rotated along the second axis axis_A2 (or a virtual second axis that is a center of the sliding operation along the rail). According to an embodiment, the first axis axis_A1 and the second axis axis_A2 may be formed to be spaced apart from each other by a specific interval. The first axis axis_A1 and the second axis axis_A2 may be formed on an upper side (air) of an upper surface (e.g., a surface in the z-axis direction) of the fixing bracket 213. Alternatively, the first axis axis_A1 and the second axis axis_A2 may be formed between an upper surface of the display 160 (FIG. 2) and a lower surface (e.g., a surface in the -z-axis direction) of the fixing bracket body 213a. As an example, the first axis axis_A1 and the second axis axis_A2 may be formed in the air above the upper surface (e.g., a surface in the - z-axis direction) of the fixing bracket body 213a. According to an embodiment, an interval between the first axis axis_A1 and the second axis axis_A2 may be formed to be different from an interval between a third axis axis_B3 (or an axis that passes through a center of the first shaft 231) that is defined by the first shaft 231, and a fourth axis axis_B4 (or an axis that passes through a center of the second shaft 232) that is defined by the second shaft 232. As an example, an interval between the first axis axis_A1 and the second axis axis_A2 may be smaller than an interval between the third axis axis_B3 and the fourth axis axis_B4. According to an embodiment, the first axis axis_A1 and the second axis axis_A2 may be formed on an upper side of the third axis axis_B3 and the fourth axis axis_B4 with respect to the z axis. Alternatively, the first axis axis_A1 and the second axis axis_A2 may be formed closer to an upper surface of the display 160 (FIG. 2) than the third axis axis_B3 and fourth axis axis_B4 with respect to the z axis.

At least a portion of a shape of a lower surface (e.g., a surface in the -z-axis direction) of the lower fixing bracket 213b may include a curved surface. At least a portion of a shape of an upper surface (e.g., a surface that faces the z-axis direction) of the lower fixing bracket 213b may be provided in a concave shape (or a shape that is convex in the -z-axis direction). For example, at least a portion of the lower surface of the lower fixing bracket 213b may be formed to correspond to an inner shape of the hinge housing 150 (FIG. 2). The lower fixing bracket 213b may be fastened to the upper fixing bracket 213a through the coupling members 213c1, 213c2, and 213c3. The lower fixing bracket 213b may serve to support sides of the first rotation member 211 and the second rotation member 212, which are coupled to the upper fixing bracket 213a. At least one recess or hole that is used to be coupled to, fastened to, or aligned with the upper fixing bracket 213a may be formed at at least a portion of the lower fixing bracket 213b, and the upper fixing bracket 213a may include at least one groove that is formed in the lower fixing bracket 213b or at least one protruding structure that is inserted into the recess. As an example, a length of the lower fixing bracket 213b in the y-axis direction may be similar to lengths to, among the components of the upper fixing bracket 213a, the fixing bracket upper end 213a3, the first rail 213a1, the second rail 213a2, and the fixing bracket lower end 213a4.

According to an embodiment, the first rotation member 211 may be fastened to one side (e.g., the first rail 213a1) of the fixing bracket 213 to perform a hinge operation. **In** this regard, the first rotation member 211 may include a first upper rotation body 211_1, a first lower rotation body 211_2, a first rotation elastic body 211_3 (or an elastic body or an elastic member of the first rotation member 211).

A first upper rail structure 211_1a may be formed on one side (e.g., a -x-axis periphery) of the first upper rotation body 211_1, and a first upper link connection part 211_1b may be formed on an opposite side (e.g., an x-axis periphery) thereof. A first lower rail structure 211_2a may be formed on one side (e.g., a -x-axis periphery) of the first lower rotation body 211_2, and a first lower link connection part 211_2b may be formed on an opposite side (e.g., an x-axis periphery) thereof. The first rotation elastic body 211_3 may be disposed between the first upper rotation body 211_1 and the first lower rotation body 211_2, and may exert an elastic force to push the first upper rotation body 211_1 and the first lower rotation body 211_2 in the -y-axis or y-axis direction, respectively. With this structure, the first upper rotation body 211_1 and the first lower rotation body 211_2 may be more firmly coupled to the first rail 213a1 of the upper fixing bracket 213a, and may not easily deviate from the first rail 213a1.

The first upper rail structure 211_1a and the first lower rail structure 211_2a may be disposed in symmetrical positions with the first rotation elastic body 211_3 being interposed therebetween. A side part of the first upper rail structure 21 1_1a, for example, may be coupled to one side (e.g., a portion of the first rail 213a1 disposed in the fixing bracket upper end 213a3) of the first rail 213a1, and a side part of the first lower rail structure 211_2a, for example, may be coupled to an opposite side (e.g., another portion of the first rail 213a1 disposed in the fixing bracket lower end 213a4) of the first rail 213a1. Bottom surfaces of the first upper rail structure 211_1a and the first lower rail structure 211_2a may be disposed to face a bottom surface of the first rail 213a1.

The first upper link connection part 211_1b includes a hole that passes from the -y axis in the y-axis direction, and the second upper link connection part 212_1b may include a hole that passes from the -y axis in the y-axis direction and is aligned to be connected to the hole formed in the first upper link connection part 211_1b in the y-axis direction. The first upper link connection part 211_1b and the first lower link connection part 211_2b may be seated on or fastened to the first link member 215. **In** this process, the holes formed in each of the first upper link connection part 21 1_1b and the second upper link connection part 212_1b, respectively, may be used to couple the first rotation member 211 to the first link member 215.

According to an embodiment, the first rotation member 211 may experience friction with the fixing bracket 213 and the first link member 215 while the hinge operation is repeated, and may be formed of a material (e.g., a metallic material) with a specific strength or higher that may withstand it. A portion of, among the wing plates 131 and 132 (FIG. 2), the first wing plate 131 (FIG. 2) may be fixed to the first rotation member 211. As an example, when the hinge structure 201 is the first hinge structure 200a (FIG. 2), the first rotation member 211 may be coupled to the first wing plate 131 (FIG. 2), and when the hinge structure 201 is the second hinge structure 200b (FIG. 2), the first rotation member 211 may be coupled to the second wing plate 132 (FIG. 2). **In** this regard, the first rotation member 211 may include at least one hole or recess that is used to be coupled to the first wing plate 131 (FIG. 2).

According to an embodiment, the second rotation member 212 may be fastened to an opposite side (e.g., the second rail 213a2) of the fixing bracket 213 to perform a hinge operation. In this regard, the second rotation member 212 may include a second upper rotation body 212_1, a second lower rotation body 212_2, and a second rotation elastic body 212_3 (or an elastic body or an elastic member of the second rotation member 212). According to one embodiment, at least a portion of the upper surface of the second rotation member 212 may be formed to be flat. A recess may be formed on one side (e.g., a side part that faces the y-axis direction) of the second upper rotation body 212_1 and one side (e.g., a side part that faces the-y-axis direction) of the second lower rotation body 212_2 such that a portion of the second rotation elastic body 212_3 may be inserted thereinto whereby the second rotation elastic body 212_3 may be located between the second upper rotation body 212_1 and the second lower rotation body 212_2. Alternatively, recesses, into which the second rotation elastic body 212_3 may be inserted, may be formed in at a portion of a side part, in which the second upper rotation body 212_1 and the second lower rotation body 212_2 are adjacent to each other. This structure may include the same structure as that of the first rotation member 211.

A second upper rail structure 212_1a may be formed on one side (e.g., a -x-axis periphery) of the second upper rotation body 212_1, and a second upper link connection part 212_bb may be formed on the opposite side (e.g., an x-axis periphery) thereof. A second lower rail structure 212_2a may be formed on one side (e.g., a -x-axis periphery) of the second lower rotation body 212_2, and a second lower link connection part 212_2b may be formed on an opposite side (e.g., an x-axis periphery) thereof. The second rotation elastic body 212_3 may be disposed between the second upper rotation body 212_1 and the second lower rotation body 212_2 in the same way as or similar to the first rotation elastic body 311_3, and may exert an elastic force to push the second upper rotation body 212_1 and the second lower rotation body 212_2 in the -y-axis or y-axis direction, respectively. With this structure, the second upper rotation body 212_1 and the second lower rotation body 212_2 may be more firmly coupled to the second rail 213a2 of the upper fixing bracket 213a. Furthermore, the second rotation elastic body 212_3 may prevent the second rotation member 212 from deviating from the second rail 213a2 while the second rotation member 212 is rotated in the second rail 213a2.

The second upper rail structure 212_1a and the second lower rail structure 212_2a may be disposed in symmetrical positions with the second rotation elastic body 212_3 being therebetween. As an example, the second upper rail structure 212_1a and the second lower rail structure 212_2a may include a rail structure that is convex in the -z-axis direction. This structure may have a shape that is the same as or similar to those of the first upper rail structure 211_1a and the first lower rail structure 211_2a. A side part of the second upper rail structure 212_1a, for example, may be coupled to one side (e.g., a portion of the second rail 213a2, which is disposed at the fixing bracket upper end 213a3) of the second rail 213a2, and a side part of the second lower rail structure 212_2a, for example, may be coupled to an opposite side (e.g., another portion of the second rail 213a2, which is disposed at the fixing bracket lower end 213a4) of the second rail 213a2. Bottom surfaces of the second upper rail structure 212_1a and the second lower rail structure 212_2a may be disposed to face a bottom surface of the second rail 213a2. The second upper rail structure 212_1a may be disposed parallel to the first upper rail structure 211_1a in the x-axis direction (or in line with respect to the x-axis direction), and the second lower rail structure 212_2a may be disposed parallel to the second upper rail structure 212_1a in the x-axis direction (or in line with respect to the x-axis direction).

The second upper link connection part 212_1b may include a hole that passes from the -y axis in the y-axis direction, and the second upper link connection part 212_1b may include a hole that passes from the -y axis in the y-axis direction and is aligned to be connected to the hole formed in the second upper link connection part 212_1b in the y-axis direction. The second upper link connection part 212_1b and the second lower link connection part 212_2b may be seated on or fastened to the second link member 216. In this process, the holes formed in the second upper link connection part 212_1b and the second upper link connection part 212_1b may be used to couple the second rotation member 212 to the second link member 216. A specific spacing space may be formed between the second upper link connection part 212_1b and the second lower link connection part 212_2b, and the second link elastic body 216b (or the elastic body of the second link member 216) disposed in the second link member 216 may be inserted into (or disposed in) the space. Similar to or in the same way as this structure, a specific spacing separation space also may be formed between the first upper link connection part 211_1b and the first lower link connection part 211_2b, and the first link elastic body 215b (or the elastic body of the first link member 215) may be inserted into (or disposed in) the space between the first upper link connection part 211_1b and the first lower link connection part 211_2b. The second upper link connection part 212_1b and the second lower link connection part 212_2b may be disposed in symmetrical positions on opposite sides (e.g., the x axis and the -x axis) with respect to the fixing bracket 213). Referring to FIG. 6, the first upper link connection part 211_1b and the first lower link connection part 21 1_2b may be coupled to the first link member 215 by the first link coupling member 215a that defines the fifth axis axis_A3. The second upper link connection part 212_1b and the second lower link connection part 212_2b may be coupled to the second link member 216 by the second link coupling member 216a that defines the sixth axis axis_A4.

According to an embodiment, while the hinge operation is repeated similar to the first rotation member 211, the second rotation member 212 may experience friction with the fixing bracket 213 and the second link member 216, and may be formed of a material (e.g., a metallic material) with a specific strength or higher that may withstand it. For example, the second rotation member 212 may be formed of the same material as that of the first rotation member 211. A portion of, among the wing plates 131 and 132 (FIG. 2), the second wing plate 132 (FIG. 2) may be fixed to the second rotation member 212. As an example, when the hinge structure 201 is the first hinge structure 200a (FIG. 2), the second rotation member 212 may be coupled to the second wing plate 132 (FIG. 2), and when the hinge structure 201 is the second hinge structure 200b (FIG. 2), the second rotation member 212 may be coupled to the first wing plate 131 (FIG. 2). In this regard, the second rotation member 212 may include at least one hole or recess that is used to be coupled to the second wing plate 132 (FIG. 2). The second rotation member 212 may be moved in an opposite direction to the first rotation member 211. For example, while the first upper rail structure 211_1a and the first lower rail structure 211_2a of the first rotation member 211 are rotated in place counterclockwise (or clockwise) while the foldable electronic device 100 is folded (or unfolded), the second upper rail structure 212_1a and the second lower rail structure 212_2a of the second rotation member 212 may be rotated in place clockwise (or counterclockwise).

According to an embodiment, the first link member 215 may include a structure that is coupled and fixed to one side of the first housing 110 (FIG. 2). The first link member 215 may include a first upper link side wall 215_2 (or a first side wall of the first link member 215) and a first lower link side wall 215_3 (or a second side wall of the first link member 215) that extend in the z-axis direction from opposite sides (e.g., the -y-axis and y-axis peripheries) of the first link body 215_1. Furthermore, the first link member 215 may include a first link elastic body 215b, a first link coupling member 215a, and a first link coupling ring 215c. A structure, in which a portion (e.g., the first upper link connection part 211_1b and the first lower link connection part 211_2b) of the first rotation member 211 is disposed (or coupled, fastened, or seated) and the first link body 215_1 supports a x-axis periphery of the first rotation member 211, may be provided between the first upper link side wall 215_2 and the first lower link side wall 215_3 of the first link member 215. A hole (e.g., a hole that passes in the y-axis direction from the -y axis), into which the first link coupling member 215a is inserted, may be formed in in the first upper link side wall 215_2, and the first lower link side wall 215_3 may include a hole (e.g., a hole that passes from the -y axis to the y-axis direction), into which the first link coupling member 215a is inserted, and that is formed in a position that is parallel to the hole formed in the first upper link side wall 215_2.

In a state, in which the first upper link connection part 211_1b and the first lower link connection part 211_2b of the first rotation member 211 are positioned between the first upper link side wall 215_2 and the first lower link side wall 215_3, the first link elastic body 215b may be disposed in a space between the first upper link connection part 211_1b and the first lower link connection part 211_2b. A hole formed in the first upper link side wall 215_2, a hole formed in the first lower link side wall 215_3, a hole formed in the first upper link connection part 211_1b, and a hole formed in the first lower link connection part 211_2b may be arranged in parallel in the y-axis direction, and with the holes being aligned, the first link coupling member 215a may be disposed to pass through the holes. Accordingly, after passing through and disposed in the hole formed in the first upper link side wall 215_2, the hole formed in the first lower link side wall 215_3, the hole formed in the first upper link connection part 211_1b, and the first lower link connection part 211_2b, the first link coupling member 215a may be fixed by a first link coupling ring 215c on a side wall that faces the y-axis of the first lower link side wall 215_3. Accordingly, the first rotation member 211 may be rotated (or one periphery of the first rotation member 211 including the fifth axis axis_A3 may be rotated) within a specific angle range with respect to the fifth axis axis_A3 by the first link coupling member 215a. At least one structure (e.g., a hole or a recess) that is used to fix the first link member 215 to the first housing 110 (FIG. 2) may be formed in at least one side wall of the first upper link side wall 215_2 and the first lower link side wall 215_3. The first link member 215 may be disposed parallel to or integrally formed with the third link member 223 in the -y axis (or y axis) direction.

According to an embodiment, the second link member 216 may include a structure that is coupled and fixed to one side of the second housing 120 (FIG. 2). Similar to the first link member 215, the second link member 216 may include a second upper link side wall 216_2 (or a first side wall of the second link member 216) that extends in the z-axis direction from opposite sides (e.g., -y-axis and y-axis peripheries) of a second link body 216_1, and a second lower link side wall 216_3 (or a second side wall of the second link member 216). Furthermore, the second link member 216 may include a second link elastic body 216b, a second link coupling member 216a, and a second link coupling ring 216c. The second link member 216 may have a structure that is in a position that is symmetrical to the first link member 215 with respect to a center line (e.g., a horizontal center line of the fixing bracket 213, and a center line that is parallel to the y axis) of the hinge structure 201, and is symmetrical.

According to an embodiment, a portion (e.g., the second upper link connection part 212_1b and the second lower link connection part 212_2b) of the second rotation member 212 may be disposed (or coupled, fastened, or seated) between the second upper link side wall 216_2 and the second lower link side wall 216_3 of the second link member 216, and the second link body 216_1 may be disposed to support an x-axis periphery of the second rotation member 212. A hole (e.g., a hole that passes in the y-axis direction from the -y axis), into which the second link coupling member 216a is inserted, may be formed in the second upper link side wall 216_2, and the second lower link side wall 216_3 may include a hole (e.g., a hole that passes from the -y axis in the y axis direction), into which the second link coupling member 216a is inserted, and that is formed in a position that is parallel to the hole formed in the second upper link side wall 216_2.

The second upper link connection part 212_1b and the second lower link connection part 212_2b of the second rotation member 212 may be disposed between the second upper link side wall 216_2 and the second lower link side wall 216_3. The second link elastic body 216b may be disposed in a space between the second upper link connection part 212_1b and the second lower link connection part 212_2b. The hole formed in the second upper link side wall 216_2, the hole formed in the second lower link side wall 216_3, the hole formed in the second upper link connection part 212_1b, and the hole formed in the second lower link connection part 212_2b may be arranged in parallel in the y-axis direction. With the holes being aligned, the second link coupling member 216a may be disposed to pass through the holes. Accordingly, after passing through and disposed in the hole formed in the second upper link side wall 216_2, the hole formed in the second lower link side wall 216_3, the hole formed in the second upper link connection part 212_1b, and the second lower link connection part 212_2b, one side of the second link coupling member 216a may be fixed by a second link coupling ring 216c on a side wall that faces the y-axis of the second lower link side wall 216_3. Accordingly, the second rotation member 212 may be rotated (one periphery of the second rotation member 212 including the sixth axis axis_A4 may be rotated) within a specific angle range with respect to the sixth axis axis_A4 by the second link coupling member 216a. At least one structure (e.g., a hole or a recess) that is used to fix the second link member 216 to the second housing 120 (FIG. 2) may be formed in a side wall of at least one of the second upper link side wall 216_2 and the second lower link side wall 216_3. The second link member 216 may be disposed parallel to or integrally formed with the fourth link member 224 in the -y-axis (or y-axis) direction.

According to an embodiment, the third link member 223 may include a structure, in which a portion (e.g., a first arm part 221_1 of the first arm member 221) of the first arm member 221 is disposed (or fastened, coupled, seated). The third link member 223 may include a third link body 223_1, and a third upper link side wall 223_2 (or a first side wall of the third link member 223) and a third lower link side wall 223_3 (or a second side wall of the third link member 223) that extend in the z-axis direction on opposite sides (e.g., x-axis and -x-axis peripheries) of the third link body 223_1. A rail (or a rail groove, into which the protruding rail is inserted) that protrudes toward the third lower link side wall 223_3, may be formed in the third upper link side wall 223_2, and a rail (or a rail groove, into which the protruding rail is inserted) that protrudes toward the third upper link side wall 223_2 may be formed in the third lower link side wall 223_3. The rails may be fastened to one side (e.g., a rail groove or a protruding rail that is formed toward the -γ-axis direction) and an opposite side (e.g., a rail groove or a protruding rail that is formed toward the y-axis direction) of the first arm part 221_1, respectively. A structure (e.g., at least one hole or recess) that is used to fix the third link member 223 to the first housing 110 (FIG. 2) may be formed in the third upper link side wall 223_2 and the third lower link side wall 223_3. An empty space may be formed between the third upper link side wall 223_2 and the third lower link side wall 223_3, the first arm part 221_1 of the first arm member 221 may be disposed in the empty space, and the first arm part 221_1 may be slid along the rails formed in the third link member 223. Meanwhile, although it is illustrated in the drawing that the third link member 223 and the first link member 215 are separated, the disclosure is not limited thereto. For example, the third link member 223 may be integrally formed with the first link member 215.

Additionally, the third link member 223 may further include a third link elastic body 225 (or an elastic member of the third link member 223) that is disposed on a bottom surface of the third link body 223_1 and supports the first arm member 221 coupled to the rail in the z-axis direction. One side of the third link elastic body 225 may be held on the third link body 223_1, and it may apply an elastic force in a specific angle direction in the z-axis direction or between -x axis and z axis while supporting a rear surface (e.g., a surface that is observed in the -z-axis direction) of the first arm member 221, which is coupled to the third link member 223. Based on this, because the first arm member 221 and the third link member 223 are in closer contact with each other while the first arm member 221 performs a hinge operation, a movement of the first arm member 221 and the third link member 223 due to an irregular gap therebetween may be suppressed whereby the first arm member 221 can perform a more robust sliding operation with an improved movement.

According to an embodiment, the fourth link member 224 may include a structure, in which a portion (e.g., the second arm part 222_1 of the second arm member 222) of the second arm member 222 is disposed (or fastened, coupled, seated). The fourth link member 224 may include a fourth link body 224_1, and a fourth upper link side wall 224_2 (or a first side wall of the fourth link member 224) and a fourth lower link side wall 224_3 (or a second side wall of the fourth link member 224) that extend in the z-axis direction on opposite sides (e.g., x-axis and -x-axis peripheries) of the fourth link body 224_1. The fourth link member 224 may have a size and a shape that the same as or similar to those of the third link member 223. The fourth link member 224 may be disposed to be symmetrical with respect to a horizontal center line of the fixing bracket 213. According to an embodiment, a rail (or a rail groove, into which the protruding rail is inserted) that protrudes toward the fourth lower link side wall 224_3, may be formed in the fourth upper link side wall 224_2, and a rail (or a rail groove, into which the protruding rail is inserted) that protrudes toward the fourth upper link side wall 224_2 may be formed in the fourth lower link side wall 224_3. The rails formed in the fourth link member 224 may be fastened to one side (e.g., a rail groove or a protruding rail that is formed toward the -y-axis direction) and an opposite side (e.g., a rail groove or a protruding rail that is formed toward the y-axis direction) of the second arm part 222_1 of the second arm member 222, respectively. A structure (e.g., at least one hole or recess) that is used to fix the fourth link member 224 to the second housing 120 (FIG. 2) may be formed in the fourth upper link side wall 224_2 and the fourth lower link side wall 224_3. The second arm part 222_1 may be disposed in the empty space between the fourth upper link side wall 224_2 and the fourth lower link side wall 224_3, and the second arm part 222_1 may be slid along the rails formed in the fourth link member 224.

Additionally, the fourth link member 224 may further include a fourth link elastic body 226 (or an elastic body of the fourth link member 224) that is disposed on a bottom surface of the fourth link body 224_1 and supports the second arm member 222 coupled to the rail, in the z-axis direction. The fourth link elastic body 226 may have a size and a shape that are the same as or similar to those of the above-described third link elastic body 225 within a specific error range, and may be disposed to be symmetrical with respect to the horizontal center line of the fixing bracket 213. The fourth link elastic body 226 may prevent movement of the second arm member 222 by exerting an elastic force while the second arm member 222 is slid on the fourth link member 224.

At least one of the first to fourth link members 215, 216, 223, and 224 may be formed of the same material. Alternatively, it may be at least partially formed of another structure (e.g., an injection-molded product). Meanwhile, it has been illustrated in the above description that the link members 215, 216, 223, and 224 are separated, but the disclosure is not limited thereto. For example, the first link member 215 and the third link member 223 may be connected to or integrally formed with each other, and the second link member 216 and the fourth link member 224 may be connected to or integrally formed with each other.

According to an embodiment, the first arm member 221 may be disposed symmetrically to the second arm member 222 with respect to the y axis or -y axis. The first arm member 221 may be rotated from the x axis in the z-axis direction (or counterclockwise with respect to a direction that faces the fixing bracket upper end 213a3 from the fixing bracket extension part 213a5) while the portable electronic device 100 is changed from the unfolded state to the folded state with respect to the center of the first shaft 231, and may be rotated from the z axis in the x-axis direction (or clockwise) while the portable electronic device 100 is changed from the folded state to the unfolded state. The first arm member 221 may include a first arm part 221_1 and a first main gear 221_2. The first arm part 221_1 may include rail structures that protrude in the -y axis and y-axis directions, respectively to be coupled to the third link member 223 to be slid. The first arm part 221_1 of the first arm member 221 may be rotated in the third link member 223 within a specific angle range with respect to the seventh axis axis_B1. The first main gear 221_2 is a portion that is coupled to the first shaft 231, and includes a through-hole, through which the first shaft 231 is disposed to pass, and a gear pattern may be formed on at least a portion of an outer surface thereof. The first main gear 221_2 may be gear-coupled to the adjacent first gear 238a. At least a portion of the through-hole of the first main gear 221_2, into which the first shaft 231 is inserted, may have a "D"-cut shape. The first main gear 221_2 may be rotated within a specific angular range with respect to a third axis axis_B3 with respect to a center line of the first shaft 231. The first arm part 221_1 may include a hook or a step that is configured to be stopped by one side of the gear bracket 236 when being rotated by a specific angle or more to prevent the portable electronic device 100 from being rotated by a predetermined angle or more.

According to an embodiment, the second arm member 222 may be disposed to be symmetrical to the first arm member 221 with respect to the y axis or -y axis. While the portable electronic device 100 is changed from the unfolded state to the folded state based on the y-axis (or with respect to a direction that faces the fixing bracket upper end 213a3 from the fixing bracket extension part 213a5), the second arm member 222 may be rotated clockwise, and while the portable electronic device 100 is changed from the folded state to the unfolded state, the second arm member 222 may be rotated counterclockwise. The second arm member 222 may rotate in an opposite direction to a movement direction of the first arm member 221. The second arm member 222 may include a second arm part 222_1 and a second main gear 222_2. The second arm part 222_1 may include rail grooves (or rails) that are formed to extend toward the fourth link member 224, and are disposed in the -y-axis direction and the y-axis direction to be fastened to the rails (or the rail grooves) formed in the fourth link member 224. The second arm part 222_1 may be fastened to the fourth link member 224 and may be rotated within a specific angle range with respect to the eighth axis axis_B2. The rotation may include a sliding movement that is performed along rails. The second main gear 222_2 is a portion that is coupled to the second shaft 232, similar to the first main gear 221_2, and may include a through-hole, through which the second shaft 232 is disposed to pass, and a gear pattern may be formed at at least a portion of an outer surface thereof. The second main gear 222_2 may be gear-coupled to the adjacent second gear 239a. At least a portion of the through-hole of the second main gear 222_2, into which the second shaft 232 is inserted, may have a "D"-cut shape. The second main gear 222_2 may be rotated within a specific angle range with respect to the fourth axis axis_B4 with respect to a center line of the second shaft 232. The second arm part 222_1 may include a hook or a step that is configured to be stopped by one side of the gear bracket 236 when being rotated by a specific angle or more to prevent the portable electronic device 100 from being rotated by a predetermined angle or more.

According to various embodiments, a rail structure (or an arc-shaped rail structure) formed in the first rotation member 211, the second rotation member 212, the first arm member 221 and second arm member 222, the third and fourth link members 223 and 224, and the fixing bracket 213 may be formed as any one of a rail groove or a rail protrusion, and other coupling configurations may have the shape of a rail protrusion or a rail groove. As an example, the rail structures 211_2a and 211_1a of the first rotation member 211 have a rail shape, but may be changed to a shape of a rail groove, and correspondingly, the shape of the fixing bracket 213 may be changed. Similarly, the rail structures of the second rotation member 212 and the fixing bracket 213, the first arm member 221 and the third link member 223, and the second arm member 222 and the fourth link member 224 may be designed such that, when one side thereof has a recess or protrusion structure, the other side has a protrusion or recess structure so that they may be interlocked with each other.

According to an embodiment, the first gear shaft 238 (or a first sub-shaft or a first auxiliary shaft) may have a rod shape that is disposed in parallel to the first shaft 231 and extends long in the z-axis direction. A first gear 238a may be disposed on one side of the first gear shaft 238. As the first gear 238a is rotated, the first gear shaft 238 may be rotated about the ninth axis axis_B5. The first gear 238a may be disposed between the first main gear 221_2, and the second gear 239a formed in the second gear shaft 239, and the first main gear 221_2 and the second gear 239a may be gear-coupled to each other. A diameter of the first gear shaft 238 may be different depending on a position thereof. For example, a diameter of a -y-axis periphery of the first gear shaft 238 may be larger than a diameter of a y-axis periphery thereof. The opposite side of the first gear shaft 238 (e.g., at least a portion of the y-axis direction from a center of the shaft) may be coupled to (or disposed to pass through the holes formed in the configurations) to a central side of the first support member 248a, a central side of the second support member 248b, a central side of the cam member 241, a first upper auxiliary cam 244c (or a third cam), a third cam elastic member 242c, a first sub friction member 249c3, and a central side of the third support member 248c.

According to an embodiment, the second gear shaft 239 (or a second sub-shaft, or a second auxiliary shaft) may have a rod shape that is disposed in parallel to the first gear shaft 238 and extends long in the z-axis direction. A second gear 239a may be disposed on one side of the second gear shaft 239. The second gear 239a may be disposed between the second main gear 222_2 and the first gear 238a formed in the first gear shaft 238, and may be gear-coupled to the second main gear 222_2 and the first gear 238a. As the second gear 239a is rotated, the second gear shaft 239 may be rotated with respect to the tenth axis axis_B6 formed in a central portion thereof. A diameter of the second gear shaft 239 may be different depending on a position thereof, similar to the first gear shaft 238. The opposite side of the first gear shaft 238 (e.g., at least a portion of the y-axis direction from the center of the shaft) may be coupled (or disposed to pass through the holes formed in the configurations) to a central opposite side of the first support member 248a, a central opposite side of the second support member 248b, a central opposite side of cam member 241, a second upper auxiliary cam 244d (or a fourth cam), a fourth cam elastic member 242d, and a second sub friction member 249c4, and a central opposite side of the third support member 248c.

According to an embodiment, the cam member 241 may include a first fixed cam portion 241a, a second fixed cam portion 241b, a third fixed cam portion 241c, and a fourth fixed cam portion 241d.

The first fixed cam portion 241a may be disposed at an x-axis periphery from a center of the cam member 241. The first fixed cam portion 241a has a cylindrical shape that surrounds a shaft hole (or a first hole, or a hole of the first fixed cam portion 241a) that is formed to pass in the y-axis or -y-axis direction, in the central portion, and may include a cam pattern part that is formed in a direction that faces the y-axis and includes at least one ridge and at least one valley. The first fixed cam portion 241a may include a pattern, in which ridges and valleys are repeatedly disposed to be engaged with the cam pattern (e.g., at least one ridge and at least one valley) formed on a first cam 244a. The first shaft 231 may be disposed to pass through the shaft hole formed at a central portion of the first fixed cam portion 241a.

The second fixed cam portion 241b may be disposed at a -x-axis periphery (or a position that is opposite or symmetrical to a position, in which the first fixed cam portion 241a is formed, with respect to the cam member 241) from a center of the cam member 241. The second fixed cam portion 241b may have a cylindrical shape that surrounds a shaft hole (or a second hole, or a hole of the second fixed cam portion 241b) formed to pass in the y-axis or -y-axis direction, at a central portion thereof. As an example, the second fixed cam portion 241b may a size and a shape that is the same as those of the first fixed cam portion 241a within a specific error range, and may be disposed parallel to each other. According to an embodiment, the second fixed cam portion 241b may include a repeated pattern of ridges and valleys that are disposed to be engaged with the cam pattern (e.g., at least one ridge and at least one valley) formed in a second cam 244b. The shaft hole formed at the central portion of the second fixed cam portion 241b may have a specific shape (e.g., a circular cross-section in the z-axis direction) so that the second shaft 232 may pass therethrough.

The third fixed cam portion 241c may be disposed between the first fixed cam portion 241a and the second fixed cam portion 241b. The third fixed cam portion 241c may have a cylindrical shape that surrounds a shaft hole (or a third hole, or a hole of the third fixed cam portion 241c) formed to pass in the y axis or -y-axis direction at a central portion thereof. As an example, the third fixed cam portion 241c may include a shaft hole having a size that is smaller than that of the first fixed cam portion 241a. According to an embodiment, the third fixed cam portion 241c may include a repeated pattern of ridges and valleys that are disposed to be engaged with a cam pattern (e.g., at least one ridge and at least one valley) formed in a third cam 244c. A size of the cam pattern formed in the third fixed cam portion 241c may be smaller than a size of the cam pattern disposed in the first fixed cam portion 241a. The shaft hole formed at a central portion of the third fixed cam portion 241c may have a specific shape (e.g., a circular cross-section in the z-axis direction) so that the first gear shaft 238 may pass therethrough. A diameter (or an area) of a z axis cross-section of the first gear shaft 238 may be smaller than a diameter (or an area) of a z axis cross-section of the first shaft 231. Correspondingly, the diameter of the shaft hole of the central portion of the third fixed cam portion 241c may be smaller than the diameter of the shaft hole of the first fixed cam portion 241a, into which the first shaft 231 is inserted.

The fourth fixed cam portion 241d may be disposed between the third fixed cam portion 241c and the second fixed cam portion 241b. The fourth fixed cam portion 241d may have a cylindrical shape that surrounds a shaft hole (or a fourth hole, or a hole of the fourth fixed cam portion 241d) formed to pass in the y axis or -y-axis direction, at the central portion. As an example, the fourth fixed cam portion 241d may have a size and a shape that are the same as those of the third fixed cam portion 241c within a specific error range. For example, the cam hole that passes through the central portion of the fourth fixed cam portion 241d in the y-axis direction may have a size that is the same as or similar to that of the shaft hole of the third fixed cam portion 241c. According to an embodiment, the fourth fixed cam portion 241d may include a repeated pattern of ridges and valleys disposed to be engaged with a cam pattern (e.g., at least one ridge and at least one valley) formed in a fourth cam 244d. A size of the cam pattern formed in the fourth fixed cam portion 241d may be the same as or similar to a size of the cam pattern disposed in the third fixed cam portion 241c. The shaft hole formed at the central portion of the fourth fixed cam portion 241d may have a specific shape (e.g., a circular cross-section in the z-axis direction) so that the second gear shaft 239 may pass therethrough. A diameter (or an area) of a z axis cross-section of the second gear shaft 239 may be formed to be similar to or the same as a diameter (or an area) of a z axis cross-section of the first gear shaft 238. Correspondingly, a diameter of the shaft hole of the central portion of the fourth fixed cam portion 241d may be formed to be the same as or similar to a diameter of the shaft hole of the third fixed cam portion 241c, into which the first gear shaft 238 is inserted.

According to an embodiment, a plurality of cams 244a, 244b, 244c, and 244d may be disposed between the first cam member 241 and the cam elastic members 242a, 242b, 242c, and 242d. For example, the first cam 244a may be disposed between the first fixed cam portion 241a of the first cam member 241 and the first cam elastic member 242a, a second cam 244b may be disposed between the second fixed cam portion 241b and the second cam elastic member 242b of the second cam member 241, a third cam 244c may be disposed between the third fixed cam portion 241c of the third cam member 241 and the third cam elastic member 242c, and a fourth cam 244d may be disposed between the fourth fixed cam portion 241d of the fourth cam member 241 and the fourth cam elastic member 242d. The plurality of cams 244a, 244b, 244c, and 244d may have a shape corresponding to the cam shape of the facing cam member 241. For example, the first cam 244a and the second cam 244b may have a size and a shape corresponding to the cam patterns of the first fixed cam portion 241a and the second fixed cam portion 241b. The third cam 244c and the fourth cam 244d may have sizes and shapes corresponding to the cam patterns of the third fixed cam portion 241c and the fourth fixed cam portion 241d. Correspondingly, the sizes of the first cam 244a and the second cam 244b may be larger than those of the third cam 244c and the fourth cam 244d. The first cam 244a may be mounted on the first shaft 231, the second cam 244b may be mounted on the second shaft 232, and the third cam 244c may be mounted on the first gear shaft 238, and the fourth cam 244d may be mounted on the second gear shaft 239. Meanwhile, in the above description, a structure, in which the first cam 244a and the second cam 244b are formed to be larger than the third cam 244c and the fourth cam 244d, is illustrated, but the disclosure is not limited thereto. For example, the first cam 244a and the second cam 244b may have the same size as those of the third cam 244c and the fourth cam 244d. Alternatively, the first cam 244a and the second cam 244b may be formed to be smaller than the third cam 244c and the fourth cam 244d. Alternatively, in a zigzag pattern, while the first cam 244a and the third cam 244c may have the same size, and the second cam 244b and the fourth cam 244d have the same size, they may have different sizes from those of the first cam 244a and the third cam 244c. When the sizes and the shapes of the cams 244a, 244b, 244c, and 244d are changed, the sizes and the shapes of the fixed cam portions 241a, 241b, 241c, and 241d of the cam member 241 may also be changed correspondingly.

According to an embodiment, a foldable electronic device with a display screen of a specific size or more may require a torque of a specific magnitude or more to maintain a flex mode (a mode, in which a folded state is maintained within an angle range that is greater than 0 degrees and less than 180 degrees) during a folding or unfolding process. In an embodiment of the disclosure, in relation to the folding operation of the foldable electronic device 100, cam elastic members 242a, 242b, 242c, and 242d that may perform a stable folding or unfolding operation while providing elastic forces of different magnitude may be provided to enable a stable folding or unfolding operation while providing a relatively greater force. As an example, some elastic bodies of the cam elastic members 242a, 242b, 242c, and 242d may be implemented with disk springs, and some other elastic bodies may be implemented with coil springs. Dish-shaped disk springs may be used in multiple layers depending on conditions, and have less operating displacement than coil springs under the same length conditions, but may implement a greater force. According to an embodiment, a plurality of stacked disk springs are disposed on the first shaft 231 and the second shaft 232, a plurality of friction members and support members are disposed on the same line so that a high torque may be provided by converting the elastic forces of the cam elastic members (e.g., the first cam elastic member 242a and the second cam elastic member 242b) into surface pressures whereby maintenance of the flex mode of a foldable electronic device with a screen of a specific size or more may be supported.

According to an embodiment, in the first cam elastic member 242a (or the first elastic member, or the first elastic body), a plurality of disk-shaped springs that have a hole at central portions thereof and are bent in the y-axis or -y-axis direction may overlap each other or be stacked. According to one embodiment, interiors of the disk springs may be hollow, have a hole formed in the central portions thereof, and may include a dome shape that protrudes to one side. According to an embodiment, a disk spring may have a dome shape that has a circular band shape when viewed in the z-axis direction, and of which a size in the x-axis cross-section decreases as it goes from a periphery to a central portion thereof when viewed in the x-axis direction that is perpendicular to the z axis (or a shape including a specific inclination (that is greater than 0 degrees and less than 90 degrees) from the periphery to the central portion thereof). The plurality of disk springs may have the same shape. Based on the protruding shape of the disk spring, the disk spring may include a lower end (a part having a relatively wider outer diameter compared to an upper end thereof, or a periphery), and an upper end (a part having a relatively narrow inner diameter compared to the lower end thereof, or a central portion having a hole, into which the shaft is formed). The plurality of stacked disk springs of the first cam elastic member 242a may be disposed such that lower ends thereof may face each other and upper ends thereof may face each other in a process of them overlapping each other.

According to an embodiment, the first cam elastic member 242a may include a structure, in which sets in a state (e.g., a state, in which an outer side of an upper end of the second disk spring is disposed to face an inner side of an upper end of the first disk spring, or a state, in which the disk springs overlap each other), in which a first disk spring is inserted into another second disk spring, are stacked alternately. For example, the first cam elastic member 242a may include a state, in which an outer side of a lower end of the first set in a state, in which a plurality of disk springs overlap each other, faces an outer side of a lower end of the second type set, in which a plurality of disk springs overlap each other, or a stacked state, in which an outer side of an upper end of the first set faces an outer side of an upper end of the second set. The first cam elastic member 242a may include a plurality of first and second sets that are disposed in a zigzag manner. As an example, the drawing illustrates a state, in which eight sets of a plurality of disk springs are disposed to overlap each other. However, the first cam elastic member 242a of the disclosure is not limited thereto, and the number of the sets may be adjusted. Furthermore, the first cam elastic member 242a may include a structure (e.g., a structure, in which an outer side of an upper end of one disk spring and an outer side of an upper end of another disk spring are disposed to face each other, and an outer side of a lower end of one disk spring and an outer side of a lower end of another disk spring are disposed to face each other), in which disk springs are stacked while not overlapping each other.

At least a portion of the body of the first shaft 231 that passes through the first fixed cam portion 241a and the first cam 244a may be disposed at a central portion of the first cam elastic member 242a. The first cam elastic member 242a is disposed between the cam member 241 and the shaft fixing part 243, the shaft fixing part 243 is fixed to one side (e.g., the hinge housing 150 of FIG. 2) of the foldable electronic device 100 whereby an elastic force may be exerted to push the first cam 244a to the first fixed cam portion 241a of the cam member 241. A plurality of friction members (e.g., the first friction member 249a1, the third friction member 249b1, and the fifth friction member 249c1) and a portion of the support member (e.g., one side of the first support member 248a, one side of the second support member 248b, and one side of the third support member 248c) may be disposed in the first shaft 231, in which the first cam elastic member 242a is disposed. The first cam elastic member 242a may provide an elastic force to the above-described friction members and support members to contribute to forming a relatively high torque, compared to the third cam elastic member 242c.

According to one embodiment, the second cam elastic member 242b may be disposed to be spaced apart from the first cam elastic member 242a by a specific interval, and be disposed to contact one surface of the second cam 244b. The second cam elastic member 242b (or a second elastic member, or a second elastic body) may have a hole at a central portion thereof, similar to the first cam elastic member 242a, and a plurality of disk-shaped springs that are bent in the y axis or -y-axis direction may overlap each other. According to an embodiment, the number of the disk springs of the second cam elastic member 242b may be the same as the number of the disk springs of the first cam elastic member 242a. The shapes and the sizes of the disk-shaped springs that overlap (or are stacked on) the second cam elastic member 242b may be the same as or similar to the shapes and the sizes of the disk-shaped springs that overlap (or are stacked on) the first cam elastic member 242a within a specific error range. The magnitude of the elastic force of the second cam elastic member 242b may be the same as or similar to the magnitude of the elastic force of the first cam elastic member 242a within a specific error range. According to an embodiment, the magnitude of the elastic force of the second cam elastic member 242b (or the first cam elastic member 242a) may be set to be the magnitude of the third cam elastic member 242c (or the fourth cam elastic member 242d) or more. At least a portion of the body of the second shaft 232 that passes through the second fixed cam portion 241b and the second cam 244b may be disposed at a central portion of the second cam elastic member 242b. The second cam elastic member 242b is disposed between the cam member 241 and the shaft fixing part 243, and the shaft fixing part 243 is fixed to one side (e.g., the hinge housing 150 of FIG. 2) of the foldable electronic device 100 whereby an elastic force may be applied to push the second cam 244b to the second fixed cam portion 241b of the cam member 241. According to an embodiment, the second cam elastic member 242b may provide an elastic force to a plurality of friction members (e.g., the second friction member 249a2, the fourth friction member 249b2, the sixth friction member 249c2) that are inserted into the second shaft 232, and another portion of the support members (e.g., an opposite side of the first support member 248a, an opposite side of the second support member 248b, and an opposite side of the third support member 248c). Correspondingly, the second cam elastic member 242b may contribute to forming a surface pressure or a torque having the same or similar magnitude as the first cam elastic member 242a.

According to an embodiment, the third cam elastic member 242c (or the third elastic member, or the third elastic body) may include a coil spring (spring) shape, in which at least a portion of the first gear shaft 238 is disposed to pass therethrough, and of which a length in the y-axis and -y-axis direction is longer than lengths in the other axis directions, at a central portion thereof. The third cam elastic member 242c may be disposed between the first cam elastic member 242a and the second cam elastic member 242b in the x-axis or -x-axis direction, and the third cam elastic member 242c may be disposed to exert an elastic force to the third cam 244c that faces (or contacts) the third fixed cam portion 241c of the cam member 241. A size of a cross-section (or a size of an outer surface) of the third cam elastic member 242c in the z-axis direction may be smaller than a size of a cross-section (or a maximum size) of the first cam elastic member 242a in the z-axis direction. A compression distance (or a compression displacement) of the third cam elastic member 242c in the y-axis direction or -y-axis direction may be formed to be longer (larger) than a compression distance (or a compression displacement) of the first cam elastic member 242a. A magnitude of the elastic force of the third cam elastic member 242c in the y-axis direction or the - y-axis direction may be set to a magnitude of the elastic force of the first cam elastic member 242a or less.

According to an embodiment, the fourth cam elastic member 242dd (or the fourth elastic member, or the fourth elastic body) may include a coil spring (spring) shape, in which at least a portion of the second gear shaft 239 is disposed to pass therethrough, and of which a length in the y-axis and -y-axis direction is longer than lengths in the other axis directions, at a central portion thereof. As an example, the fourth cam elastic member 242d may be formed to have at least one of the same size and shape as the third cam elastic member 242c. The fourth cam elastic member 242d may be disposed between the third cam elastic member 242c and the second cam elastic member 242b in the x-axis or -x-axis direction, and the fourth cam elastic member 242d may be disposed to exert an elastic force to the fourth cam 244d that faces (or contacts) the fourth fixed cam portion 241d of the cam member 241. A size of a cross section (or a size of an outer surface) of the fourth cam elastic member 242d in the z-axis direction may be the same as or similar to a size of a cross section (or a size of an outer surface) of the third cam elastic member 242c in the z-axis direction. A compression distance of the fourth cam elastic member 242d in the y-axis direction or -y-axis direction may be formed to be the same as or similar to a compression distance of the third cam elastic member 242c. A magnitude of the elastic force of the fourth cam elastic member 242d in the y-axis direction or -y-axis direction may be set to be the same as or similar to a magnitude of the elastic force of the third cam elastic member 242c within a specific error range.

The shaft fixing part 243 may include a shaft body 243_3, a first fixing part 243_1, in which a first shaft hole is formed, and a second fixing part 243_2, in which a second shaft hole is formed. The shaft body 243_3 may include a through-hole that passes in an upward and downward direction (e.g., from one point on the z-axis in the -z-axis direction) and is used to fix the shaft fixing part 243 to the hinge housing 150 (FIG. 2). The first shaft hole formed in the first fixing part 243_1 may be formed to pass in the y axis or -y-axis direction, and the first shaft 231 may pass therethrough and be disposed therein. A shape of the first shaft hole may be cylindrical. The first fixing part 243_1 may support one side of the first cam elastic member 242a. The second shaft hole formed in the second fixing part 243_2 may be disposed parallel to the first shaft hole on the y axis, and the second shaft 232 may pass therethough and be disposed thereon. A shape of the second shaft hole may be cylindrical. The second fixing part 243_2 may support one side of the second cam elastic member 242b. A first holding recess, in which one side (e.g., a y-axis periphery) of the first gear shaft 238 is held, and a second holding recess, in which one side (e.g., a y-axis periphery) of the second gear shaft 239 is held, may be included at a central portion (e.g., between the first fixing part 243_1 and the second fixing part 243_2) of the shaft body 243_3.

At least some of the plurality of friction members 249a1, 249a2, 249b1, 249b2, 249c1, 249c2, 249c3, and 249c4 and the support members 248a, 248b, and 248c face each other, and when the hinge structure 201 is rotated while being pressed by pressures applied by the cam elastic members 242a, 242b, 242c, and 242d, a frictional force may be generated. The frictional force generated by the plurality of friction members 249a1, 249a2, 249b1, 249b2, 249c1, 249c2, 249c3, and 249c4 may be applied as a torque that maintains a specific holding angle in a process of folding or unfolding the foldable electronic device 100. As an example, the first friction member 249a1 may be disposed between one side of the first support member 248a (e.g., an x-axis periphery of the first support member 248a) and one side of the second support member 248b (e.g., an x-axis periphery of the second support member 248b), and the second friction member 249a2 may be disposed between an opposite side of the first support member 248a (e.g., a -x-axis periphery of the first support member 248a) and an opposite side (e.g., a -x-axis periphery of the second support member 248b) of the second support member 248b. The third friction member 249b1 may be disposed between one side of the second support member 248b, and a rear surface of a portion of the cam member 241, at which the first fixed cam portion 241a is formed, and the fourth friction member 249b2 may be disposed between an opposite side of the second support member 248b, and a rear surface of a portion of the cam member 241, at which the second fixed cam portion 241b is formed. The fifth friction member 249c1 may be disposed between the first cam elastic member 242a and one side (e.g., an x-axis periphery of the third support member 248c) of the third support member 248c, and the sixth friction member 249c2 may be disposed between the second cam elastic member 242b and an opposite side (e.g., a -x-axis periphery of the third support member 248c) of the third support member 248c. The first sub friction member 249c3 may be disposed between the fifth friction member 249c1 and the sixth friction member 249c2 with respect to the x axis, and may be disposed between the third cam elastic member 242c and one side of the central portion of the third support member 248c with respect to the y axis. The second sub friction member 249c4 may be disposed between the sixth friction member 249c2 and the first sub friction member 249c3 with respect to the x axis, and may be disposed between the third cam elastic member 242c and an opposite side of the central portion of the third support member 248c with respect to the y axis.

A first fixing nut 249d1 may be fastened to one side (a y-axis periphery) of the protruding first shaft 231 while passing through the first fixing part 243_1 of the shaft fixing part 243. According to an embodiment, at least a portion of one side of the first shaft 231 includes a bolt shape (or a bolt pattern), and the first fixing nut 249d1 may be fastened to at least a portion of one side of the first shaft 231 through bolt and nut coupling. A second fixing nut 249d2 may be fastened to one side (a y-axis periphery) of the protruding second shaft 232 while passing through the second fixing part 243_2 of the shaft fixing part 243. According to an embodiment, at least a portion of one side of the second shaft 232 includes a bolt shape (or a bolt pattern), and identically or similar to the first fixing nut 249d1, the second fixing nut 249d2 may be fastened to at least a portion of one side of the second shaft 232 through bolt and nut coupling. The fixing nuts 249d1 and 249d2 (or fixing members, or fixing bodies) may prevent the first shaft 231 and the second shaft 232 from being moved or deviating. At least some of the plurality of friction members 249a1, 249a2, 249b1, 249b2, 249c1, 249c2, 249c3, and 249c4 may be disposed to improve wear of other adjacent structures. Meanwhile, at least some of the plurality of friction members 249a1, 249a2, 249b1, 249b2, 249c1, 249c2, 249c3, and 249c4 described above may be omitted. Alternatively, an additional friction member may be added to the hinge structure 201. Furthermore, a key feature of the disclosure is the use of cam elastic members of different shapes, and at least some of positions, dispositions, sizes or shapes thereof may be modified or changed. Furthermore, the hinge structure 201 of the disclosure does not necessarily require all of the structures related to the hinge operation other than the cam elastic members, and in terms of the technical understanding of those skilled in the art, at least some structures may be excluded or replaced with other structures. As an example, as mentioned above, at least some of the link members 215, 216, 223, and 224 may be provided in a shape that is integral with the first housing (the first housing 110 in FIG. 2) and the second housing (the second housing 120 of FIG. 2), the fixing bracket extension part 213a5 may be removed from the fixing bracket 213, and the fixing bracket 213 may include only the upper fixing bracket 213a. Furthermore, when necessary, the gear bracket 236 may be omitted, and the fixing nuts 249d1 and 249d2 may be replaced with E-rings. Furthermore, although it is illustrated that the rotation members 211 and 212 have a structure including two upper and lower rotation bodies, the rotation members 211 and 212 may have an integral structure that does not include a separate rotation elastic body. Correspondingly, in the first link member 215 and the second link member 216, the first link coupling member 215a and the second link coupling member 216a, the first link elastic body 215b, and the second link elastic body 216b, the first link coupling ring 215c, and the second link coupling ring 216c are excluded, and a rail (or a rail groove) having a specific curvature may be included. Correspondingly, the link connection portions of the first rotation member 211 and the second rotation member 212 may be changed to rail grooves (or rails).

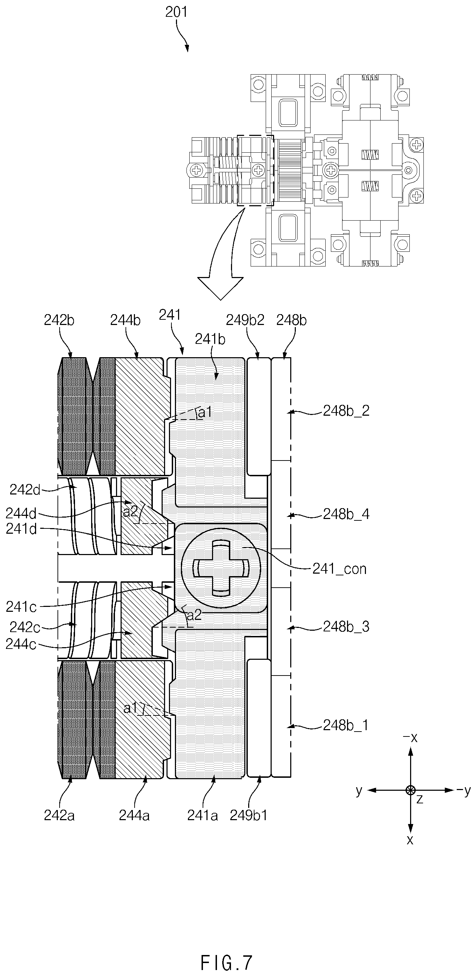

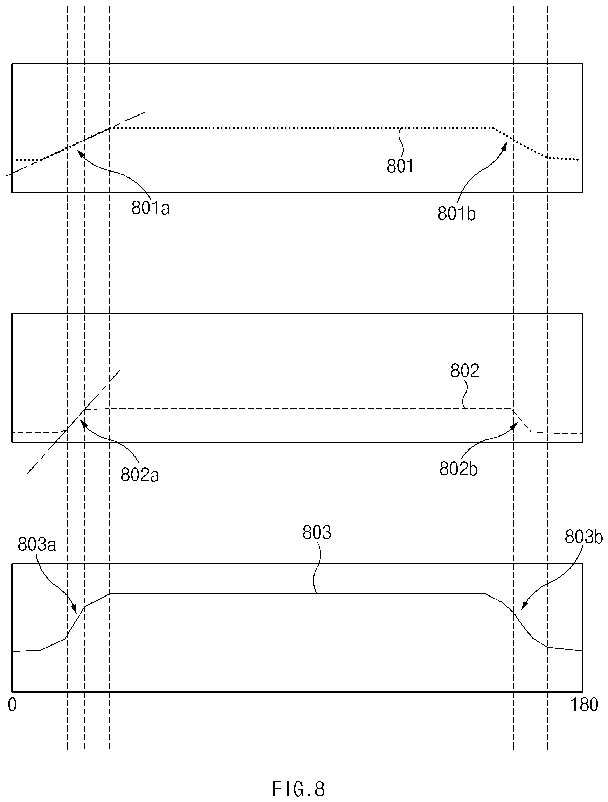

FIG. 7 is a view illustrating an example of one form of the cam member and the cams in the hinge structure according to an embodiment. FIG. 8 is a view illustrating a change in torque in a process of unfolding and folding the hinge structure according to an embodiment.

Referring to FIGS. 1 to 7, according to an embodiment, the hinge structure 201 includes at least a cam member 241, cams 244a, 244b, 244c, and 244d, and cam elastic members 242a, 242b, 242c, and 242d. Furthermore, the hinge structure 201 may include a second support member 248b, a third friction member 249b1, and a fourth friction member 249b2, and may further include shafts that are disposed to pass through the components.

Some of the cam elastic members 242a, 242b, 242c, and 242d may be of a different type from the remaining cam elastic members. For example, the first cam elastic member 242a and the second cam elastic member 242b may include a structure, in which disk springs are stacked. The third cam elastic member 242c and the fourth cam elastic member 242d may include coil springs. A change in a detent force (e.g., 21.1 kgf, may be changed depending on a change in design) of the first cam elastic member 242a and the second cam elastic member 242b including the disk springs may be set to greater than a change in a detent force (e.g., 6.5 kgf, may be changed depending on a change in design) of the third cam elastic member 242c and fourth cam elastic member 242d including the coil spring. As an example, a total compression amount (or a compressible amount) of the disk spring is at the level of maximum of 0.05 mm per piece, the total maximum compression amount is less than 0.3mm when six of them are stacked, and may be set to the level of 0.2 to 0.25 mm, considering margins for plastic deformation and set-up of a torque. When a size of a cam stroke for implementing a detent compared to the total compression amount is a specific size or more, a torque decreases rapidly in the detent section, whereby a cam stroke (a spring operation displacement in the flex section and the open and close sections of the foldable electronic device 100) may be applied up to 0.1, or less (e.g., 0.05 to 0.1). When a coil spring with a total compression amount of 2.0mm has a stroke of 0.25, a decrease in a force of the coil spring is -12.3%, and may be maintained at around 10%. A decrease in a force of a disk spring with a total compression amount of 0.25 mm or less is approximately -20.6% at 0.05 stroke, which means that the force may be decreased by 20% or more, and when a cam stroke of 0.08mm is applied, the disk spring may experience a decrease in the torque of -30% or more. Accordingly, in the hinge structure 201 of the disclosure, a cam operation amount (e.g., 0.05 mm) of a cam structure (e.g., the first fixed cam portion 241a and the second fixed cam portion 241b, the first cam 244a, and the second cam 244b) that presses the first cam elastic member 242a and the second cam elastic member 242b may be set to be smaller than a cam operation amount (e.g., 0.05 mm) of a cam structure (e.g., the third fixed cam portion 241c and the fourth fixed cam portion 241d, the third cam 244c, and the fourth cam 244d) that presses the third cam elastic member 242c and the fourth cam elastic member 242d. Through the above-described structure, in the hinge structure 201 of the disclosure, the first cam elastic member 242a and the second cam elastic member 242b are set to provide a high surface pressure or torque, and the third cam elastic member 242c and the fourth cam elastic member 242d support providing a more stable detent feeling in an operation of folding or unfolding the foldable electronic device 100. According to an embodiment, spring displacements of the first cam elastic member 242a and the second cam elastic member 242b including the disk springs may be set to be smaller than spring displacements of the third cam elastic member 242c and fourth cam elastic member 242d including the coil spring. Meanwhile, the above-mentioned values are an example and may vary depending on a change in a size of the hinge structure 201, and thus, the disclosure is not limited to the above-mentioned values.

The second support member 248b, for example, may include a first support part 248b_1, into which the first shaft 231 is inserted, a second support part 248b_2, into which the second shaft 232 is inserted, a first central part 248b_3, into which the first gear shaft 238 is inserted, and a second central part 248b_4, into which the second gear shaft 239 is inserted. The first support part 248b_1, the second support part 248b_2, the first central part 248b_3, and the second central part 248b_4 may have a connection structure 241_con. The first support part 248b_1 and the second support part 248b_2 may include holes corresponding to the sizes of z-axis cross sections of the first shaft 231 and the second shaft 232, respectively. The first central part 248b_3 and the second central part 248b_4 may include holes corresponding to the sizes of z axis cross sections of the first gear shaft 238 and the second gear shaft 239, respectively. When the sizes of the z-axis cross-sections of the first gear shaft 238 and the second gear shaft 239 are formed to be smaller than the sizes of the z-axis cross-sections of the first shaft 231 and the second shaft 232, sizes of the holes formed in the first central part 248b_3 and the second central part 248b_4, respectively, may be formed to be smaller than sizes of holes formed in the first support part 248b_1 and the second support part 248b_2, respectively.

The cam member 241 may include a first fixed cam portion 241a that is disposed between the first cam 244a and the third friction member 249b1 to define a first contact angle a1, a second fixed cam portion 241b that is disposed between the second cam 244b and the fourth friction member 249b2 to define the first contact angle a1, a third fixed cam portion 241c that is disposed between the third cam 244c and the first central part 248b_3 of the second support member 248b to define a second contact angle a2, and a fourth fixed cam portion 241d that is disposed between the fourth cam 244d and the second central part 248b_4 of the second support member 248b to define the second contact angle a2.

A through-hole, into which the first shaft 231 may be inserted, may be formed in an interior of the first fixed cam portion 241a. The first fixed cam portion 241a may be maintained in a fixed state even when the first shaft 231 is rotated. In this regard, the through-hole may have a circular z-axis cross-section so that the first shaft 231 may be rotated therein. A cam pattern may be formed on one side (e.g., a side part that faces the y-axis direction) of the first fixed cam portion 241a, and an opposite side (e.g., a direction that faces the -y-axis direction or the third friction member 249b1) of the first fixed cam portion 241a may be formed flat. Alternatively, the opposite side of the first fixed cam portion 241a may have a shape corresponding to the shape of the third friction member 249b1. As an example, when the third friction member 249b1 includes a shape that protrudes in the y-axis direction, at least a portion of the opposite side of the first fixed cam portion 241a may include a shape that is engraved in the y-axis direction. The cam pattern formed at the first fixed cam portion 241a may have a shape (e.g., ridges and valleys having a height and a length that are similar to those of the ridges and the valleys formed in the first cam 244a, and a first magnitude of slope) corresponding to the cam pattern of the first cam 244a. Alternatively, the cam pattern formed at the first fixed cam portion 241a may have a curvature corresponding to that of the cam pattern of the first cam 244a.

The second fixed cam portion 241b may have a structure that is substantially the same as or similar to that of the first fixed cam portion 241a. For example, a through-hole, into which the second shaft 232 may be inserted, may be formed in an interior of the second fixed cam portion 241b. A shape of a z-axis cross-section of the through-hole may include a circular shape so that the second fixed cam portion 241b remains fixed even when the second shaft 232 is rotated. A cam pattern may be formed on one side (e.g., a side part in the y-axis direction) of the second fixed cam portion 241b, and an opposite side (e.g., a side part in the -y axis direction or a side part that faces the fourth friction member 249b2) of the second fixed cam portion 241b is formed flat, or may include a shape (e.g., a shape, a portion of which is depressed or engraved in the -y-axis direction) corresponding to the shape of the fourth friction member 249b2. The cam pattern formed at the second fixed cam portion 241b may have a shape (e.g., ridges and valleys having a height and a length that are similar to those of the ridges and valleys formed in the second cam 244b, and a first magnitude of slope) corresponding to the cam pattern of the second cam 244b. The magnitude of slope of the cam pattern formed at the second fixed cam portion 241b may be the same as or similar to the magnitude of slope of the cam pattern formed at the first fixed cam portion 241a. Alternatively, a curvature of the cam pattern formed at the second fixed cam portion 241b may have a curvature corresponding to that of the cam pattern of the second cam 244b.

The third fixed cam portion 241c may include a connection structure that is disposed between the first fixed cam portion 241a and the second fixed cam portion 241b, is physically connected to the first fixed cam portion 241a, and may be physically connected to the fourth fixed cam portion 241d. **In** various embodiments, the cam member 241 may include a connection structure 241_con that connects at least some or all of the first to fourth fixed cam portions. A through-hole, into which the first gear shaft 238 may be inserted, may be formed in an interior of the third fixed cam portion 241c. Because the third fixed cam portion 241c is connected to the first fixed cam portion 241a, it may be maintained in a fixed state even when the foldable electronic device 100 is hinged in a folded or unfolded state. In this regard, a shape of the through-hole of the third fixed cam portion 241c in the z-axis cross-section may have a circular shape so that the first gear shaft 238 may be rotated therein. A size of the z-axis cross-section of the third fixed cam portion 241c may be smaller than a size of the z-axis cross-section of the first fixed cam portion 241a. However, a z-axis cross-sectional size of the third fixed cam portion 241c of the disclosure may be set to be the same as or larger than a z-axis cross-section of the first fixed cam portion 241a. A cam pattern may be formed on one side (e.g., a side part that faces the y-axis direction) of the third fixed cam portion 241c, and an opposite side (e.g., the -y-axis direction or a direction that faces the first central part 248b_3 of the second support member 248b) of the third fixed cam portion 241c may be formed flat. The cam pattern formed at the third fixed cam portion 241c may have a shape (e.g., ridges and valleys having a height and a length that are similar to those of the ridges and the valleys formed in the third cam 244c, and a second magnitude of slope) corresponding to the cam pattern of the third cam 244c. Alternatively, a curvature of the cam pattern formed at the third fixed cam portion 241c may have a curvature corresponding to that of the cam pattern of the third cam 244c. A second magnitude of slope of the cam pattern formed at the third fixed cam portion 241c (e.g., a magnitude of slope of ridges or valleys) may be formed to be greater than a first magnitude of slope of the cam pattern formed at the first fixed cam portion 241a. Alternatively, the first magnitude of slope may be formed to be gentler than the second magnitude of slope. According to an embodiment, a length of an inclined surface of the ridge of the third fixed cam portion 241c may be formed to be greater than a length of the inclined surface of the ridge of the first fixed cam portion 241a. Alternatively, it may be formed to be smaller (or gentler) than the curve of the cam pattern formed at the third fixed cam portion 241c (or the curvature of the curve of the cam pattern formed in the third cam 244c is the first fixed cam portion 241a (or the first cam 244a)). Alternatively, it may be greater (or sharper) than a curvature of the curve of the cam pattern formed in the first fixed cam portion 241a (or a curvature of the curve of the cam pattern formed on the first cam 244a is the third fixed cam portion 241c (or the third cam 244c)). The inclined surface may be at least portion (or one point) of the curve. Alternatively, at least a portion of an inclined surface may have a curvature.

The fourth fixed cam portion 241d may be disposed between the third fixed cam portion 241c and the second fixed cam portion 241b, and may have a fixed structure that is physically connected to the third fixed cam portion 241c and is physically connected to the second fixed cam portion 241b, and is not rotated. The fourth fixed cam portion 241d may have at least one of the same shape, size, and material as that of the third fixed cam portion 241c. As an example, a size of the z-axis cross-section of the fourth fixed cam portion 241d may be the same as a size of the z-axis cross-section of the third fixed cam portion 241c, and at least a portion of the second gear shaft 239 may be disposed to pass through the circularly formed inner through-hole. The fourth fixed cam portion 241d may have a cam pattern that is formed in a side part that faces the y-axis direction, and may be disposed to be engaged with the fourth cam 244d in response to the rotation of the foldable electronic device 100. The second magnitude of slope formed in the cam pattern of the fourth fixed cam portion 241d may be the same as or similar to the magnitude of slope formed in the third fixed cam portion 241c. Alternatively, the curvature of the curve of the cam pattern of the fourth fixed cam portion 241d may be the same as or similar to the curvature of the curve of the cam pattern formed at the third fixed cam portion 241c. Correspondingly, the second magnitude of slope formed in the cam pattern of the fourth fixed cam portion 241d may be set to be greater than a magnitude of slope formed at the first fixed cam portion 241a (or the second fixed cam portion 241b). A length of the inclined surface of the ridge in the cam pattern of the fourth fixed cam portion 241d may be formed to be the same as a length of the inclined surface of the ridge in the cam pattern of the third fixed cam portion 241c. Correspondingly, a length of the inclined surface of the ridge in the cam pattern of the fourth fixed cam portion 241d may be formed to be greater than a length of the inclined surface of the ridge in the cam pattern of the second fixed cam portion 241b. Alternatively, it may be smaller (or gentler) than a curvature of the curve of the cam pattern formed at the fourth fixed cam portion 241a (or a curvature of the curve of the cam pattern formed on the fourth cam 244d is the second fixed cam portion 241b (or the second cam 244b)). Alternatively, it may be greater (or sharper) than a curvature of the curve of the cam pattern formed in the second fixed cam portion 241b (or a curvature of the curve of the cam pattern formed on the second cam 244b is the fourth fixed cam portion 241d (or the fourth cam 244d)).

The cams 244a, 244b, 244c, and 244db may include a first cam 244a that is disposed between the first cam elastic member 242a and the first fixed cam portion 241a, a second cam 244b that is disposed between the second cam elastic member 242b and the second fixed cam portion 241b, a third cam 244c that is disposed between the third cam elastic member 242c and the third fixed cam portion 241c, and a fourth cam 244d that is disposed between the fourth cam elastic member 242d and the fourth fixed cam portion 241d.

The first shaft 231 may be inserted into the first cam 244a. An internal shape of the first cam 244a may have a shape (e.g., at least a portion of which is a "D"-cut shape) corresponding to a z-axis cross-sectional shape of the first shaft 231 to be rotated in response to the rotation of the first shaft 231. The first cam 244a may include a cam pattern (or a cam structure) corresponding to the first fixed cam portion 241a. For example, the first cam 244a includes ridges and valleys of a shape that area opposite to (or a shape to be engaged with) the ridges and valleys formed in the first fixed cam portion 241a, and a magnitude of slope of the first cam 244a may be the same as or similar to a magnitude of slope (e.g., a first magnitude of slope) of the first fixed cam portion 241a. The first cam 244a may perform a cam operation with the first fixed cam portion 241a by an elastic force provided by the first cam elastic member 242a.

The second shaft 232 may be inserted into the second cam 244b. An internal shape of the second cam 244b may have a shape (e.g., at least a portion thereof is a "D"-cut shape) corresponding to a z-axis cross-sectional shape of the second shaft 232 to be rotated in response to the rotation of the second shaft 232. The second cam 244b may include a cam pattern (or a cam structure) corresponding to the second fixed cam portion 241b. As an example, the second cam 244b may have a magnitude of slope that is the same as an absolute value of the magnitude of slope of the ridge of the second fixed cam portion 241b, or a magnitude of slope (e.g., a first magnitude of slope) that is the same as the magnitude of slope of the first cam 244a. The second cam 244b may perform a cam operation with the second fixed cam portion 241b by an elastic force provided by the second cam elastic member 242b. The first cam 244a and the second cam 244b may be pressed by the first cam elastic member 242a and the second cam elastic member 242b that are configured to implement a relatively strong torque compared to the third cam 244c and the fourth cam 244d. When the cam contact angle (e.g., the first contact angle a1) of the first cam structures (e.g., the first cam 244a and the second cam 244b, and the first fixed cam portion 241a and second fixed cam portion 241b) is set to 20 degrees or less, a large deviation may not occur even with a movement amount of less than 0.05 to 0.1 mm (a decrease in a torque of 20% or less). **In** a process of closing the housings due to a repulsive force (the repulsive force, by which the flexible display is to be unfolded) of the flexible display (the flexible display 160 of FIG. 2) that is raised when the foldable electronic device 100 is closed (folded), the cam contact angle (e.g., the first contact angle a1) applied to the first cam structure may serve to decrease the torque by increasing a spring compression length so that the user does not use a high force, and may serve to decrease a surface pressure to within 20% to improve a situation, in which the user cannot have a feeling (a detent, to be felt that it is opened) of the user is trying to unfold the foldable electronic device 100 due to a strong surface pressure when the foldable electronic device 100 is opened (unfolded).

The first gear shaft 238 may be inserted into the third cam 244c. An internal shape of the third cam 244c may have a shape (e.g., at least a portion thereof is a "D"-cut shape) corresponding to a z-axis cross-sectional shape of the first gear shaft 238 to be rotated in response to the rotation of the first gear shaft 238. The third cam 244c may include a cam pattern (or a cam structure) corresponding to the third fixed cam portion 241c. For example, the third cam 244c may include ridges and valleys of a shape opposite to (or a shape disposed to be engaged with) the ridges and valleys formed in the third fixed cam portion 241c, and a magnitude of slope of the third cam 244c may correspond to a magnitude of slope (e.g., the second magnitude of slope) of the third fixed cam portion 241c. The third cam 244c may perform a cam operation with the third fixed cam portion 241c by an elastic force provided by the third cam elastic member 242c.

The second gear shaft 239 may be inserted into the fourth cam 244d. An internal shape of the fourth cam 244d may have a shape (e.g., at least a portion thereof is a "D"-cut shape) corresponding to a z-axis cross-sectional shape of the second gear shaft 239 to be rotated in response to the rotation of the second gear shaft 239. The fourth cam 244d may include a cam pattern (or a cam structure) corresponding to the fourth fixed cam portion 241d. As an example, the fourth cam 244d may have a magnitude of slope that is the same as an absolute value of the magnitude of slope of the ridge of the fourth fixed cam portion 241d, or a magnitude of slope (e.g., a second magnitude of slope) that is the same as the magnitude of slope of the third cam 244c. The fourth cam 244d may perform a cam operation with the fourth fixed cam portion 241d by the elastic force provided by the fourth cam elastic member 242d. As described above, the second cam structure (e.g., the third cam 244c and the fourth cam 244d, and the third fixed cam portion 241c and the fourth fixed cam portion 241d) may have a contact angle (e.g., the second contact angle a2) that is larger (rapid), compared to the contact angle of the first cam structure (e.g., the first contact angle a1). According to an embodiment, in the unfolded state of the foldable electronic device 100, the unfolded state may be maintained and supported by setting the contact angle (e.g., the second contact angle a2) of the second cam structure to 35 degrees or more. As an example, a sufficient cam stroke may be provided due to a coil spring basic compression amount (or a compressible amount) of 2.0 mm or more, and thus, the hinge structure 201 of the disclosure may implement a detent without much difficulty despite a rotational deviation of the axes that are disposed on opposite sides with respect to a horizontal center line of the fixing bracket 213. The description of the formation of the above-described first contact angle a1 and second contact angle a2 and the resulting operation state of the hinge structure 201 may be applied in the same way or similarly to other hinge structures that will be described below or to the hinge structures described above.

Referring to FIGS. 1 to 8, as in 801 and graph 802, angles for torque changes (e.g., 801a and 801b) by the first cam structure (e.g., the first cam 244a and the second cam 244b, and the first fixed cam portion 241a and the second fixed cam portion 241b) may be gentle as compared with angles for torque changes 802a and 802b by the second cam structure (e.g., the third cam 244c and the fourth cam 244d, and the third fixed cam portion 241c and the fourth fixed cam portion 241d). Accordingly, a first cam structure having a relatively gentle cam contact angle (e.g., the first contact angle a1) compared to a cam contact angle (e.g., the second contact angle a2) of the second cam structure may reduce a torque deviation due to the formation of the gentle angle. Alternatively, as in graph 801 and graph 802, torque changes 802a and 802b due to the second cam structure (e.g., the third cam 244c and the fourth cam 244d, and the third fixed cam portion 241c and the fourth fixed cam portion 241d) may have a relatively sharp cam contact angle (e.g., the second contact angle a2) to support implementation of a detent during the folding and unfolding operations due to the rapid angle changes, compared to torque changes (e.g., 801a and 801b) by the first cam structure (e.g., the first cam 244a and the second cam 244b, and the first fixed cam portion 241a and the second fixed cam portion 241b). The torque changes 801a and 801b due to the first and second elastic members 242a and 242b and the first cam structure, and the torque changes 802a and 802b due to the third and fourth elastic members 242c and 242d and the second cam structure may include a part of the torque change while the foldable electronic device is unfolded from a fully folded state to a specific angle (e.g., an angle of less than 180 degrees) or is changed from a specific angle state to a fully unfolded state (e.g., 180 degrees).

As a result, as shown in graph 803 illustrating the final torque changes 803a and 803b due to the elastic members, and the first cam structure and the second cam structure, the hinge structure 201 may stably support the housings by using a high torque at a bending angle of greater than 0 degrees and less than 180 degrees while providing a stable sense of detent in the folded or unfolded state of the foldable electronic device 100, by using a torque, in which the torque changes 801a and 801b due to the gentle cam contact angle (e.g., the first contact angle a1) of the first cam structure, and the torque changes 802a and 802b by the sharp cam contact angle (e.g., the second contact angle a2) of the second cam structure are integrated.

As described above, the hinge structure 201 according to an embodiment may be configured such that the cam contact angle (e.g., the first contact angle a1) of the first cam structure (e.g., the first cam 244a and the second cam 244b, and the first fixed cam portion 241a and the second fixed cam portion 241b) is formed to be gentle while providing a high surface-pressure structure, by using the first cam elastic member 242a and the second cam elastic member 242b that are fastened to the first shaft 231 and the second shaft 232 and include disk springs that may generate a surface pressure that is greater than that of the coil spring. The hinge structure 201 according to an embodiment may support a stable detent function based on a second cam structure (e.g., the third cam 244c and the fourth cam 244d, and the third fixed cam portion 241c and the fourth fixed cam portion 241d) that is fastened to the first gear shaft 238 and the second gear shaft 239, and has a coil spring that has a large basic compression amount to provide a sufficient cam stroke compared to the disk spring and a cam contact angle (e.g., the second contact angle a2) that is more rapid than that of the first cam structure. According to an embodiment, the curvatures of the curves formed in the third cam 244c and the fourth cam 244d, and the third fixed cam portion 241c and the fourth fixed cam portion 241d may be formed to be greater than the curvatures of the curve formed in the first cam 244a and the second cam 244b, and the first fixed cam portion 241a and the second fixed cam portion 241b so that the contact angle (e.g., the second contact angle a2) of the second cam structure may be formed to be greater than the contact angle (e.g., the first contact angle a1) of the first cam structure.

The hinge structure 201 may provide a strong torque through the first and second elastic members 242a and 242b, and the first cam structure, and may provide a stable detent function through the third and fourth elastic members 242c and 242d, and the second cam structure whereby a cam profile (or a shape) that is suitable for implementing the functions may be applied thereto, and shortcomings of the cam structures may be offset through an integrated operation of the torques of the cam structures.

As described above, the first type elastic member (e.g., the first cam elastic member 242a and the second cam elastic member 242b that provide an elastic force of a first magnitude) in a form of a disk spring may provide an elastic force (or a compressive force) of a different magnitude from that of an elastic member (e.g., the third cam elastic member 242c and the fourth cam elastic member 242d that provide an elastic force of a second magnitude) in a form of a second type coil spring. As an example, the elastic force of the first magnitude that is provided by the first type elastic members (e.g., the first and second elastic members 242a and 242b) to the first cam structure (e.g., the first fixed cam portion 241a and the second fixed cam portion, and the first cam 244a and the second cam 244b) may be higher than the elastic force of the second magnitude that is provided by the second type elastic members (the third and fourth elastic members 242c and 242d) to the second cam structure (e.g., the third fixed cam portion 241c and the fourth fixed cam portion 241d, and the third cam 244c and the fourth cam 244d). Because the contact angle (e.g., the first contact angle a1) state of the first cam structure and the contact angle (e.g., the second contact angle a2) state of the second cam structure are formed differently depending on the folded state, the unfolded state, or a holding state at a specific angle (e.g., a flex mode state or a detent mode) of the hinge structure 201, a contribution (or a magnitude of a force, a fixing force that maintains the foldable electronic device 100 in a specific holding state, or a stopping force that prevents the foldable electronic device 100 from changing the angle thereof in a specific holding state) which the first type elastic members and the second type elastic members contribute to a specific state may be different. When the foldable electronic device 100 is in the flex mode state, at least one of the first type elastic member that compresses the first cam structure and the second type elastic member that compresses the second cam structure may have a maximumly compressed state (a state of no further compression or no additional deformation).

According to an embodiment, the first and second elastic members 242a and 242b in the form of disk springs may provide the elastic force of the first magnitude to the first cam structure (e.g., the first cam 244a and the second cam 244b, and the first fixed cam portion 241a and the second fixed cam portion 241b) in a state, in which the foldable electronic device 100 is folded at a specific angle whereby the hinge structure 201 may provide a force that maintains the foldable electronic device 100 in the folded state of a specific angle. Alternatively, when the foldable electronic device 100 is folded at a specific angle, the elastic members (e.g., the first cam elastic member 242a and the second cam elastic member 242b) in the form of a disk spring may provide a stopping force that prevents a folding angle of the foldable electronic device 100 from being changed. The specific angle is an angle in the flex mode state, and, for example, may include an angle that is smaller than 180 degrees and greater than 0 degrees, or an angle that is smaller than 170 degrees (or 160 degrees) and greater than 10 degrees (or 20 degrees). Here, a specific angle, such as 180 degrees, 170 degrees, 160 degrees, 20 degrees, 10 degrees, or 0 degrees, is an example, and may vary depending on a change in design of the foldable electronic device.

As an example, referring to FIG. 7, when the foldable electronic device 100 is folded at a specific angle (e.g., while the angle between the first housing 110 and the second housing 120 is less than 180 degrees and greater than 0 degrees, or during an folding operation, or during a flex mode, as an example, while the specific folding angle or the specified opening angle of the foldable electronic device 100 is between 10 degrees and 160 degrees), in the hinge structure 201, an upper end (a flat portion or a portion with a specific slope) of the first fixed cam portion 241a (or the second fixed cam portion 241b) and an upper end the first cam 244a (or the second fixed cam portion 241b) may be in contact with each other. In the folded state, (or the state, in which the foldable electronic device 100 is folded or unfolded at a specific angle) of a specific angle, a high surface pressure may be formed by the first cam elastic member 242a (or the second cam elastic member 242b) that provides a high elastic force, compared to the third cam elastic member 242c (or the fourth cam elastic member 242d). The high surface pressure caused by the first cam structure may contribute more to maintaining a specific angle (e.g., the angle between the first housing 110 and the second housing 120 of less than 180 degrees and greater than 0 degrees) such that the specific angle of the foldable electronic device 100 is not changed to another angle, compared to the second cam structure.

As an example, as illustrated in FIG. 7, when the foldable electronic device 100 is in an unfolded state (e.g., a state, in which the angle between the first housing 110 and the second housing 120 is 180 degrees) (or while the unfolded state is maintained), in the hinge structure 201, the first contact angle a1 (or a contact inclination angle) (or the first contact angle a1 of the first cam structure), in which the first fixed cam portion 241a and the first cam 244a are in contact with each other and the second fixed cam portion 241b and the second cam 244b are in contact each other may be smaller than the second contact angle a2 (or a contact inclination angle) (or the second contact angle a2 of the second cam structure), in which the third fixed cam portion 241c and the third cam 244c are in contact with each other and the fourth fixed cam portion 241d and the fourth cam 244d are in contact with each other. Alternatively, the hinge structure 201 may have a state, in which the second contact angle a2 of the second cam structure is greater than the first contact angle a1 of the first cam structure. In this state, even though the elastic forces of the third cam elastic member 242c and the fourth cam elastic member 242d are lower than those of the first cam elastic member 242a and the second cam elastic member 242b, the second cam structure may contribute more to maintaining the unfolded state of the hinge structure 201 depending on the magnitude of slope of the second contact angle a2 described above, compared to the first cam structure.

According to an embodiment, when the foldable electronic device 100 is in a fully folded state (e.g., a state, in which the angle between the first housing 110 and the second housing 120 is 0 degrees, or a state of being parallel in a shape of 11) (or while the folded state is maintained), the second contact angle a2 of the second cam structure of the hinge structure 201 may have a greater magnitude of slope than the first contact angle a1 of the first cam structure. Accordingly, when the foldable electronic device 100 is in a fully folded state, the third cam elastic member 242c and the fourth cam elastic member 242d, and the second cam structure may contribute more to maintaining the hinge structure 201 in a folded state, compared to the first cam elastic member 242a and the second cam elastic member 242b, and the first cam structure. Alternatively, when the foldable electronic device 100 is in a fully folded state, the third cam elastic member 242c and the fourth cam elastic member 242d, and the second cam structure may contribute more to offsetting a repulsive force, by which the display 160 is to be unfolded, compared to the first cam elastic member 242a and the second cam elastic member 242b, and the first cam structure.

As described above, when the foldable electronic device 100 is changed from the folded state to the unfolded state (or is changed from the unfolded state to the folded state), the first cam structure pressed by the first type elastic members (e.g., the first cam elastic member 242a and the second cam elastic member 242b) may have a first cam stroke and a contact angle (e.g., the first contact angle a1) of the cam pattern of the first magnitude, and the second cam structure pressed by the second type elastic members (e.g., the third cam elastic member 242c and the fourth cam elastic member 242d) may have a second cam stroke and a contact angle (e.g., the second contact angle a2) of the cam pattern of the second magnitude. The first cam stroke and the first contact angle a1 of the first cam structure and the second cam stroke and the second contact angle a2 of the second cam structure may depend on the various holding angle states, the unfolded state, and the folded state of the foldable electronic device 100.

According to an embodiment, while the foldable electronic device 100 is maintained in the flex mode, the first type elastic members (the first and second elastic members 242a and 242b) and the first cam structure may contribute more (a contribution force is greater) to maintaining the flex mode of the foldable electronic device 100, based on a higher elastic force than that of the second type elastic members (the third and fourth elastic members 242c and 242d) and the second cam structure. In the flex mode, the first contact angle a1 of the first cam structure and the second contact angle a2 of the second cam structure may be the same (e.g., 0 degrees or a horizontal state), and the first cam stroke and the second cam stroke are the same.

According to an embodiment, when the shapes of the upper end portions of the cams of the first cam structure and the second cam structure are all flat, the first contact angle a1 of the first cam structure and the second contact angle a2 of the second cam structure may be 0 degrees or in a horizontal state in the flex mode. When the shapes of the cam upper end portions of the first cam structure and the second cam structure are formed to have a magnitude of slope that is greater than 0 degrees, the first contact angle a1 of the first cam structure and the second contact angle a2 of the second cam structure may have a state other than 0 degrees or a horizontal state in flex mode. Alternatively, when an upper end of the cam of the first cam structure is formed to be flat and an upper end of the cam of the second cam structure is formed to have a magnitude of slope that is greater than 0, the second cam structure may be in a contact state, in which the cam and the fixed cam portion may be magnitudes of slope that are greater than 0 degrees while the first cam structure has a contact state, in which the cam and the fixed cam portion are horizontal, in the flex mode. The magnitude of slope of an upper end of the cam may have a value that is smaller than the slope of magnitude of a side inclined portion that is adjacent to the upper end of the cam. Alternatively, the upper end of the cam may be formed more gently than the inclined portion of the cam.

According to an embodiment, while the foldable electronic device 100 is maintained in a fully folded state (a close mode) or a fully unfolded state (an open mode), the second cam structure having a contact angle (e.g., the second contact angle a2) that is greater than the contact angle (e.g., the first contact angle a1) of the first cam structure may contribute more to maintaining the fully folded state or the fully unfolded state, compared to the first cam structure. For example, when the display 160 is maintained in the folded state for a specific time period or more, a folding characteristic (or a force) may occur when the display 160 is fully unfolded, and the large contact angle (e.g., the second contact angle a2) of the second cam structure may contribute more than the first cam structure to offsetting the feature of the display 160 being to be folded again. In the fully folded state or the fully unfolded state, the first cam stroke of the first cam structure may be shorter than the second cam stroke of the second cam structure, and the first contact angle may be formed to be smaller than the second contact angle. Alternatively, the second cam stroke of the second cam structure may be greater than the first cam stroke of the first cam structure, and the second contact angle a2 may be formed to be greater than the first contact angle a1.

According to an embodiment, while the foldable electronic device 100 in a specific holding angle state (or a specific folded angle state, and for example, an open state at an angle between 160 and 10 degrees) is changed to a fully folded state, the contact angle (e.g., the first contact angle a1) of the first cam structure may deviate from 0 degrees (or a horizontal state) shortly before the foldable electronic device 100 is completely folded, and has a magnitude of slope other than 0 whereby the torques provided by the first type elastic members and the first cam structure may be decreased and thus, the user may fold the foldable electronic device 100 with a less force. Additionally or alternatively, magnetic members provided in the foldable electronic device may contribute to the foldable electronic device 100 being completely folded.

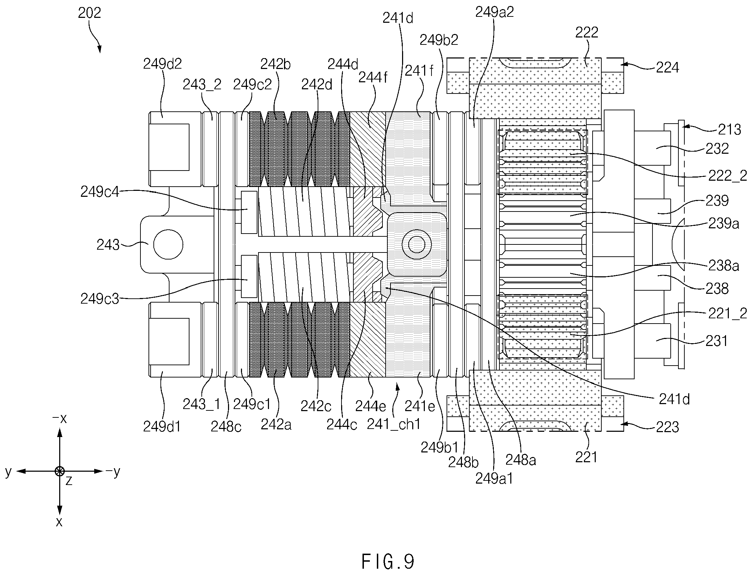

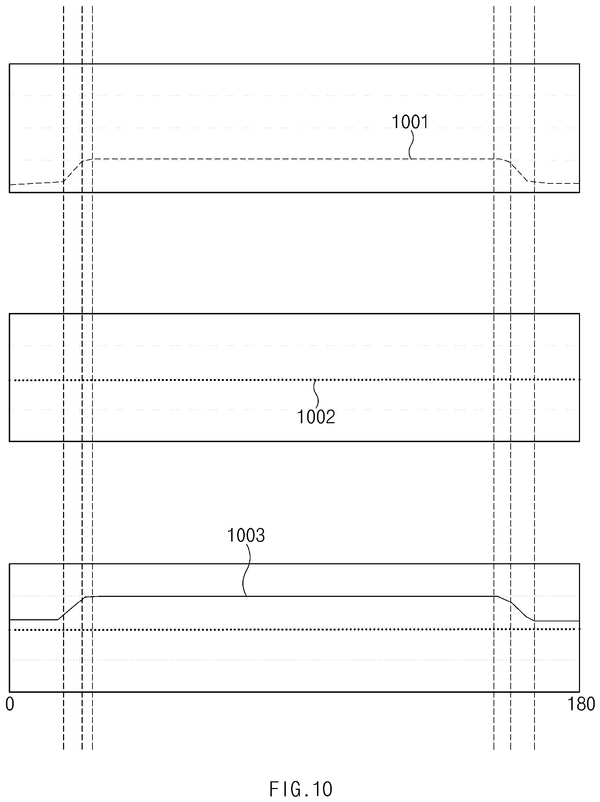

According to an embodiment, while the foldable electronic device 100 in a specific holding angle state is changed to a fully unfolded state, the contact angle (e.g., the first contact angle a1) of the first cam structure may deviate from 0 degrees (or a horizontal state) shortly before the foldable electronic device 100 is completely unfolded, and has a magnitude of slope other than 0 whereby the torques provided by the first type elastic members and the first cam structure may be decreased and thus, the user may unfold the foldable electronic device 100 with a less force. Thereafter, when the contact angle (e.g., the second contact angle a2) of the second cam structure deviates from 0 degrees (or a horizontal state) and has a non-zero magnitude of slope, the second type elastic members press the second cam structure having a contact angle (e.g., the second contact angle a2) having a non-zero magnitude of slope, and thus, the user may fully unfold the foldable electronic device 100 with a less force. FIG. 9 is a view illustrating an example of another form of the cam member and the cams in the hinge structure according to an embodiment. FIG. 10 is a view illustrating a change in torque in a process of unfolding and folding the hinge structure illustrated in FIG. 9.

Referring to Figures 1 to 9, the hinge structure 202 according to an embodiment may include the fixing bracket 213, the first arm member 221, the second arm member 222, the first shaft 231, the second shaft 232, the first gear shaft 238, the second gear shaft 239, a modified cam member 241_ch1, a modified cams 244e, 244f, 244c, and 244d, the cam elastic members 242a, 242b, 242c, and 242d, the plurality of friction members 249a1, 249a2, 249b1, 249b2, 249c1, 249c2, 249c3, and 249c4, the plurality of support members 248a, 248b, and 248c, the shaft fixing part 243, and the fixing nuts 249d1 and 249d2. Additionally, the hinge structure 202 may further include a first rotation member (e.g., the first rotation member 211 of FIG. 3) and a second rotation member (e.g., the second rotation member 212 of FIG. 3) that are coupled to the fixing bracket 213, and may further include a first link member (e.g., the first link member 215 of FIG. 3), to which the first rotation member is coupled, a second link member (e.g., the second link member 216 of FIG. 3), to which the second rotation member is coupled, a third link member (e.g., the third link member 223 of FIG. 3), to which the first arm member 221 is coupled, and a fourth link member (e.g., the fourth link member 224 in FIG. 3), to which the second arm member 222 is coupled. At least some of, among the components of the above-described hinge structure 202, the remaining components other than the modified cam member 241_ch1 and the modified cams 244e, 244f, 244c, and 244d may having substantially the same configurations and functions that those described above in FIGS. 3 to 7. Accordingly, the components other than the modified cam member 241_ch1 and modified cams 244e, 244f, 244c, 244d will be replaced with the contents described above.

The modified cam member 241_ch1 may include a first modified cam portion 241e, a second modified cam portion 241f, a third fixed cam portion 241c, and a fourth fixed cam portion 241d. Here, the third fixed cam portion 241c and the fourth fixed cam portion 241d may have the same configurations as those of the third fixed cam portion 241c and the fourth fixed cam portion 241d described above in FIGS. 3 to 7.

A through-hole, into which the first shaft 231 may be inserted, may be formed in an interior of the first modified cam portion 241e. The first modified cam portion 241e may have a through-hole having a circular z axis cross-section so that it remains fixed even when the first shaft 231 is rotated. One side (e.g., a side part that faces the y-axis direction) of a first modified cam portion 241e may be formed flat, and an opposite side (e.g., the -y-axis direction or a direction that faces the third friction member 249b1) of the first modified cam portion 241e may be formed flat or may have a shape corresponding to the shape of the third friction member 249b1.

The second modified cam portion 241f may have the same size and shape as those of the first modified cam portion 241e. The second modified cam portion 241f may be disposed to be symmetrical to the first modified cam portion 241e with respect to a horizontal center line of the fixing bracket 213. As an example, a through-hole, into which the second shaft 232 may be inserted, may be formed in an interior of the second modified cam portion 241f, and at least a portion of the z-axis cross-section may include a "D"-cut shape (or an angled shape). One side (e.g., a side part that faces the y-axis direction) of the second modified cam portion 241f may be formed flat in the same way as the first modified cam portion 241e, and an opposite side (e.g., the -y-axis direction or a direction that faces the fourth friction member 249b2) of the second modified cam portion 241f may be formed flat or may have a shape corresponding to the shape of the fourth friction member 249b2.

The modified cams 244e, 244f, 244c, and 244d may include a first modified cam 244e), a second modified cam 244f, a third cam 244c, and a fourth cam 244d. The third cam 244c and the fourth cam 244d may have a structure and a size that are the same as or similar to those of the third cam 244c and fourth cam 244d described above in FIGS. 3 to 7. Accordingly, the description of the third cam 244c and the fourth cam 244d may be replaced with the contents described above.

The first modified cam 244e may include a through-hole, in which the first shaft 231 is inserted inside, and of which at least a portion of the z-axis cross-section is angled to be rotated in response to the rotation of the first shaft 231. The first modified cam 244e may be brought into contact with the first modified cam portion 241e by the elastic force provided by the first cam elastic member 242a. The first modified cam 244e may have a flat side part that faces the first modified cam portion 241e. Accordingly, the first modified cam 244e may be in contact with the first modified cam portion 241e in a flat state. Alternatively, a contact angle between the first modified cam 244e and the first modified cam portion 241e may correspond to 0 degrees.

The second modified cam 244f may include a through-hole, in which the second shaft 232 is inserted inside, and of which at least a portion of the z-axis cross-section is angled to be rotated in response to the rotation of the second shaft 232. This second modified cam 244f may have a size and a structure that are the same as or similar to those of the first modified cam 244e described above. The second modified cam 244f, for example, may be disposed to be symmetrical to the first modified cam 244e with respect to a horizontal center line of the fixing bracket 213. The second modified cam 244f may be brought into contact with the second modified cam portion 241f by the elastic force provided by the second cam elastic member 242b, and the contact angle may be 0 degrees or be in a horizontal contact.

Referring to FIG.10, as in graph 1001, the torque due to the second cam structure (e.g., the third cam 244c and the third fixed cam portion 241c, and the fourth cam 244d and the fourth fixed cam portion 241d) may remain constant after the torque due to the cam operation increases when the folded state (e.g., a state, in which the angle between the housings is 0 degrees) is changed to the bent state (a state, in which the angle between the housings is greater than 0 degrees but less than 180 degrees), and the torque may decrease as the bent state is changed to the unfolded state (e.g., the angle between the housings is 180 degrees). The torque change due to the second cam structure may be the same as in graph 801 described above in FIG. 8.

As in graph 1002, the torque due to the first modified cam structure (e.g., the first modified cam 244e and the first modified cam portion 241e, and the second modified cam 244f and the second modified cam portion 241f) may be maintained constantly as illustrated, because the contact angle of the cams remains constant.

Accordingly, as in graph 1003, the integrated torque due to the torque change by the first modified cam structure and the torque change by the second cam structure may be a value, in which the torque change provided by the second cam structure is added to the constant torque provided by the first modified cam structure.

As described above, there is no need to provide a torque change through the first modified cam structure when a support for the flex mode is required in most sections from 0 degrees to 180 degrees, the first modified cam structure, in which the torque is provided by the disk springs, provides a constant surface pressure that is not changed due to a cam operation while being responsible only for a surface pressure of a specific level or more whereby the hinge structure 202 may implement an unfolding or closing (or folding) detent by using the second cam structure.

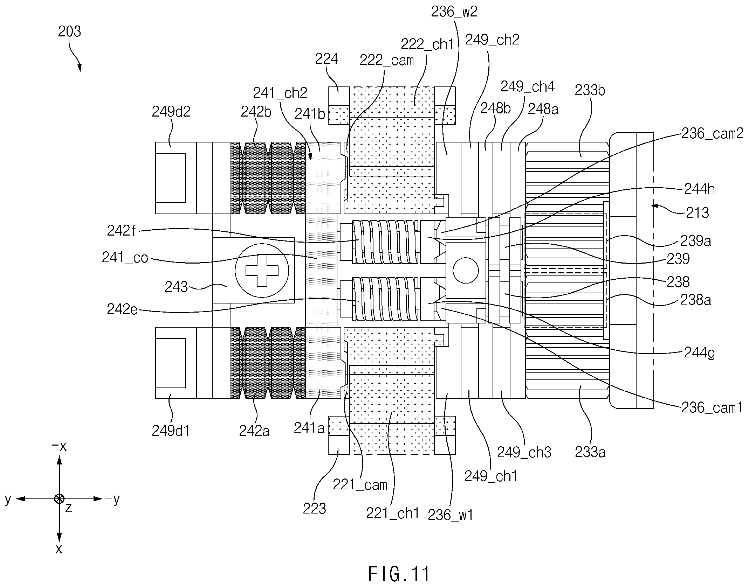

FIG. 11 is a view illustrating an example of the hinge structure, in which the positions of the cam member and cams in the hinge structure according to an embodiment are changed.

Referring to FIGS. 1 to 11, a hinge structure 203 according to an embodiment may include a fixing bracket 213, a first modified arm member 221_ch1, a second modified arm member 222_ch1, a plurality of friction members 249_ch1, 249_ch2, 249_ch3, and 249_ch4, a plurality of support members 248a and 248b, a shaft fixing part 243, fixing nuts 249d1 and 249d2, a first cam elastic member 242a, a second cam elastic member 242b, a third modified cam elastic member 242e, a fourth modified cam elastic member 242f, a first cam member 241_ch2, a second cam member 246_ch, a first main gear 233a (or a first modified main gear), a second main gear 233b (or a second modified main gear), a first gear 238a, and a second gear 239a. Additionally, the hinge structure 203 may further include a first shaft (the first shaft 231 of FIG. 3), in which the first main gear 233a is formed (or fastened), a second shaft (the second shaft 232 of FIG. 3) , in which the second main gear 233b is formed (or fastened), a first gear shaft 238, in which the first gear 238a is formed (or fastened), and a second gear shaft 239, in which the first gear 238a is formed ( or fastened). Furthermore, the hinge structure 203 may further include a third link member (the third link member 223 of FIG. 3), to which the first modified arm member 221_ch1 is coupled, and a fourth link member (the fourth link member 224 of FIG. 3), to which the second modified arm member 222_ch1 is coupled, and may further include a first rotation member that is rotated in response to the rotation of the first modified arm member 221_ch1 and a first link member, to which the first rotation member is coupled, and a second rotation member that is rotated in response to the rotation of the second modified arm member 222_ch1 and a second link member to which the second rotation member is coupled.

The first modified arm member 221_ch1 may be disposed between one side (e.g., the first fixed cam portion 241a) of the first cam member 241_ch2 and a wing of one side of the second cam member 246_ch. The first modified arm member 221_ch1 may include a first arm cam 221_cam that is disposed in a direction that faces the first cam member 241_ch2. A first shaft (e.g., the first shaft 231 of FIG. 3) may be disposed in an inside of the first modified arm member 221_ch1 to pass therethrough, and may be rotated in one direction (e.g., clockwise or counterclockwise) in response to the rotation of the first shaft. In this process, the first modified arm member 221_ch1 may perform a cam operation by the elasticity of the first cam elastic member 242a that provides elasticity to the first fixed cam portion 241a of the first cam member 241_ch2.

The second modified arm member 222_ch1 may be disposed between an opposite side (e.g., the second fixed cam portion 241b) of the first cam member 241_ch2 and a wing of an opposite side of the second cam member 246_ch. The second modified arm member 222_ch1 may include a second arm cam 222_cam that is disposed in a direction that faces the second fixed cam portion 241b of the first cam member 241_ch2. A second shaft (e.g., the second shaft 232 of FIG. 3) may be disposed in an inside of the second modified arm member 222_ch1 to pass therethrough, and may be rotated in one direction (e.g., counterclockwise or clockwise) in response to the rotation of the second shaft. In this process, the second modified arm member 222_ch1 may perform a cam operation by the elasticity of the second cam elastic member 242b that provides elasticity to the second fixed cam portion 241b.

The first cam member 241_ch2 may include a first fixed cam portion 241a, into which the first shaft (e.g., the first shaft 231 of FIG. 3) is inserted, a second fixed cam portion 241b, into which the second shaft (e.g., the second shaft 232 of FIG. 3) is inserted, and a cam connecting portion 241_co that connects the first fixed cam portion 241a and the second fixed cam portion 241b. The cam connecting portion 241_co may include grooves that support sides of the first gear shaft 238 and the second gear shaft 239.

The second cam member 246_ch may include a first wing 236_w1, into which the first shaft (e.g., the first shaft 231 of FIG. 3) is inserted, a second wing 236_w2, into which the second shaft (e.g., the second shaft 232 of FIG. 3) is inserted, and a third fixed cam portion 236_cam1 and a fourth fixed cam portion 236_cam2 that are disposed between the first wing 236_w1 and the second wing 236_w2. The first wing 236_w1, the second wing 236_w2, the third fixed cam portion 236_cam1, and the fourth fixed cam portion 236_cam2 may be connected to each other. The first wing 236_w1 and the second wing 236_w2) may serve to support the friction members (e.g., 249_ch1 and 249ch_2). At least a portion of the first gear shaft 238 may be disposed in an interior of the third fixed cam portion 236_cam1 to pass therethrough, and at least a portion of the second gear shaft 239 is disposed in an interior of the fourth fixed cam portion 236_cam2 to pass therethrough.

The third modified cam elastic member 242e and the third cam 244g may be fastened to the first gear shaft 238. The third cam 244g may be pressed toward the third fixed cam portion 236_cam1 by the elastic force of the third modified cam elastic member 242e. Central sides of the plurality of support members 248a and 248b may be inserted into the first gear shaft 238.

The fourth modified cam elastic member 242f and the fourth cam 244h may be fastened to the second gear shaft 239. The fourth cam 244h may be pressed toward the fourth fixed cam portion 236_cam2 by the elastic force of the fourth modified cam elastic member 242f. Central opposite sides of the plurality of support members 248a and 248b may be inserted into the first gear shaft 238.

As described above, in the hinge structure 203, the first cam elastic member 242a and the second cam elastic member 242b of the disk spring type may press the first cam member 241_ch2 of the fixed type, and the arm cams 221_cam and 221_cam formed on the modified arm members 221_ch1 and 222_ch2 and the first cam member 241_ch2 may perform a cam operation. In the hinge structure 203 described above, the plurality of friction members 249_ch1, 249_ch2, 249_ch3, and 249_ch4 and the plurality of support members 248a and 248b may be fastened to the first shaft (e.g., the first shaft 231 of FIG. 3) that passes through the first cam elastic member 242a, the first cam member 241_ch2, and the first arm cam 221_cam, and the second shaft (e.g., the second shaft 232 of FIG. 3) that passes through the second cam elastic member 242b, the second cam member 246_ch, and the second arm cam 222_cam to provide a strong torque due to a high surface pressure. Additionally, the third modified cam elastic member 242e and the fourth modified cam elastic member 242f of the coil spring type may be disposed at other positions of the hinge structure 203 while deviating from the structure that is adjacent to the first cam elastic member 242a and the second cam elastic member 242b described in FIG. 3.

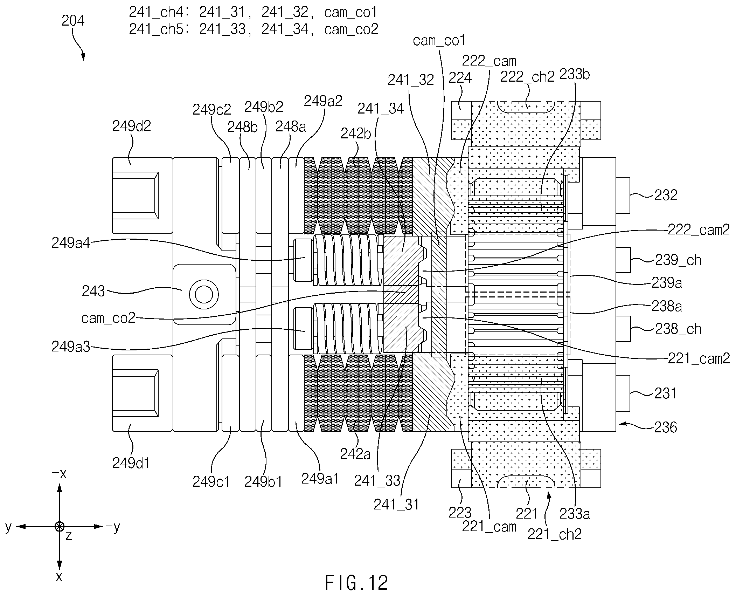

FIG. 12 is a view illustrating an example of the hinge structure, in which the positions of the cams in the hinge structure according to an embodiment are changed.

Referring to FIGS. 1 to 12, a hinge structure 204 according to an embodiment may include a third modified arm member 221_ch2, in which the first arm cam 221_cam (or the first cam of the first modified arm member) is disposed, and a third link member 223, and a fourth modified arm member 222_ch2, in which the second arm cam 222_cam is disposed, and a fourth link member 224, a first gear 238a and a third modified cam 221_cam2, a second gear 239a and a fourth modified cam 222_cam2, a plurality of friction members 249a1, 249a2, 249b1, 249b2, 249c1, and 249c2, a plurality of support members 248a and 248b, a gear bracket 236, a first cam member 241_ch4 and a second cam member 241_ch5, a shaft fixing part 243, fixing nuts 249d1 and 249d2, cam elastic members 242a, 242b, 242c, and 242d, first and second shafts 231 and 232, and first and second modified gear shafts 238_ch and 239_ch. Additionally, as described above in FIG. 3, the hinge structure 204 may further includes a fixing bracket (e.g., the fixing bracket 213 of FIG. 3), a first rotation member (e.g., the first rotation member 211 of FIG. 3), and a second rotation member (e.g., the second rotation member 212 of FIG. 3), a first link member (e.g., the first link member 215 of FIG. 3), and a second link member (e.g., the second link member 216 of FIG. 3).

The first arm cam 221_cam may be disposed on one side (e.g., a direction that faces the y axis or a direction, in which the first cam elastic member 242a is disposed, or a direction, in which a first fixed cam portion 241_31 of the first cam member 241_ch4 is disposed) of the third modified arm member 221_ch2. The first shaft 231 may be disposed at a central portion of the first arm cam 221_cam to pass therethrough, and the first arm cam 221_cam may include a cam pattern (e.g., ridges and valleys, or a repeated pattern thereof) corresponding to the first fixed cam portion 241_31. In various embodiments, as described above in FIG. 9, the first arm cam 221_cam may have a flat structure without separate ridges and valleys so that the contact angle is formed at 0 degrees. A side part (e.g., an outer surface in a direction which the first cam elastic member 242a faces) of the first arm cam 221_cam formed integrally with the third modified arm member 221_ch2 is formed flat, the first fixed cam portion 241_31 may also be formed flat correspondingly. Alternatively, the first fixed cam portion 241_31 may have a cam structure including ridges and valleys. The first main gear 233a (or the first modified main gear) integrally formed with the third modified arm member 221_ch2 may be gear-coupled to the first gear 238a as described above in FIGS. 3 to 6. A through-hole that passes in the -y-axis or y-axis direction (or a direction, in which the first cam elastic member 242a is disposed) may be formed on an inside of the third modified arm member 221_ch2, on which the first main gear 233a is formed, and a first shaft 231 may be disposed at at least a portion of the through-hole. At least a partial space (or the through-hole) of an inside of the third modified arm member 221_ch2 may define a shape (e.g., at least a portion thereof is angled, or a space that defines a "D"-cut) corresponding to a shape of the z-axis cross-section of the first shaft 231 (e.g., at least a portion thereof is angled or a shape including a "D"-cut) to be rotated in response to the rotation of the first shaft 231 (or to rotate the first shaft 231 as the third modified arm member 221_ch2 is rotated). An inner space of the first arm cam 221_cam may also have a space corresponding to the shape (e.g., at least a portion thereof is angled) of the z-axis cross-section of the first shaft 231 disposed in the inner space to be rotated in response to the rotation of the first shaft 231.

The second arm cam 221_cam may be disposed on one side (e.g., a direction that faces the y axis or a direction, in which the second cam elastic member 242b is disposed, or a direction, in which the second fixed cam portion 241_32 of the first cam member 241_ch4 is disposed) of the fourth modified arm member 222_ch2. As an example, the second arm cam 222_cam may be formed integrally with the fourth modified arm member 222_ch2. The second arm cam 222_cam may be formed adjacent to the second main gear 233b (or the second modified main gear). Alternatively, the second main gear 233b may be formed while being curved in the x-axis direction of the fourth modified arm member 222_ch2, and the second arm cam 222_cam may be disposed to face the y-axis direction. An inner space of the second arm cam 222_cam and an inner space of the fourth modified arm member 222_ch2, which is surrounded by the second main gear 233b, may be connected to each other. The second shaft 232 may be inserted into the connected inner spaces. While the second arm cam 222_cam and the second main gear 233b are rotated, at least a portion of the inner spaces is formed to be angled (to include at least one corner) so that the second shaft 232 is rotated, and the inner spaces including at least one corner may correspond to the z-axis cross-sectional shape of the second shaft 232. For example, the z-axis cross-section of the second shaft 232 may include at least one corner. The above-described second arm cam 222_cam and second main gear 233b may have a structure and a size that are the same as or similar to those of the first arm cam 221_cam that is integrally formed with the third modified arm member 221_ch2 described above, and the first main gear 233a. The second arm cam 222_cam and the second main gear 233b may be disposed to be symmetrical to the first arm cam 221_cam and the first main gear 233a on opposite sides (e.g., -x axis and x axis) with respect to a center line that intersects a middle of the first modified gear shaft 238_ch and the second modified gear shaft 239_ch.

At least one of the first gear 238a and the third modified cam 221_cam2 may be integrally formed with or disposed to be fixed to the first modified gear shaft 238_ch. As an example, the first gear 238a and the third modified cam 221_cam2 may be formed integrally with each other to surround an outer peripheral surface of the first modified gear shaft 238_ch. The third modified cam 221_cam2 may be disposed (or formed) in the side part (e.g., a direction that faces the y axis) of the first gear 238a, and may be disposed to face the third fixed cam portion 241_33 of the second cam member 241_ch5. As another example, the first gear 238a may be formed integrally with the first modified gear shaft 238_ch, and the third modified cam 221_cam2 may be disposed between the first gear 238a and the third fixed cam portion 241_33 with the first modified gear shaft 238_ch being inserted thereinto. At least a portion of an interior space of the third modified cam 221_cam2 may be formed to be angled (or may include at least one corner) such that it may be rotated in response to the rotation of the first modified gear shaft 238_ch, and at least a portion of a part of the z-axis cross-section of the first modified gear shaft 238_ch, which is seated in the interior space of the third modified cam 221_cam2 may be formed to be angled (or the same as or similar to a shape of the interior space of the third modified cam 221_cam2). In various embodiments, the first gear 238a may be also provided in a separate form from the first modified gear shaft 238_ch, and the first modified gear shaft 238_ch may be inserted into the interior space (e.g., a space that defines a through-hole that passing from the y-axis in the -y-axis direction) of the first gear 238a. The interior space of the first gear 238a may include at least one corner, and this shape may correspond to the z-axis cross-section of the first modified gear shaft 238_ch.

The second modified gear shaft 239_ch may have at least one of a size and a structure that are the same as or similar to those of the first modified gear shaft 238_ch described above. For example, the second modified gear shaft 239_ch may include an integrated second gear 239a and an integrated fourth modified cam 222_cam2, and the second gear 239a and the fourth modified cam 222_cam2 may be rotated in response to the rotation of the first modified gear shaft 238_ch. The fourth modified cam 222_cam2 may be disposed to face the fourth fixed cam portion 241_34 of the second cam member 241_ch5.

The gear bracket 236 may include holes, in which sides of the first and second shafts 231 and 232 and the first and second modified gear shafts 238_ch and 239_ch may be disposed to pass therethrough, and may include stopper structures so that the third modified arm member 221_ch2 and fourth modified arm member 222_ch2 cannot be rotated at a specific angle or more.

The first cam member 241_ch4 may be disposed between the first cam elastic member 242a and the second cam elastic member 242b, and the first arm cam 221_cam and the second arm cam 222_cam, and the first fixed cam portion 241_31 and the second fixed cam portion 241_32 included in the first cam member 241_ch4 may be connected to each other to be fixed. In this regard, the first cam member 241_ch4 may further include a first connection structure cam_col (or a connection portion) that connects the first fixed cam portion 241_31 and the second fixed cam portion 241_32. The first connection structure cam_co1 may have two holes that pass in the y-axis and -y-axis directions, and the third modified cam 221_cam2 and the fourth modified cam 222_cam2 are disposed in the two holes to pass therethrough. The first connection structure cam_co1 may be formed such that the third modified cam 221_cam2 and the fourth modified cam 222_cam2 may be rotated while fixing the first fixed cam portion 241_31 and the second fixed cam portion 241_32. The first fixed cam portion 241_3 1 and the second fixed cam portion 241_32 may have the same shape and size (or the same elastic force), and may be pressed by the elastic force from the first cam elastic member 242a and the second cam elastic member 242b, respectively, and may be cam-coupled to the first arm cam 221_cam and the second arm cam 222_cam. The first shaft 231 and the second shaft 232 may be inserted into the first fixed cam portion 241_31 and the second fixed cam portion 241_32. Insides of the first fixed cam portion 241_31 and the second fixed cam portion 241_32 may include a space (or a through-hole) having a size that is equal to or greater than a size of the z-axis cross-sections of the first shaft 231 and the second shaft 232 so that the first shaft 231 and the second shaft 232 may be rotated after being inserted thereinto.

The second cam member 241_ch5 may be disposed between the third cam elastic member 242c and the fourth cam elastic member 242d, and the third modified cam 221_cam2 and the fourth modified cam 222_cam2, and may include a third fixed cam portion 241_33, a fourth fixed cam portion 241_34, and the second connection structure cam_co2. The third fixed cam portion 241_33 and the fourth fixed cam portion 241_34 may have the same shape and size (or the same elastic force), and may be pressed by the elastic force from the third cam elastic member 242c and the fourth cam elastic member 242d, and may be cam-coupled to the third modified cam 221_cam2 and the fourth modified cam 222_cam2. A space (e.g., a through-hole), in which the first modified gear shaft 238_ch and the second modified gear shaft 239_ch may be rotated after being inserted thereinto may be formed on an inside of the third fixed cam portion 241_33 and the fourth fixed cam portion 241_34. The second connection structure cam_co2 may connect the third fixed cam portion 241_33 and the fourth fixed cam portion 241_34 to fix the third fixed cam portion 241_33 and the fourth fixed cam portion 241_34 so that they are not be rotated.

The at least one friction member (at least one of 249a1, 249a2, 249b1, 249b2, 249c1, and 249c2) and the at least one support member (at least one of 248a and 248b) may be disposed between the cam elastic members 242a, 242b, 242c, and 242d and the shaft fixing part 243. The at least one friction member (at least one of 249a1, 249a2, 249b1, 249b2, 249c1, and 249c2) and the at least one support member (at least one of 248a and 248b) may perform a function of converting the elastic force provided by the cam elastic members 242a, 242b, 242c, and 242d into a torque (or a frictional force). Positions, in which the at least one friction member (at least one of 249a1, 249a2, 249b1, 249b2, 249c1, and 249c2) and the at least one support member (at least one of 248a and 248b) are disposed, may be changed to various positions, in which the elastic force of the cam elastic members 242a, 242b, 242c, and 242d may be received.

According to an embodiment, the first arm cam 221_cam is not formed in an arm member (or the first modified arm member, or the first arm member), and may be formed integrally with one side of the first main gear 233a. The second arm cam 222_cam is not formed on an arm member (or the second modified arm member, or the second arm member), and may be formed integrally with one side of the second main gear 233b. As illustrated above in FIGS. 3 to 9, the first main gear 233a and the second main gear 233b may be formed integrally with the arm member, and as described in FIG. 11, may be provided in a separate form from the arm members, and may be disposed in or formed integrally with the first shaft 231 and the second shaft 232. Accordingly, the first arm cam 221_cam may be integrally formed with the first shaft 231 or formed integrally with the side part of the first main gear 233a integrally formed with the first shaft 231. The second arm cam 222_cam may be integrally formed with the second shaft 232 or may be formed integrally with a side part of the second main gear 233b integrally formed with the second shaft 232.

As described above, the hinge structure 204 may have a shape, in which the positions of the modified cams 241_31, 241_32, 241_33, and 241_34 are integrally formed with the structure, in which the gears are formed. Additionally or alternatively, in FIG. 12, a structure, in which the first cam member 241_ch4 is disposed to face the first cam elastic member 242a and the second cam elastic member 242b to directly receive an elastic force from the first cam elastic member 242a and the second cam elastic member 242b, is illustrated, but The disclosure is not limited thereto. For example, in the third modified arm member 221_ch2, the first arm cam 221_cam may be formed in a side part (e.g., a side part in the -y-axis direction) in the opposite direction to one side of the currently illustrated third modified arm member 221_ch2, and similarly, in the fourth modified arm member 222_ch2, the second arm cam 222_cam may be formed in a side part (e.g., a side part in the -y-axis direction) in the opposite direction to one side of the currently illustrated fourth modified arm member 222_ch2. Correspondingly, the first cam member 241_ch4 may be disposed between the third modified arm member 221_ch2 and the fourth modified arm member 222_ch2, and the gear bracket 236. According to an embodiment, the positions of the second cam member 241_ch5, the third modified cam 221_cam2, and the fourth modified cam 222_cam2 may also be moved between the first gear 238a and the second gear 239a, and the gear bracket 236. In the hinge structure of the above-described structure, the first cam elastic member 242a and the second cam elastic member 242b may directly provide an elastic force to the third modified arm member 221_ch2 and the fourth modified arm member 222_ch2, and the third cam elastic member 242c and the fourth cam elastic member 242d may directly provide an elastic force to the first gear 238a and the second gear 239a.

The hinge structure of the disclosure described above allows the coil spring associated with implementation of a detent to be independently disposed in the second inclined cam structure while a disk spring that may implement a high force of a specific reference value is used in the cam structure of the first inclination in relation to implementation of a high torque. For example, the hinge structure of the disclosure implements a high torque (higher, or a reference value or more) by disposing a cam structure (e.g., the fixed cam portion and the cam patterns) having a gentle slope of 20 degrees or less, and may facilitate folding of the foldable electronic device or increase the feeling of unfolding the detent by reducing the basic torque (a torque provided by the disk spring when the foldable electronic device 100 is in the folded or unfolded state) while providing a strong surface-pressure structure by operating a disk spring for a strong spring force in the unfolded or folded (open or close) state of the foldable electronic device. Furthermore, the hinge structure of the disclosure may constitute a cam structure (e.g., at least one fixed cam portion and at least one cam having a contact angle of the cam patterns of 35 degrees or more) having a contact angle of 35 degrees or more in the rotation section, in which the detent of the foldable electronic device 100 is required, by using a coil spring, of which a basic compression amount of the elastic body is a specific reference value or more, to support implementation of a detent force in the unfolded and folded states of the foldable electronic device 100.

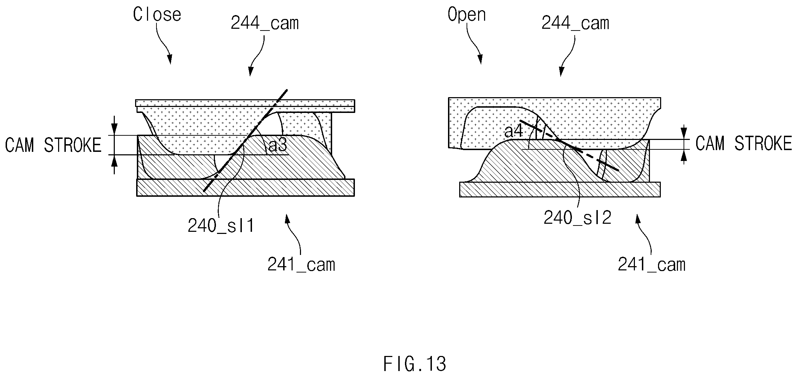

FIG. 13 is a view illustrating an example of a cam pattern according to an embodiment.

Referring to FIGS. 1 to 13, the cam pattern according to an embodiment may include an upper cam pattern 244_cam and a lower cam pattern 241_cam. When the foldable electronic device 100 is in a folded state (or a closed state), the upper cam pattern 244_cam and the lower cam pattern 241_cam may contact each other while having a first magnitude of slope 240_sl1, and may define a third contact angle a3. When the foldable electronic device 100 is in an unfolded state (or open, or an open state), the upper cam pattern 244_cam and the lower cam pattern 241_cam contact each other while having a second magnitude of slope 240_sl2 that is different from the first magnitude of slope 240_sl1, and may define a fourth contact angle a4. According to an embodiment, an angle of the first magnitude of slope 240_sl1 (e.g., the third contact angle a3) may be greater than an angle of the second magnitude of slope 240_sl2 (e.g., the first contact angle a1). Alternatively, the second magnitude of slope 240_sl2 may be formed to be gentler than the first magnitude of slope 240_sl1. In this regard in a certain angle, at which the foldable electronic device 100 is unfolded from the folded state, one ridge of the upper cam pattern 244_cam that defines the first magnitude of slope 240_sl1 and one ridge of the corresponding lower cam pattern 241_cam may be rotated while contacting each other while having the same inclined surface, and then, a first force (or a force of the first magnitude) may be required to be rotate at the first magnitude of slope 240_sl1. Because the upper cam pattern 244_cam and the lower cam pattern 241_cam contact each other while defining the first magnitude of slope 240_sl1 to define the third contact angle a3 in the folded state of the foldable electronic device 100, the upper cam pattern 244_cam and lower cam pattern 241_cam may offset at least a portion of the repulsive force, by which the flexible display (the flexible display 160 of FIG. 2) included in the foldable electronic device 100 is to be unfolded when they are pressed (e.g., the upper cam pattern 244_cam is pressed to be rotated from a right side to a left side or counterclockwise, and the lower cam pattern 241_cam is pressed to be rotated from the left side to the right side or clockwise) to be rotated in different directions by an externally applied elastic force.

According to an embodiment, at a specific angle, at which the foldable electronic device 100 is folded from the unfolded state, one ridge of the upper cam pattern 244_cam that defines the second magnitude of slope 240_sl2 and one ridge of the corresponding lower cam pattern 241_cam may be rotated while contact each other, while having the same inclined surface, and then, a second force (or a force of a second magnitude) that is smaller than the first force may be required for rotation at a second magnitude of slope 240_sl2.

In the unfolded state of the foldable electronic device 100, the upper cam pattern 244_cam and the lower cam pattern 241_cam contact each other to define the second magnitude of slope 240_sl2 to define a fourth contact angle a4, the upper cam pattern 244_cam and the lower cam pattern 241_cam may be pressed (e.g., the upper cam pattern 244_cam is pressed to be rotated from the left side to the right side or clockwise, and the lower cam pattern 241_cam is pressed to be rotated from the right side to the left side or counterclockwise) by the elastic force applied from an outside so that they are rotated in different directions, and may offset at least a portion of the repulsive force (when the flexible display (the flexible display 160 of FIG. 2) is in a folded state for a specific time, or a tendency of being folded to a specific angle from the unfolded state), by which the flexible display (the flexible display 160 of FIG. 2) included in the foldable electronic device 100 is to be folded.

The above-described upper cam pattern 244_cam and lower cam pattern 241_cam may be applied to at least some of the fixed cam portions and the cams (or the modified cams) described above. As an example, the structure, in which two inclined surfaces that define one ridge form different angles of magnitude of slope, may be applied to the third cams 244c and 244g (or the third modified cam 221_cam2) and the fourth cams 244d and 244h (or the fourth modified cam 222_cam2), and the third fixed cam portions 241c, 236_cam1, and 241_33 and the fourth fixed cam portions 241d, 236_cam2, and 241_34 described above, and may not be applied to the first cam 244a (or the first modified cams 244e and 222_cam) and the second cam 244b (or the second modified cams 244f and 221_cam), and the first fixed cam portions 241a and 241_31 and the second fixed cam portion 241b and 241_32.

Meanwhile, in the description of the above-described embodiments, the structure, in which opposite sides (e.g., the x-axis direction and -x-axis direction) are symmetrical to each other with respect to the horizontal center line of the fixing bracket 213, is illustrated, but the embodiments of the disclosure are not limited thereto. For example, different types of elastic members may be alternately disposed (e.g., referring to FIG. 9, disposed in the order of the first cam elastic member 242a, the third cam elastic member 242c, the second cam elastic member 242b, and the fourth cam elastic member 242d with respect to the x-axis to -x-axis direction). Alternatively, the first cam and the second cam may be disposed adjacent to each other, and the third cam and fourth cam may be disposed adjacent to each other (e.g., referring to FIG. 9, disposed in the order of the first cam elastic member 242a, the second cam elastic member 242b, the third cam elastic member 242c, and the fourth cam elastic member242d with respect to the x-axis to -x-axis direction). Furthermore, the elastic members (e.g., the first cam elastic member 242a and the second cam elastic member 242b of FIG. 9) that may provide a relatively high torque may be disposed on an inside with respect to the horizontal center line of the fixing bracket 213, and the elastic members (e.g., the third cam elastic member 242c and the fourth cam elastic member 242d of FIG. 9) that may provide a relatively low torque may be disposed on an outside (e.g., with respect to FIG. 9, the first cam elastic member 242a and the second cam elastic member 242b are disposed between the third cam elastic member 242c and the fourth cam elastic member 242d).

In the various embodiments described above, the foldable electronic device (or the portable electronic device) according to an embodiment may include the first housing 110 and the second housing 120, the hinge structure 201 that connects the first housing and the second housing, and the flexible display. The hinge structure may include a first rotation member 211 that is coupled to the first housing and a second rotation member 212 that coupled to the second housing, a first arm member 221 that is rotated in response to the rotation of the first rotation member and a second arm member 222 that is rotated in response to the rotation of the second rotation member, a first shaft 231, on which a first main gear 221_2 is disposed, and that is coupled to the first arm member, a second shaft 232, on which a second main gear 222_2 is disposed, and that is coupled to the second arm member, a third shaft 238 that is disposed between the first main gear and the second main gear and, on which a first gear 238a is disposed, a fourth shaft 239 disposed between the third shaft and the second main gear and, on which the second gear 239a is disposed, first to fourth cams 244a, 244b, 244c, and 244d that are coupled to the first to fourth shafts, respectively, a cam member 241 that is coupled to the first to fourth shafts and including first to fourth fixed cam portions that face the first to fourth cams, a first elastic member 242a that is coupled to the first shaft to provide a first elastic force to the first cam, a second elastic member 242b that is coupled to the second shaft to provide the first elastic force to the second cam, and a third elastic member 242c that is coupled to the third shaft to provide an elastic force of a second magnitude to the third cam, and a fourth elastic member 242d that is coupled to the fourth shaft to provide the second elastic force to the fourth cam. The magnitude of slope of the first cam may be different from the magnitude of slope of the third cam, and the type of the first elastic member may be formed differently from the type of the third elastic member.

According to an embodiment, the first cam and the first fixed cam portion define a first contact angle by the elastic force applied by the first elastic member (or a press or a pressure by the elastic force of the first elastic member), the third cam and the third fixed cam portion define a second contact angle by the elastic force applied by the third elastic member, and the magnitude of the first contact angle is smaller than the magnitude of the second contact angle when the foldable electronic device is in the unfolded state.

According to an embodiment, an amount of contribution (or a contribution rate) contributed by the second contact angle to the foldable electronic device maintaining the unfolded state may be greater than an amount of contribution contributed by the first contact angle.

According to an embodiment, the first cam and the first fixed cam portion form the first contact angle by the elastic force applied by the first elastic member, the third cam and the third fixed cam portion define the second contact angle by the elastic force applied by the third elastic member, and the magnitude of the first contact angle is formed to be the same as the magnitude of the second contact angle, while the angle between the first housing and the second housing is maintained at angle range (or a specific angle range) defined in correspondence to the partially folded state.

According to an embodiment, while the angle between the first housing and the second housing is maintained in an angle range defined in correspondence to the partially folded state, the amount of contribution that the elastic force applied by the first elastic member contributes to maintaining the angle range is greater than an amount of contribution that the elastic force applied by the second elastic member contributes to maintaining the angle range.

According to an embodiment, while an additional resistance (e.g., rotation that occurs while an elastic force is applied in a situation, an upper end portion of the cam (the fixed cam portion and the cam) of the hinge structure is not flat and is designed to have a specific inclination) in rotation due to rotation between the first and second housings is provided in an angle range corresponding to the partially folded state of the foldable electronic device, the amount of contribution that the elastic force applied by the first elastic member contributes to maintaining the angle range is greater than an amount of contribution that contributes the elastic force applied by the second elastic member contributes to maintaining the angle range.

According to an embodiment, the first cam and the first fixed cam portion define the first cam stroke by the elastic force applied by the first elastic member, the third cam and the third fixed cam portion define the second cam stroke by elastic force applied by the third elastic member, and the movement amount of the first cam stroke is smaller than the movement amount of the second cam stroke when the foldable electronic device is in the unfolded state or the folded state. According to an embodiment, the first contact angle is greater than 0 degrees and less than 20 degrees, and the second contact angle is equal to or greater than 35 degrees. According to an embodiment, the elastic force applied by the first elastic member is set to be greater than the elastic force applied by the third elastic member and provided to the third cam while the angle between the first housing and the second housing is maintained in an angle range defined in correspondence to the partially folded state.

According to an embodiment, the compression amount of the third elastic member is set to be greater than the compression amount of the first elastic member while the angle between the first housing and the second housing is maintained in an angle range defined in correspondence to the partially folded state.

According to an embodiment, the first elastic member includes a stacked structure of a plurality of disk springs, and the third elastic member includes a coil spring.

According to an embodiment, the foldable electronic device further includes the friction members 249a1, 249a2, 249b1, and 249b2 that are disposed in the first shaft and the second shaft, respectively, and the support members 248a and 248b that is disposed contact the friction members.

According to one embodiment, the friction members and the support members are disposed between the cam member and the first arm member or between the cam member and the second arm member.

According to an embodiment, the plurality of friction members and the support members are disposed alternately, and the same numbers of them are disposed in the first shaft and the second shaft.

According to an embodiment, the cam member further includes a connection structure that connects the first fixed cam portion, the second fixed cam portion, the third fixed cam portion, and the fourth fixed cam portion.

According to an embodiment, the cam member includes the first cam member and the second cam member separated from the first cam member, the first cam member includes the first fixed cam portion, the second fixed cam portion, and a first connection structure that connects the first fixed cam portion and the second fixed cam portion, and the second cam member includes the third fixed cam portion, the fourth fixed cam portion, and the second connection structure that connects the third fixed cam portion and the fourth fixed cam portion.

According to an embodiment, the first cam is formed integrally with one side of the first arm member, and the second cam is formed integrally with one side of the second arm member.

According to an embodiment, the first cam is formed integrally with one side of the first main gear, and the second cam is formed integrally with one side of the second main gear.

According to an embodiment, the third cam is formed integrally with one side of the first gear, and the fourth cam is formed integrally with one side of the second gear.

According to an embodiment described above, the hinge structure according to an embodiment includes a first rotation member 211 that is rotated about the first axis axis_A1 and a second rotation member 212 that is rotated about the second axis axis_A2, a first arm member 221 that is rotated about the third axis axis_B3 while being rotated in response to the rotation of the first rotation member, and a second arm member 222 that is rotated about the fourth axis axis_B4 while being rotated in response to the rotation of the second rotation member, a first shaft 231, in which a first main gear is disposed, and that is coupled to the first arm member, a second shaft 232, in which a second main gear is disposed, and that is coupled to the second arm member, a third shaft 238 that is disposed between the first main gear and the second main gear, and in which the first gear 238a is disposed, and a fourth shaft 239 that is disposed between the third shaft and the second main gear, and in which the second gear 239a is disposed, first to fourth cams 244a, 244b, 244c, and 244d that are coupled to the first to fourth shafts, respectively, a cam member 241 coupled to the first to fourth shafts and including first to fourth fixed cam portions 241a, 241b, 241c, and 241d that face the first to fourth cams, a first elastic member 242a that is coupled to the first shaft to provide a first elastic force to the first cam, a second elastic member 242b that is coupled to the second shaft to provide the first elastic force to the second cam, a third elastic member 242c that is coupled to the third shaft to provide a second elastic force to the third cam, and a fourth elastic member 242d that is coupled to the fourth shaft to provide the second elastic force to the fourth cam, and the magnitude of slope of the first cam may be different from the magnitude of slope of the third cam, and the type of the first elastic member may be different from the type of the third elastic member.

According to an embodiment, the magnitude of the first contact angle, at which the first cam and the first fixed cam portion of the cam member are in contact, may be set to be smaller than the magnitude of the second contact angle, at which the third cam and the third fixed cam portion of the cam member are in contact.

Meanwhile, in the description related to torque provision of the above-described hinge structure (at least one of 201, 202, 203, and 204), a form, in which cams and fixed cam portions disposed on opposite sides of the folding axis (e.g., an imaginary axis that intersects the centers of the first axis axis_A1 and the second axis axis_A2) are defined as the first cam structure and the second cam structure and different types of elastic members press the first cam structure and the second cam structure, has been illustrated, the disclosure is not limited thereto. For example, in the hinge structure (at least one of 201, 202, 203, and 204) of the disclosure, the above-described first cam structure may be defined to include only the first cam 244a and the first fixed cam portion 241a in the hinge structure (at least one of 201, 202, 203, and 204), and correspondingly, the elastic member pressing the first cam structure may include only the first cam elastic member 242a. Similarly, the second cam structure may include only the third cam 244c and the third fixed cam portion 241c in the hinge structure (at least one of 201, 202, 203, and 204), and the elastic member that presses the second cam structure may include only the third cam elastic member 242c of a different type from the first cam elastic member 242a. Additionally, the hinge structure (at least one of 201, 202, 203, and 204) may further include the third cam structure including the third cam 244c and the third fixed cam portion 241c, and the third cam elastic member 242c that presses the third cam structure, the fourth cam structure including the fourth cam 244d and the fourth fixed cam portion 241d, and the fourth cam elastic member 242d that presses the fourth cam structure.

According to an embodiment, the first cam elastic member 242a may include the first type elastic member (e.g., a disk spring) illustrated above, and the third cam elastic member 242c may include a second type elastic member (e.g., a coil spring). The third cam structure may be configured differently from the first cam structure (e.g., at least one of the contact angle of the cam and the fixed cam portion and the cam stroke is different), and the fourth cam structure may be configured differently from the second cam structure (e.g., at least one of the contact angle of the cam and the fixed cam portion and the cam stroke is different). As an embodiment, the second cam elastic member 242b may be configured differently (e.g., configured differently in at least one of the type of elastic member and the size of the elastic force) from the first cam elastic member 242a, and the fourth cam elastic member 242d may be configured differently from the third cam elastic member 242c (e.g., at least one of the type of elastic member and the size of the elastic force is configured differently). Alternatively, each of the first to fourth cam elastic members 242a, 242b, 242c, and 242d may be configured to include a plurality of types (e.g., disk springs and coil springs), and the application ratios of the types of the first to fourth cam elastic members 242a, 242b, 242c, 242d may be configured differently. Correspondingly, in the embodiment of the disclosure, as an example when features of components that provide a high torque is defined, the hinge structure (at least one of 201, 202, 203, and 204) including a first group as a first type elastic member including the first cam 244a and the first fixed cam portion 241a that define the first contact angle by pressing of the first cam elastic member 242a, and a second group as a second type elastic member (an elastic member of a different type from the first type) including the third cam and the third fixed cam portion 241c that define the second contact angle (the contact angle that is different from the first contact angle) by pressing of the third cam elastic member 242c.

Alternatively, in an embodiment of the disclosure, the hinge structure (at least one of 201, 202, 203, and 204) may suggest, as an example, a third group as a third type elastic member (e.g., an elastic member similar to the first type or different from the first type and the second type), including a second cam 244b and a second fixed cam portion 241b that defines a third contact angle (e.g., the same as the first contact angle or a contact angle that is different from the first and second contact angles) by pressing of the second cam elastic member 242b, and a fourth group as a fourth type elastic member (e.g., an elastic member of the same type as the second type or a different type from the first to third types), and including a fourth cam 244d, and a fourth fixed cam portion 241d that define a fourth contact angle (e.g., a contact angle that is the same as the second contact angle or different from the first to third contact angles) by pressing of the fourth cam elastic member 242d.

According to an embodiment, in the hinge structure (at least one of 201, 202, 203, and 204), the first cam 244a and the first fixed cam portion 241a may define a first contact angle by pressure of the first cam elastic member 242a, the third cam 244c and the third fixed cam portion 241c may define a second contact angle by pressure of the third cam elastic member 242c, and the magnitude of the first contact angle may be smaller than the magnitude of the second contact angle when the foldable electronic device 100 is in the unfolded state or the folded state.

According to an embodiment, the size (or contribution amount) of the ratio contributed by the second contact angle for the foldable electronic device 100 to maintain the unfolded state or the folded state may be greater the size (or contribution amount) the ratio contributed by the first contact angle.

According to an embodiment, an additional rotation resistance in rotation between the first housing and the second housing (e.g., upper ends of the cam parts are not formed flat but have a constant inclination that is greater than 0) occurs, an additional resistance in rotation may be provided when elastic force is provided while the foldable electronic device 100 is maintained at the specific angle range.

According to an embodiment, the first cam 244a and the first fixed cam portion 241a define a first contact angle by pressure of the first cam elastic member 242a, the third cam 244c and the third fixed cam portion 241c define a second contact angle by pressure of the third cam elastic member 242c, and the magnitude of the first contact angle may be the same as the magnitude of the second contact angle while the angle between the first housing 110 and the second housing 120 is maintained at a specific angle.

According to an embodiment, while the angle between the first housing 110 and the second housing 120 is maintained a specific angle, the magnitude of the ratio, at which the pressure generated by the first elastic force provided by the first cam elastic member 242a contributes to maintaining the specific angle, may be greater than the size of the ratio, at which the pressure generated by the second elastic force provided by the third cam elastic member 242c contributes to maintaining the specific angle.

According to an embodiment, the first cam 244a and the first fixed cam portion 241a may define a first cam stroke by the pressure of the first cam elastic member 242a, the third cam 244c and the third fixed cam portion 241c may define a second cam stroke by the pressure of the third cam elastic member 242c, and the size of the first cam stroke may be smaller than the size of the second cam stroke when the foldable electronic device 100 is in the unfolded state or the folded state. The above-described features may be applied in the same way as or similarly to the third and fourth groups. For example, the second cam elastic member 242b of the third group may provide a third elastic force, and the magnitude of the pressure generated by providing the third elastic force (or the size of the ratio that the hinge structure (at least one of 201, 202, 203, and 204) contributes to maintaining a specific angle) and the magnitude of the pressure generated by the fourth elastic force provided by the fourth cam elastic member 242d of the fourth group (or the size of the ratio that the hinge structure (at least one of 201, 202, 203, and 204) contributes to maintaining a specific angle) may be different depending on at least one of the contact angles and cam strokes of the cam structures belonging to the corresponding groups. Accordingly, in the hinge structure of the disclosure (at least one of 201, 202, 203, and 204), the groups may have different contributions for the specific states (e.g., the folded state, the unfolded state, and the flex mode state ) of the foldable electronic device 100 while, in the groups including the plurality of cams, the fixed cam portions, and the elastic members, the cams, the fixed cam portions, and the elastic members belonging to at least two groups are configured differently from each other.

A foldable electronic device (100) according to the present disclosure comprises a first housing (110) and a second housing (120); a hinge structure (201) coupled between the first housing (110) and the second housing (120); and a flexible display (160) accommodated in the first housing (110) and the second housing (120), wherein the hinge structure (201) includes: a first rotation member (211) coupled to the first housing (110) and a second rotation member (212) coupled to the second housing (120); a first arm member (221) configured to rotate in response to the rotation of the first rotation member (211) and a second arm member (222) configured to rotate in response to the rotation of the second rotation member (212); a first shaft (231) on which a first main gear (221_2) is disposed and coupled to the first arm member (221); a second shaft (232) on which a second main gear (222_2) is disposed and coupled to the second arm member (222); a third shaft (238) disposed between the first main gear (221_2) and the second main gear (222_2) and on which a first gear (238a) is disposed; a fourth shaft (239) disposed between the third shaft (238) and the second main gear (222_2) and on which a second gear (239a) is disposed; first to fourth cams (244a, 244b, 244c, 244d) coupled to each of the first to fourth shafts (231, 232, 238, 239); a cam member (241) coupled to each of the first to fourth shafts (231, 232, 238, 239) and including first to fourth fixed cam portion (241a, 241b, 241c, 241d) facing the first to fourth cams (244a, 244b, 244c, 244d) respectively; a first elastic member (242a) coupled to the first shaft (231), and configured to provide a first elastic force to the first cam (244a); a second elastic member (242b) coupled to the second shaft (232) and configured to provide the first elastic force to the second cam (244b); a third elastic member (242c) coupled to the third shaft (238) and configured to provide a second elastic force different from the first elastic force to the third cam (244c); a fourth elastic member (242d) coupled to the fourth shaft (239) and configured to provide the second elastic force to the fourth cam (244d), wherein a magnitude of slope of the first cam (244a) is different from a magnitude of slope of the third cam (244c), and wherein a type of the first elastic member (242a) is different from a type of the third elastic member (242c). According to the present disclosure, when the user tries to open or close the foldable electronic device, it can maintain in a controlled movement without abrupt changes or deviation in resistance, and allow the user to open or close it with minimal effort and optimized smoothness, and provide a secure detent function for positional stability and avoiding unintentional opening or closing.

According to various embodiments, the first cam (244a) and the first fixed cam portion (241a) form a first contact angle in response to an elastic force applied by the first elastic member (242a). The third cam (244c) and the third fixed cam portion (241c) form a second contact angle in response to an elastic force applied by the third elastic member (242c). When the foldable electronic device (100) is in an unfolded state, a magnitude of the first contact angle is smaller than a magnitude of the second contact angle.

According to various embodiments, an amount of contribution of the second contact angle for maintaining the unfolded state is greater than an amount of contribution of the first contact angle for maintaining the unfolded state or the folded state.

According to various embodiments, the first cam (244a) and the first fixed cam portion (241a) form a first contact angle in response to an elastic force applied by the first elastic member (242a). The third cam (244c) and the third fixed cam portion (241c) form a second contact angle in response to an elastic force applied by the third elastic member (242c). A magnitude of the first contact angle is the same as a magnitude of the second contact angle while an angle between the first housing (110) and the second housing (120) maintains at a defined angle range corresponding to a partially folded state.

According to various embodiments, while an additional resistance in rotation between the first housing (110) and the second housing (120) is provided at a defined angle range corresponding to a partially folded state, an amount of contribution of an elastic force applied by the first elastic member (242a) for maintaining the defined angle range is greater than an amount of contribution of an elastic force applied by the third elastic member (242c) for maintaining the defined angle range.

According to various embodiments, the first cam (244a) and the first fixed cam portion (241a) form a first cam stroke in response to an elastic force applied by the first elastic member (242a). The third cam (244c) and the third fixed cam portion (241c) form a second cam stroke in response to an elastic force applied by the third elastic member (242c). When the foldable electronic device (100) is in an unfolded state or a folded state, a movement amount of the first cam stroke is smaller than a movement amount of the second cam stroke.

According to various embodiments, the first contact angle is greater than 0 degree and less than 20 degree. The second contact angle is 35 degree or more.

According to various embodiments, an elastic force applied by the first elastic force and provided to the first cam (244a), is greater than an elastic force applied by the third elastic force and provided to the third cam (244c) while an angle between the first housing (110) and the second housing (120) maintains at a defined angle range corresponding to a partially folded state.

According to various embodiments, a compression amount of the third elastic member (242c) is greater than the compression amount of the first elastic member (242a) while an angle between the first housing (110) and the second housing (120) maintains at a defined angle range corresponding to a partially folded state.

According to various embodiments, the first elastic member (242a) includes a stacked structure of a plurality of disk springs. The third elastic member (242c) includes a coil spring.

According to various embodiments, the foldable electronic device (100) further comprises a plurality of friction members (249a1, 249a2, 249b1, 249b2, 249c1, 249c2, 249c3, 249c4) disposed on each of the first shaft (231) and the second shaft (232), and/or a plurality of support members (218a, 218b, 218c) disposed to contact the friction members (249a1, 249a2, 249b1, 249b2, 249c1, 249c2, 249c3, 249c4).

According to various embodiments, the plurality of friction members (249a1, 249a2, 249b1, 249b2, 249c1, 249c2, 249c3, 249c4) and the plurality of support members (218a, 218b, 218c) are disposed between the cam member (241) and the first arm member (221) or the cam member (241) and the second arm member (222).

According to various embodiments, the plurality of the friction members (249a1, 249a2, 249b1, 249b2, 249c1, 249c2, 249c3, 249c4) and the support members (218a, 218b, 218c) are arranged alternately. The number of friction members (249a1, 249a2, 249b1, 249b2, 249c1, 249c2, 249c3, 249c4) and support members (218a, 218b, 218c) disposed on the first shaft (231) is equal to the number of friction members (249a1, 249a2, 249b1, 249b2, 249c1, 249c2, 249c3, 249c4) and support members (218a, 218b, 218c) disposed on the second shaft (232).

According to various embodiments, the cam member (241) further comprises a connection structure connecting the first fixed cam portion (241a), the second fixed cam portion (241b), the third fixed cam portion (241c), and the fourth fixed cam portion (241d).

According to various embodiments, the cam member (241) includes a first cam member and a second cam member separated from the first cam member. The first cam member includes the first fixed cam portion (241a) facing the first cam (244a); the second fixed cam portion (241b) facing the second cam (244b); a first connection structure connecting the first fixed cam portion (241a) and the second fixed cam portion (241b). The second cam member includes the third fixed cam portion (241c) facing the third cam (244c);

the fourth fixed cam portion (241d) facing the fourth cam (244d); a second connection structure connecting the third fixed cam portion (241c) and the fourth fixed cam portion (241d).

According to various embodiments, the first cam (244a) is formed integrally with one side of the first arm member (221), and/or the second cam (244b) is formed integrally with one side of the second arm member (222).

According to various embodiments, the first cam (244a) is formed integrally with one side of the first main gear (221_2), and/or the second cam (244b) is formed integrally with one side of the second main gear (222_2).

According to various embodiments, the third cam (244c) is formed integrally with one side of the first gear (238a), and/or the fourth cam (244d) is formed integrally with one side of the second gear (239a).

A hinge structure (201) according to the present disclosure comprises: a first rotation member (211) configured to rotate about a first axis and a second rotation member (212) configured to rotate about a second axis; a first arm member (221) configured to rotate about a third axis in response to the rotation of the first rotation member (211), and a second arm member

(222) configured to rotate about a fourth axis in response to the rotation of the second rotation member (212); a first shaft (231) on which a first main gear (221_2) is disposed and coupled to the first arm member (221); a second shaft (232) on which a second main gear (222_2) is disposed and coupled to the second arm member (222); a third shaft (238) disposed between the first main gear (221_2) and the second main gear (222_2) and on which a first gear (238a) is disposed; a fourth shaft (239) disposed between the third shaft (238) and the second main gear (222_2) and on which a second gear (239a) is disposed; first to fourth cams (244a, 244b, 244c, 244d) coupled to each of the first to fourth shafts (231, 232, 238, 239); a cam member (241) coupled to each of the first to fourth shafts (231, 232, 238, 239) and including first to fourth fixed cam portions (241a, 241b, 241c, 241d) facing the first to fourth cams (244a, 244b, 244c, 244d); a first elastic member (242a) coupled to the first shaft (231) and providing a first elastic force to the first cam (244a); a second elastic member (242b) coupled to the second shaft (232) and providing the first elastic force to the second cam (244b); a third elastic member (242c) coupled to the third shaft (238) and providing a second elastic force different from the first elastic force to the third cam (244c); a fourth elastic member (242d) coupled to the fourth shaft (239) and providing the second elastic force to the fourth cam (244d), wherein a magnitude of slope of the first cam (244a) is different from a magnitude of slope of the third cam (244c), and wherein a type of the first elastic member (242a) is different from a type of the third elastic member (242c). According to the present disclosure, the hinge structure can contribute to a controlled movement of the foldable electronic device without abrupt changes or deviation in resistance, and allow the user to open or close the foldable electronic device with minimal effort and optimized smoothness, and provide a secure detent function for positional stability and avoiding unintentional opening or closing.

According to various embodiments, a magnitude of a first contact angle where the first fixed cam portion (241a) of the cam member (241) contacts the first cam (244a) is smaller than a magnitude of a second contact angle where the third fixed cam portion (241c) of the cam member (241) contacts the third cam (244c).

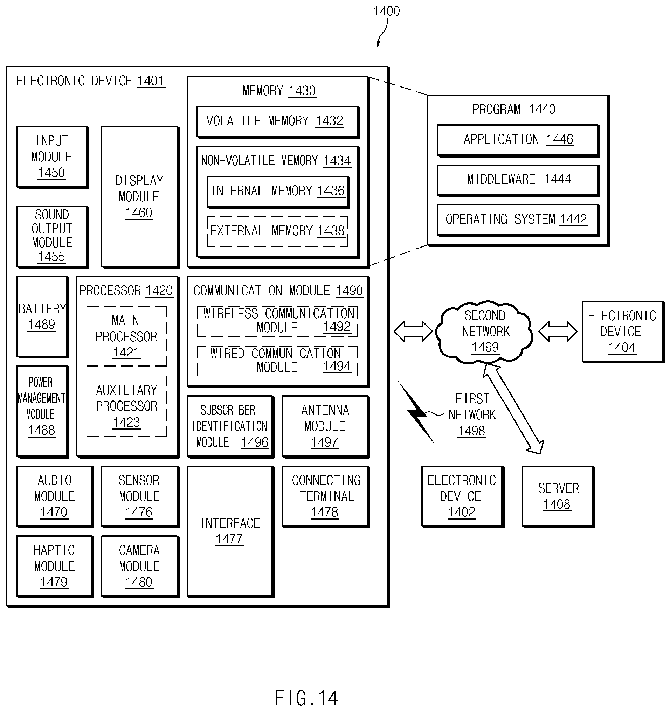

Fig. 14 is a block diagram illustrating an electronic device 1401 in a network environment 1400 according to various embodiments.

Referring to Fig. 14, the electronic device 1401 in the network environment 1400 may communicate with an electronic device 1402 via a first network 1498 (e.g., a short-range wireless communication network), or at least one of an electronic device 1404 or a server 1408 via a second network 1499 (e.g., a long-range wireless communication network). According to an embodiment, the electronic device 1401 may communicate with the electronic device 1404 via the server 1408. According to an embodiment, the electronic device 1401 may include a processor 1420, memory 1430, an input module 1450, a sound output module 1455, a display module 1460, an audio module 1470, a sensor module 1476, an interface 1477, a connecting terminal 1478, a haptic module 1479, a camera module 1480, a power management module 1488, a battery 1489, a communication module 1490, a subscriber identification module(SIM) 1496, or an antenna module 1497. In some embodiments, at least one of the components (e.g., the connecting terminal 1478) may be omitted from the electronic device 1401, or one or more other components may be added in the electronic device 1401. In some embodiments, some of the components (e.g., the sensor module 1476, the camera module 1480, or the antenna module 1497) may be implemented as a single component (e.g., the display module 1460).

The processor 1420 may execute, for example, software (e.g., a program 1440) to control at least one other component (e.g., a hardware or software component) of the electronic device 1401 coupled with the processor 1420, and may perform various data processing or computation. According to one embodiment, as at least part of the data processing or computation, the processor 1420 may store a command or data received from another component (e.g., the sensor module 1476 or the communication module 1490) in volatile memory 1432, process the command or the data stored in the volatile memory 1432, and store resulting data in non-volatile memory 1434. According to an embodiment, the processor 1420 may include a main processor 1421 (e.g., a central processing unit (CPU) or an application processor (AP)), or an auxiliary processor 1423 (e.g., a graphics processing unit (GPU), a neural processing unit (NPU), an image signal processor (ISP), a sensor hub processor, or a communication processor (CP)) that is operable independently from, or in conjunction with, the main processor 1421. For example, when the electronic device 1401 includes the main processor 1421 and the auxiliary processor 1423, the auxiliary processor 1423 may be adapted to consume less power than the main processor 1421, or to be specific to a specified function. The auxiliary processor 1423 may be implemented as separate from, or as part of the main processor 1421.

The auxiliary processor 1423 may control at least some of functions or states related to at least one component (e.g., the display module 1460, the sensor module 1476, or the communication module 1490) among the components of the electronic device 1401, instead of the main processor 1421 while the main processor 1421 is in an inactive (e.g., sleep) state, or together with the main processor 1421 while the main processor 1421 is in an active state (e.g., executing an application). According to an embodiment, the auxiliary processor 1423 (e.g., an image signal processor or a communication processor) may be implemented as part of another component (e.g., the camera module 1480 or the communication module 1490) functionally related to the auxiliary processor 1423. According to an embodiment, the auxiliary processor 1423 (e.g., the neural processing unit) may include a hardware structure specified for artificial intelligence model processing. An artificial intelligence model may be generated by machine learning. Such learning may be performed, e.g., by the electronic device 1401 where the artificial intelligence is performed or via a separate server (e.g., the server 1408). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1430 may store various data used by at least one component (e.g., the processor 1420 or the sensor module 1476) of the electronic device 1401. The various data may include, for example, software (e.g., the program 1440) and input data or output data for a command related thererto. The memory 1430 may include the volatile memory 1432 or the non-volatile memory 1434.

The program 1440 may be stored in the memory 1430 as software, and may include, for example, an operating system (OS) 1442, middleware 1444, or an application 1446.

The input module 1450 may receive a command or data to be used by another component (e.g., the processor 1420) of the electronic device 1401, from the outside (e.g., a user) of the electronic device 1401. The input module 1450 may include, for example, a microphone, a mouse, a keyboard, a key (e.g., a button), or a digital pen (e.g., a stylus pen).

The sound output module 1455 may output sound signals to the outside of the electronic device 1401. The sound output module 1455 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1460 may visually provide information to the outside (e.g., a user) of the electronic device 1401. The display module 1460 may include, for example, a display, a hologram device, or a projector and control circuitry to control a corresponding one of the display, hologram device, and projector. According to an embodiment, the display module 1460 may include a touch sensor adapted to detect a touch, or a pressure sensor adapted to measure the intensity of force incurred by the touch.

The audio module 1470 may convert a sound into an electrical signal and vice versa. According to an embodiment, the audio module 1470 may obtain the sound via the input module 1450, or output the sound via the sound output module 1455 or a headphone of an external electronic device (e.g., an electronic device 1402) directly (e.g., wiredly) or wirelessly coupled with the electronic device 1401.

The sensor module 1476 may detect an operational state (e.g., power or temperature) of the electronic device 1401 or an environmental state (e.g., a state of a user) external to the electronic device 1401, and then generate an electrical signal or data value corresponding to the detected state. According to an embodiment, the sensor module 1476 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1477 may support one or more specified protocols to be used for the electronic device 1401 to be coupled with the external electronic device (e.g., the electronic device 1402) directly (e.g., wiredly) or wirelessly. According to an embodiment, the interface 1477 may include, for example, a high definition multimedia interface (HDMI), a universal serial bus (USB) interface, a secure digital (SD) card interface, or an audio interface.

A connecting terminal 1478 may include a connector via which the electronic device 1401 may be physically connected with the external electronic device (e.g., the electronic device 1402). According to an embodiment, the connecting terminal 1478 may include, for example, a HDMI connector, a USB connector, a SD card connector, or an audio connector (e.g., a headphone connector).

The haptic module 1479 may convert an electrical signal into a mechanical stimulus (e.g., a vibration or a movement) or electrical stimulus which may be recognized by a user via his tactile sensation or kinesthetic sensation. According to an embodiment, the haptic module 1479 may include, for example, a motor, a piezoelectric element, or an electric stimulator.

The camera module 1480 may capture a still image or moving images. According to an embodiment, the camera module 1480 may include one or more lenses, image sensors, image signal processors, or flashes.

The power management module 1488 may manage power supplied to the electronic device 1401. According to one embodiment, the power management module 1488 may be implemented as at least part of, for example, a power management integrated circuit (PMIC).

The battery 1489 may supply power to at least one component of the electronic device 1401. According to an embodiment, the battery 1489 may include, for example, a primary cell which is not rechargeable, a secondary cell which is rechargeable, or a fuel cell.

The communication module 1490 may support establishing a direct (e.g., wired) communication channel or a wireless communication channel between the electronic device 1401 and the external electronic device (e.g., the electronic device 1402, the electronic device 1404, or the server 1408) and performing communication via the established communication channel. The communication module 1490 may include one or more communication processors that are operable independently from the processor 1420 (e.g., the application processor (AP)) and supports a direct (e.g., wired) communication or a wireless communication. According to an embodiment, the communication module 1490 may include a wireless communication module 1492 (e.g., a cellular communication module, a short-range wireless communication module, or a global navigation satellite system (GNSS) communication module) or a wired communication module 1494 (e.g., a local area network (LAN) communication module or a power line communication (PLC) module). A corresponding one of these communication modules may communicate with the external electronic device via the first network 1498 (e.g., a short-range communication network, such as Bluetooth^{™}, wireless-fidelity (Wi-Fi) direct, or infrared data association (IrDA)) or the second network 1499 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 1492 may identify and authenticate the electronic device 1401 in a communication network, such as the first network 1498 or the second network 1499, using subscriber information (e.g., international mobile subscriber identity (IMSI)) stored in the subscriber identification module 1496.

The wireless communication module 1492 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1492 may support a high-frequency band (e.g., the mmWave band) to achieve, e.g., a high data transmission rate. The wireless communication module 1492 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1492 may support various requirements specified in the electronic device 1401, an external electronic device (e.g., the electronic device 1404), or a network system (e.g., the second network 1499). According to an embodiment, the wireless communication module 1492 may support a peak data rate (e.g., 20Gbps or more) for implementing eMBB, loss coverage (e.g., 1464dB or less) for implementing mMTC, or U-plane latency (e.g., 0.5ms or less for each of downlink (DL) and uplink (UL), or a round trip of 14ms or less) for implementing URLLC.

The antenna module 1497 may transmit or receive a signal or power to or from the outside (e.g., the external electronic device) of the electronic device 1401. According to an embodiment, the antenna module 1497 may include an antenna including a radiating element composed of a conductive material or a conductive pattern formed in or on a substrate (e.g., a printed circuit board (PCB)). According to an embodiment, the antenna module 1497 may include a plurality of antennas (e.g., array antennas). In such a case, at least one antenna appropriate for a communication scheme used in the communication network, such as the first network 1498 or the second network 1499, may be selected, for example, by the communication module 1490 (e.g., the wireless communication module 1492) from the plurality of antennas. The signal or the power may then be transmitted or received between the communication module 1490 and the external electronic device via the selected at least one antenna. According to an embodiment, another component (e.g., a radio frequency integrated circuit (RFIC)) other than the radiating element may be additionally formed as part of the antenna module 1497.

According to various embodiments, the antenna module 1497 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adj acent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1401 and the external electronic device 1404 via the server 1408 coupled with the second network 1499. Each of the electronic devices 1402 or 1404 may be a device of a same type as, or a different type, from the electronic device 1401. According to an embodiment, all or some of operations to be executed at the electronic device 1401 may be executed at one or more of the external electronic devices 1402, 1404, or 1408. For example, if the electronic device 1401 should perform a function or a service automatically, or in response to a request from a user or another device, the electronic device 1401, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1401. The electronic device 1401 may provide the outcome, with or without further processing of the outcome, as at least part of a reply to the request. To that end, a cloud computing, distributed computing, mobile edge computing (MEC), or client-server computing technology may be used, for example. The electronic device 1401 may provide ultra low-latency services using, e.g., distributed computing or mobile edge computing. In another embodiment, the external electronic device 1404 may include an internet-of-things (IoT) device. The server 1408 may be an intelligent server using machine learning and/or a neural network. According to an embodiment, the external electronic device 1404 or the server 1408 may be included in the second network 1499. The electronic device 1401 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1440) including one or more instructions that are stored in a storage medium (e.g., internal memory 1436 or external memory 1438) that is readable by a machine (e.g., the electronic device 1401). For example, a processor (e.g., the processor 1420) of the machine (e.g., the electronic device 1401) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A foldable electronic device (100), comprising:
a first housing (110) and a second housing (120);
a hinge structure (201) coupled between the first housing (110) and the second housing (120); and
a flexible display (160) accommodated in the first housing (110) and the second housing (120),
wherein the hinge structure (201) includes:
a first rotation member (211) coupled to the first housing (110) and a second rotation member (212) coupled to the second housing (120);
a first arm member (221) configured to rotate in response to the rotation of the first rotation member (211) and a second arm member (222) configured to rotate in response to the rotation of the second rotation member (212);
a first shaft (231) on which a first main gear (221_2) is disposed and coupled to the first arm member (221);
a second shaft (232) on which a second main gear (222_2) is disposed and coupled to the second arm member (222);
a third shaft (238) disposed between the first main gear (221_2) and the second main gear (222_2) and on which a first gear (238a) is disposed;
a fourth shaft (239) disposed between the third shaft (238) and the second main gear (222_2) and on which a second gear (239a) is disposed;
first to fourth cams (244a, 244b, 244c, 244d) coupled to each of the first to fourth shafts (231, 232, 238, 239);
a cam member (241) coupled to each of the first to fourth shafts (231, 232, 238, 239) and including first to fourth fixed cam portion (241a, 241b, 241c, 241d) facing the first to fourth cams (244a, 244b, 244c, 244d) respectively;
a first elastic member (242a) coupled to the first shaft (231), and configured to provide a first elastic force to the first cam (244a);
a second elastic member (242b) coupled to the second shaft (232) and configured to provide the first elastic force to the second cam (244b);
a third elastic member (242c) coupled to the third shaft (238) and configured to provide a second elastic force different from the first elastic force to the third cam (244c);
a fourth elastic member (242d) coupled to the fourth shaft (239) and configured to provide the second elastic force to the fourth cam (244d),
wherein a magnitude of slope of the first cam (244a) is different from a magnitude of slope of the third cam (244c), and
wherein a type of the first elastic member (242a) is different from a type of the third elastic member (242c).

2. The foldable electronic device (100) of claim 1, wherein the first cam (244a) and the first fixed cam portion (241a) form a first contact angle in response to an elastic force applied by the first elastic member (242a),
wherein the third cam (244c) and the third fixed cam portion (241c) form a second contact angle in response to an elastic force applied by the third elastic member (242c),
when the foldable electronic device (100) is in an unfolded state, a magnitude of the first contact angle is smaller than a magnitude of the second contact angle.

3. The foldable electronic device (100) of claim 2, wherein an amount of contribution of the second contact angle for maintaining the unfolded state or a folded state of the foldable electronic device (100) is greater than an amount of contribution of the first contact angle for maintaining the unfolded state or the folded state.

4. The foldable electronic device (100) of any of claims 1 to 3, wherein the first cam (244a) and the first fixed cam portion (241a) form a first contact angle in response to an elastic force applied by the first elastic member (242a),
wherein the third cam (244c) and the third fixed cam portion (241c) form a second contact angle in response to an elastic force applied by the third elastic member (242c),
wherein a magnitude of the first contact angle is the same as a magnitude of the second contact angle while an angle between the first housing (110) and the second housing (120) maintains at a defined angle range corresponding to a partially folded state.

5. The foldable electronic device (100) of any of claims 1 to 4, while an additional resistance in rotation between the first housing (110) and the second housing (120) is provided at a defined angle range corresponding to a partially folded state, an amount of contribution of an elastic force applied by the first elastic member (242a) for maintaining the defined angle range is greater than an amount of contribution of an elastic force applied by the third elastic member (242c) for maintaining the defined angle range.

6. The foldable electronic device (100) of any of claims 1 to 5, wherein the first cam (244a) and the first fixed cam portion (241a) form a first cam stroke in response to an elastic force applied by the first elastic member (242a),
wherein the third cam (244c) and the third fixed cam portion (241c) form a second cam stroke in response to an elastic force applied by the third elastic member (242c),
when the foldable electronic device (100) is in an unfolded state or a folded state, a movement amount of the first cam stroke is smaller than a movement amount of the second cam stroke.

7. The foldable electronic device (100) of claim 2, wherein the first contact angle is greater than 0 degree and less than 20 degree, wherein the second contact angle is 35 degree or more.

8. The foldable electronic device (100) of any of claims 1 to 7, wherein an elastic force applied by the first elastic force and provided to the first cam (244a), is greater than an elastic force applied by the third elastic force and provided to the third cam (244c) while an angle between the first housing (110) and the second housing (120) maintains at a defined angle range corresponding to a partially folded state; and/or
wherein a compression amount of the third elastic member (242c) is greater than the compression amount of the first elastic member (242a) while an angle between the first housing (110) and the second housing (120) maintains at a defined angle range corresponding to a partially folded state.

9. The foldable electronic device (100) of any of claims 1 to 8, wherein the first elastic member (242a) includes a stacked structure of a plurality of disk springs,
wherein the third elastic member (242c) includes a coil spring.

10. The foldable electronic device (100) of any of claims 1 to 9, further comprising:
a plurality of friction members (249a1, 249a2, 249b1, 249b2, 249c1, 249c2, 249c3, 249c4) disposed on each of the first shaft (231) and the second shaft (232), and
a plurality of support members (218a, 218b, 218c) disposed to contact the friction members (249a1, 249a2, 249b1, 249b2, 249c1, 249c2, 249c3, 249c4); and/or wherein the plurality of friction members (249a1, 249a2, 249b1, 249b2, 249c1, 249c2, 249c3, 249c4) and the plurality of support members (218a, 218b, 218c) are disposed between the cam member (241) and the first arm member (221) or the cam member (241) and the second arm member (222); and/or
wherein the plurality of the friction members (249a1, 249a2, 249b1, 249b2, 249c1, 249c2, 249c3, 249c4) and the support members (218a, 218b, 218c) are arranged alternately,
wherein the number of friction members (249a1, 249a2, 249b1, 249b2, 249c1, 249c2, 249c3, 249c4) and support members (218a, 218b, 218c) disposed on the first shaft (231) is equal to the number of friction members (249a1, 249a2, 249b1, 249b2, 249c1, 249c2, 249c3, 249c4) and support members (218a, 218b, 218c) disposed on the second shaft (232).

11. The foldable electronic device (100) of any of claims 1 to 10, wherein the cam member (241) further comprises:
a connection structure connecting the first fixed cam portion (241a), the second fixed cam portion (241b), the third fixed cam portion (241c), and the fourth fixed cam portion (241d).

12. The foldable electronic device (100) of any of claims 1 to 11, wherein the cam member (241) includes a first cam member and a second cam member separated from the first cam member,
wherein the first cam member includes:
the first fixed cam portion (241a) facing the first cam (244a);
the second fixed cam portion (241b) facing the second cam (244b);
a first connection structure connecting the first fixed cam portion (241a) and the second fixed cam portion (241b),
wherein the second cam member includes:
the third fixed cam portion (241c) facing the third cam (244c);
the fourth fixed cam portion (241d) facing the fourth cam (244d);
a second connection structure connecting the third fixed cam portion (241c) and the fourth fixed cam portion (241d).

13. The foldable electronic device (100) of any of claims 1 to 12, wherein the first cam (244a) is formed integrally with one side of the first arm member (221),
wherein the second cam (244b) is formed integrally with one side of the second arm member (222); and/or
wherein the first cam (244a) is formed integrally with one side of the first main gear (221_2),
wherein the second cam (244b) is formed integrally with one side of the second main gear (222_2); and/or
wherein the third cam (244c) is formed integrally with one side of the first gear (238a),
wherein the fourth cam (244d) is formed integrally with one side of the second gear (239a).

14. A hinge structure (201), comprising:
a first rotation member (211) configured to rotate about a first axis and a second rotation member (212) configured to rotate about a second axis;
a first arm member (221) configured to rotate about a third axis in response to the rotation of the first rotation member (211), and a second arm member (222) configured to rotate about a fourth axis in response to the rotation of the second rotation member (212);
a first shaft (231) on which a first main gear (221_2) is disposed and coupled to the first arm member (221);
a second shaft (232) on which a second main gear (222_2) is disposed and coupled to the second arm member (222);
a third shaft (238) disposed between the first main gear (221_2) and the second main gear (222_2) and on which a first gear (238a) is disposed;
a fourth shaft (239) disposed between the third shaft (238) and the second main gear (222_2) and on which a second gear (239a) is disposed;
first to fourth cams (244a, 244b, 244c, 244d) coupled to each of the first to fourth shafts (231, 232, 238, 239);
a cam member (241) coupled to each of the first to fourth shafts (231, 232, 238, 239) and including first to fourth fixed cam portions (241a, 241b, 241c, 241d) facing the first to fourth cams (244a, 244b, 244c, 244d);
a first elastic member (242a) coupled to the first shaft (231) and providing a first elastic force to the first cam (244a);
a second elastic member (242b) coupled to the second shaft (232) and providing the first elastic force to the second cam (244b);
a third elastic member (242c) coupled to the third shaft (238) and providing a second elastic force different from the first elastic force to the third cam (244c);
a fourth elastic member (242d) coupled to the fourth shaft (239) and providing the second elastic force to the fourth cam (244d),
wherein a magnitude of slope of the first cam (244a) is different from a magnitude of slope of the third cam (244c), and
wherein a type of the first elastic member (242a) is different from a type of the third elastic member (242c).

15. The hinge structure (201) of claim 14, wherein a magnitude of a first contact angle where the first fixed cam portion (241a) of the cam member (241) contacts the first cam (244a) is smaller than a magnitude of a second contact angle where the third fixed cam portion (241c) of the cam member (241) contacts the third cam (244c).
